# EUROPEAN PATENT APPLICATION

(11) **EP 4 822 461 A1**
(43) Date of publication of application: **14.10.2026**
(21) Application number: 25772850.1
(22) Date of filing: 28.02.2025
(51) Int. Cl.: G05B 19/042, B25J 9/16

(54) **CONTROL METHOD AND APPARATUS FOR ROBOT, DEVICE, AND STORAGE MEDIUM**

(30) Priority: 20.03.2024 CN 202410325402
(71) Applicant: Tencent Technology (Shenzhen) Company Limited, Shenzhen, Guangdong 518057 (CN)
(72) Inventor: WANG, Shuai, Shenzhen, Guangdong 518057 (CN); CHI, Wanchao, Shenzhen, Guangdong 518057 (CN); SU, Zeran, Shenzhen, Guangdong 518057 (CN); ZHENG, Yu, Shenzhen, Guangdong 518057 (CN); LI, Xiong, Shenzhen, Guangdong 518057 (CN)
(74) Representative: Reddie & Grose LLP
(86) International application number: PCT/CN2025/079819
(87) International publication number: WO 2025/195142

(57) **Abstract**

A control method and apparatus for a robot (103), a device, and a storage medium. The control method comprises: for the robot (103) having a first mechanical leg group (104) and a second mechanical leg group (105) and comprising mechanical legs each provided with a mechanical wheel (203) and mechanical foot (204), acquiring a first expected task of the robot (103) on a supporting surface, wherein the first expected task comprises an expected position of the robot (103) in an operation space of the robot (103), the first expected task is used for guiding the robot (103) to move on the supporting surface, and the mechanical foot (204) is used for assisting the mechanical wheel (203) in supporting the robot (103) to stand on the supporting surface (601); acquiring an expected angle set of the first expected task, wherein the expected angle set comprises expected angles for controlling joints at all parts of the robot (103) (602); and on the basis of the expected angle set (603), controlling the robot (103) to move under the guidance of the first expected task. Therefore, the motion stability of the robot (103) can be improved.

## Description

### RELATED APPLICATION

This application claims priority to Chinese Patent Application No. 202410325402.2, filed on March 20, 2024 and entitled "CONTROL METHOD AND APPARATUS FOR ROBOT, DEVICE, AND STORAGE MEDIUM".

### FIELD OF THE TECHNOLOGY

Embodiments of this application relate to the technical field of artificial intelligence, and in particular, to a control method and apparatus for a robot, a device, and a storage medium.

### BACKGROUND OF THE DISCLOSURE

With the development of robot control technologies, some organizations and research institutions have successively launched wheel-legged robots with mechanical wheels as feet. Such wheel-legged robots can not only slide quickly with mechanical wheels, but also walk in a gait, climb a staircase, and cross an obstacle with the mechanical wheels.

A quadruped wheel-legged robot is used as an example. In the related art, the quadruped wheel-legged robot performs tasks, such as gait walking, climbing a staircase, and crossing an obstacle, on a support surface by controlling two mechanical leg sets to swing alternately. However, in the related art, the robot relies solely on contact between mechanical feet and the support surface. For example, during swinging of the mechanical legs, the quadruped wheel-legged robot keeps standing through only two contact points (namely, contact points between the mechanical feet and the support surface) between only one mechanical leg set and the support surface. This easily leads to insufficient standing stability of the robot, and further causes unstable movement of the robot.

### SUMMARY

Embodiments of this application provide a control method and apparatus for a robot, a device, and a storage medium. Technical solutions provided in the embodiments of this application include the following content.

According to an aspect of the embodiments of this application, a control method for a robot is provided. The method is performed by a computer device, the robot includes a body, and a first mechanical leg set and a second mechanical leg set that are connected to the body through hip joints. At least one of the first mechanical leg set and the second mechanical leg set includes at least two mechanical legs, and a foot part, away from the hip joint, of at least one of the mechanical legs is provided with a mechanical wheel and a mechanical foot. A rotation axis of the hip joint corresponding to the first mechanical leg set and a rotation axis of the hip joint corresponding to the second mechanical leg set are located in a same vertical plane. The method includes:
obtaining a first pre-defined task for the robot on a support surface, the first pre-defined task indicating a target position of the robot in operating space of the robot, the first pre-defined task being used for guiding the robot to carry out a movement on the support surface, and during the movement of the robot, the mechanical foot being configured to assist the mechanical wheel in supporting the robot to stand on the support surface;
obtaining a target angle set for the first pre-defined task, the target angle set including target angles for controlling joints of parts of the robot; and
controlling, based on the target angle set, the robot to move under the guidance of the first pre-defined task.

According to an aspect of the embodiments of this application, a control apparatus for a robot is provided. The robot includes a body, and a first mechanical leg set and a second mechanical leg set that are connected to the body through hip joints. At least one of the first mechanical leg set and the second mechanical leg set includes at least two mechanical legs, and a foot part, away from the hip joint, of at least one of the mechanical legs is provided with a mechanical wheel and a mechanical foot. A rotation axis of the hip joint corresponding to the first mechanical leg set and a rotation axis of the hip joint corresponding to the second mechanical leg set are located in a same vertical plane. The apparatus includes:
a pre-defined task obtaining module, configured to obtain a first pre-defined task for the robot on a support surface, the first pre-defined task indicating a target position of the robot in operating space of the robot, the first pre-defined task being used for guiding the robot to carry out a movement on the support surface, and during the movement of the robot, the mechanical foot being configured to assist the mechanical wheel in supporting the robot to stand on the support surface;
a target angle obtaining module, configured to obtain a target angle set for the first pre-defined task, the target angle set including target angles for controlling joints of parts of the robot; and
a robot control module, configured to control, based on the target angle set, the robot to move under the guidance of the first pre-defined task.

According to an aspect of the embodiments of this application, a chip is provided. The chip has a computer program stored therein, and the computer program is loaded and executed by a processor to implement the foregoing control method for a robot.

According to an aspect of the embodiments of this application, a computer device is provided. The computer device includes a processor and a memory, the memory has a computer program stored therein, and the computer program is loaded and executed by the processor to implement the foregoing control method for a robot.

According to an aspect of the embodiments of this application, a computer-readable storage medium is provided. The readable storage medium has a computer program stored therein, and the computer program is loaded and executed by a processor to implement the foregoing control method for a robot.

According to an aspect of the embodiments of this application, a computer program product is provided. The computer program product includes a computer program, and the computer program is stored in a computer-readable storage medium. A processor of a computer device reads the computer program from the computer-readable storage medium, and executes the computer program to cause the computer device, to perform the control method for a robot.

The technical solutions provided in the embodiments of this application may include the following beneficial effects:
For a robot that has a first mechanical leg set and a second mechanical leg set and that has a mechanical leg whose foot part is provided with a mechanical wheel and a mechanical foot, target angles of joints of the robot are calculated based on a target position of the robot in operating space, and then the joints are directly controlled based on the target angles, to enable the robot to move on a support surface and achieve effective following of the target angles by the joints of the robot. Compared to the related art in which the robot is indirectly controlled based on a target acceleration and suffers from poor force control transparency, that is, for a small target acceleration, the joint does not move, whereas for a large target acceleration, the joint moves violently and fails to ensure that the part corresponding to the joint can accurately move to a target position, leading to low-precision following of the target position by the robot, in the embodiments of this application, direct following of the target position by the part corresponding to the joint can be achieved through effective following of the target angle by the joint of the robot, to effectively enhance accuracy of robot control.

In addition, during movement of the robot, a mechanical foot of a foot part assists a mechanical wheel in supporting the robot to stand on the support surface. In this way, the robot keeps standing through at least two contact points (such as a contact point between the mechanical foot and the support surface and a contact point between the mechanical wheel and the support surface) on the foot part. Compared to one contact point in the related art, the embodiments of this application can enable the robot to stand on the support surface more stably and reduce the risk of falling, to effectively improve movement stability of the robot.

### BRIEF DESCRIPTION OF THE DRAWINGS

FIG. 1 is a schematic diagram of an implementation environment for a solution according to an embodiment of this application.
FIG. 2 is a schematic diagram of a quadruped foot-wheel hybrid robot according to an embodiment of this application.
FIG. 3 is a schematic diagram of a foot-wheel hybrid robot climbing a staircase according to an embodiment of this application.
FIG. 4 is a schematic diagram of a foot-wheel hybrid robot crossing a shoulder according to an embodiment of this application.
FIG. 5 is a schematic diagram of a foot-wheel hybrid robot crossing a pit according to an embodiment of this application.
FIG. 6 is a flowchart of a control method for a robot according to an embodiment of this application.
FIG. 7 is a schematic diagram of a step taking process of a robot according to an embodiment of this application.
FIG. 8 is a schematic diagram of a step taking process of a robot according to another embodiment of this application.
FIG. 9 is a flowchart of a method for obtaining a first pre-defined task according to an embodiment of this application.
FIG. 10 is a schematic diagram of an inverted pendulum model of a robot according to an embodiment of this application.
FIG. 11 is a simplified diagram of a model of a quadruped foot-wheel hybrid robot according to an embodiment of this application.
FIG. 12 is a simplified diagram of a model of a quadruped foot-wheel hybrid robot according to an embodiment of this application.
FIG. 13 is a flowchart of a method for obtaining a target angle set according to an embodiment of this application.
FIG. 14 is a flowchart of a method for obtaining a target angle set according to another embodiment of this application.
FIG. 15 is a flowchart of a control method for a robot according to another embodiment of this application.
FIG. 16 is a flowchart of a method for obtaining a second pre-defined task according to an embodiment of this application.
FIG. 17 is a schematic diagram of a control method for a quadruped foot-wheel hybrid robot according to an embodiment of this application.
FIG. 18 is a schematic diagram of simulated leveled step taking action data of a quadruped foot-wheel hybrid robot according to an embodiment of this application;
FIG. 19 is a schematic diagram of simulated leveled step taking action data of a quadruped foot-wheel hybrid robot according to another embodiment of this application;
FIG. 20 is a block diagram of a control apparatus for a robot according to an embodiment of this application.
FIG. 21 is a block diagram of a control apparatus for a robot according to another embodiment of this application.
FIG. 22 is a simplified structural block diagram of a computer device according to an embodiment of this application.

### DESCRIPTION OF EMBODIMENTS

To make the objectives, technical solutions, and advantages of this application clearer, the following further describes implementations of this application in detail with reference to the accompanying drawings.

Artificial intelligence (AI) is a theory, method, technology, and application system using a digital computer or a machine controlled by the digital computer to simulate, extend, and expand human intelligence, perceive an environment, obtain knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The AI technology is a comprehensive discipline, and relates to a wide range of fields including both hardware-level technologies and software-level technologies. Basic AI technologies generally include, for example, sensors, dedicated AI chips, cloud computing, distributed storage, big data processing technologies, pre-trained model technologies, operating/interaction systems, and electromechanical integration. A pre-trained model is also referred to as a big model or a basic model, and may be widely applied to downstream tasks in various directions of AI after fine-tuning. AI software technologies mainly include several major directions such as a computer vision technology, a speech processing technology, a natural language processing technology, and machine learning/deep learning.

With the research and progress of the AI technology, the AI technology has been researched and applied to a plurality of fields, such as common smart home, smart wearable devices, virtual assistants, smart speakers, intelligent marketing, unmanned driving, autonomous driving, unmanned aerial vehicles, digital twins, virtual humans, robots, artificial intelligence generated content (AIGC), conversational interaction, intelligent medical, intelligent customer service, and game AI. With the development of the technology, the AI technology will be applied to more fields, and plays an increasingly important role.

The technical solutions provided in embodiments of this application mainly relate to the robot technology in the AI technology, and mainly relate to intelligent robot control. Robots are mechanical and electronic devices that combine mechanical transmission and modern microelectronic technology to mimic human skills. Robots has been developed based on electronic, mechanical, and information technologies. Robots do not necessarily have to look like humans. As long as a robot can autonomously complete tasks and instructions assigned to the robot by humans, the robot belongs to the family of robots. A robot is an automated machine. Such a machine has some intelligent capabilities, such as a perception capability, a planning capability, an action capability, and a collaborative capability, similar to those of a human or a living creature, and is an automated machine with high flexibility. With the development of the computer technology and the AI technology, robots have greatly improved in terms of functionality and technical level, and mobile robots and robot vision and touch technologies are typical representatives.

In the technical solutions provided in the embodiments of this application, operations may be performed by a computer device. The computer device may be an electronic device having data computing, processing, and storage capabilities.

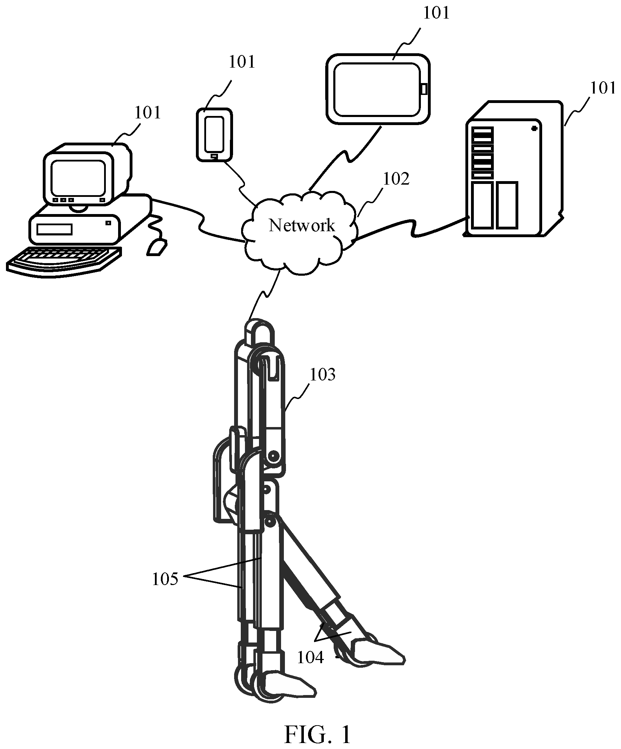

In some embodiments, the computer device may be a personal computer (PC) device for controlling a robot, such as a desktop computer or a notebook computer; or may be a server for controlling a robot. The server may be an independent physical server, or may be a server cluster or distributed system composed of a plurality of physical servers, or may be a cloud server providing a cloud computing service. The computer device and the robot may be connected via a physical line, a network, or the like. For example, referring to FIG. 1, a computer device 101 may calculate, based on a first pre-defined task for a robot 103 on a support surface, a target angle set corresponding to the robot 103, where the first pre-defined task may be for guiding the robot 103 to move on the support surface; and then, control movement of the robot 103 (such as joints) via a network 102 according to the target angle set. For example, the computer device 101 may control, based on the target angle set corresponding to the first pre-defined task for the robot 103, a first mechanical leg set 104 and a second mechanical leg set 105 of the robot 103 to swing alternately, to enable the robot 103 to carry out a movement on the support surface according to a target position corresponding to the first pre-defined task. During the movement of the robot 103, the computer device 101 may control a mechanical foot to assist a mechanical wheel in supporting the robot 103 to stand on the support surface. The target position may be obtained by performing planning on the robot based on the support surface, and for different tasks, corresponding first pre-defined tasks may be obtained by performing planning.

In an embodiment, the computer device may alternatively be the robot itself. To be specific, in the technical solutions provided in the embodiments of this application, the operations may alternatively be performed by the robot. For example, referring to FIG. 1, the computer device 101 may send a first pre-defined task (such as target positions of parts of the robot 103) of the robot 103 to the robot 103 via the network 102. The robot 103 calculates a corresponding target angle set (such as target angles of joints) based on the first pre-defined task, and then controls the joints to move according to the target angle set. In an embodiment, the robot 103 may further automatically plan the first pre-defined task based on a real-world environment, to perform different tasks in the real-world environment. This is not limited in the embodiments of this application.

In some embodiments, the robot in the embodiments of this application may be a foot-wheel hybrid robot. The foot-wheel hybrid robot may refer to a legged robot (namely, a robot that moves based on mechanical legs) whose foot part is provided with a mechanical wheel and a mechanical foot, such as a legged robot of which at least one foot part is provided with a pair of a mechanical wheel and a mechanical foot. The legged robot refers to a robot that moves based on mechanical legs. For example, the robot 103 shown in FIG. 1 has two mechanical leg sets, and a foot part of each mechanical leg is provided with a pair of a mechanical wheel and a mechanical foot that are coaxial. In an embodiment, the foot-wheel hybrid robot may perform tasks, such as rolling, gait walking, climbing a staircase, and crossing an obstacle, with the mechanical wheel alone, or may perform tasks, such as gait walking, climbing a staircase, crossing an obstacle, and stepping in situ, by using the mechanical feet to assist the mechanical wheel. This is not limited in the embodiments of this application.

Exemplarily, the robot in the embodiments of this application may include a body, and a first mechanical leg set and a second mechanical leg set that are connected to the body through hip joints. At least one of the first mechanical leg set and the second mechanical leg set includes at least two mechanical legs. For example, the first mechanical leg set includes at least two mechanical legs, and the second mechanical leg set may also include at least two mechanical legs. At least two mechanical legs in the first mechanical leg set are respectively located on two sides of a central axis (namely, a sagittal plane) of the robot, and at least two mechanical legs in the second mechanical leg set are also respectively located on two sides of the central axis of the robot. In an embodiment, the mechanical legs of the robot are distributed side by side, that is, a rotation axis of a hip joint corresponding to the first mechanical leg set and a rotation axis of a hip joint corresponding to the second mechanical leg set are located in a same vertical plane. Exemplarily, in a case that the first mechanical leg set is an outer mechanical leg set, the first mechanical leg set includes at least two mechanical legs. The at least two mechanical legs may be uniformly disposed on two sides of the second mechanical leg set. The mechanical legs in the first mechanical leg set and the mechanical legs in the second mechanical leg set are distributed side by side. In this case, the second mechanical leg set may be referred to as an inner mechanical leg set. In a case that the second mechanical leg set is an outer mechanical leg set, the second mechanical leg set includes at least two mechanical legs. The at least two mechanical legs may be uniformly disposed on two sides of the first mechanical leg set. This is not limited in the embodiments of this application.

In an example, the robot may be a quadruped foot-wheel hybrid robot. For example, the robot includes four mechanical legs, each mechanical leg set may include two mechanical legs, and each mechanical leg has a foot part. For example, the quadruped foot-wheel hybrid robot may include two outer mechanical legs and two inner mechanical legs. Alternatively, the robot may be a tripod foot-wheel hybrid robot. For example, the robot includes two outer mechanical legs and one inner mechanical leg. This is not limited in the embodiments of this application. In an embodiment, the robot can stand on the support surface through the mechanical wheel (or a combination of the mechanical wheel and the mechanical foot) on the outer mechanical leg or the inner mechanical leg, or may move on the support surface by rolling via the mechanical wheel on the outer mechanical leg or the mechanical wheel on the inner mechanical leg, or may move (that is, walk) on the support surface by controlling the outer mechanical leg set and the inner mechanical leg set to swing alternately.

In the embodiments of this application, the robot has at least one mechanical leg of which a foot part away from a hip joint is provided with a mechanical wheel and a mechanical foot. A quantity of mechanical wheels and a quantity of mechanical feet on a same foot part are not limited in the embodiments of this application, and may be set and adjusted according to an actual use requirement. Exemplarily, a foot part, away from a hip joint, of at least one mechanical leg is provided with a pair of a mechanical wheel and a mechanical foot that are coaxial. To be specific, for at least one foot part, a rotation axis of a mechanical wheel corresponding to the foot part and a rotation axis of a mechanical foot corresponding to the foot part are located on a same straight line. In an embodiment, all mechanical legs of the robot are each provided with a pair of a mechanical wheel and a mechanical foot that are coaxial. Alternatively, some mechanical legs of the robot are each provided with a pair of a mechanical wheel and a mechanical foot that are coaxial. This is not limited in the embodiments of this application.

A quadruped foot-wheel hybrid robot is used as an example. Mechanical legs corresponding to the quadruped foot-wheel hybrid robot may be each provided with a pair of a mechanical wheel and a mechanical foot that are coaxial. Alternatively, for two mechanical leg sets corresponding to the quadruped foot-wheel hybrid robot, mechanical legs in one and only one mechanical leg set is provided with a pair of a mechanical wheel and a mechanical foot that are coaxial. Alternatively, for two mechanical leg sets corresponding to the quadruped foot-wheel hybrid robot, one mechanical leg in each mechanical leg set is correspondingly provided with a pair of a mechanical wheel and a mechanical foot that are coaxial. Alternatively, for mechanical legs corresponding to the quadruped foot-wheel hybrid robot, one and only one mechanical leg is provided with a pair of a mechanical wheel and a mechanical foot that are coaxial. This is not limited in the embodiments of this application.

In an embodiment, the mechanical wheels may be independently driven, and the mechanical feet may independently rotate. The mechanical foot may be disposed on a left side of the mechanical wheel, or the mechanical foot may be disposed on a right side of the mechanical wheel, or the mechanical wheel may be disposed in a hollow-out style in a hollow-out area at a root of the mechanical foot. A position between the mechanical foot and the mechanical wheel is not limited in the embodiments of this application.

A size of the mechanical wheel and a size of the mechanical foot are not limited in the embodiments of this application. For example, diameters of the mechanical wheels are the same, lengths of the mechanical feet are the same, and the length of the mechanical foot may be 1.5 times or twice the diameter of the mechanical wheel. A style of the mechanical foot is not limited in the embodiments of this application. For example, the style of the mechanical foot may include at least one of the following: a foot-like style, a rectangular style, and a triangular style.

The mechanical foot may be configured to assist the mechanical wheel in supporting the robot to stand on the support surface more stably. In an embodiment, in a case that the assistance of the mechanical foot is not needed, the mechanical foot may rotate to align with the mechanical leg, or may rotate to a position perpendicular to the mechanical leg, or may rotate to any angle that does not affect contact between the mechanical wheel and the support surface. This is not limited in the embodiments of this application. In a case that the assistance of the mechanical foot is needed, the mechanical foot may rotate to be in contact with the support surface, to support, together with the mechanical wheel, the robot to stand on the support surface.

A quadruped foot-wheel hybrid robot is used as an example. In a case that mechanical legs corresponding to the quadruped foot-wheel hybrid robot are each provided with a pair of a mechanical wheel and a mechanical foot that are coaxial, if any mechanical wheel is in contact with the support surface, a mechanical foot that is coaxial with the mechanical wheel may be configured to assist the mechanical wheel in supporting the robot to stand. Alternatively, in a case that mechanical legs in one and only one mechanical leg set are each provided with a pair of a mechanical wheel and a mechanical foot that are coaxial, if a mechanical leg set without a mechanical foot is configured to provide support, the robot is supported to stand through mechanical wheels corresponding to the mechanical leg set alone; or if a mechanical leg set with a mechanical foot is configured to provide support, the robot may be supported to stand through mechanical wheels and mechanical feet that correspond to the mechanical leg set. Alternatively, in a case that one and only one mechanical leg is provided with a pair of a mechanical wheel and a mechanical foot that are coaxial, if a mechanical leg set without a mechanical foot is configured to provide support, the robot is supported to stand through mechanical wheels corresponding to the mechanical leg set alone; or if a mechanical leg set with a mechanical foot is configured to provide support, the robot is supported to stand through mechanical wheels and one mechanical foot that correspond to the mechanical leg set. This is not limited in the embodiments of this application.

For ease of description, the following describes the technical solutions provided in the embodiments of this application by using an example in which foot parts of the robot are each provided with a pair of a mechanical wheel and a mechanical foot that are coaxial.

In an embodiment, the body of the robot is correspondingly provided with a pitch joint. The body may be controlled to rotate (for example, pitch forward and backward) through the pitch joint. For example, the body of the robot may be controlled to perform a pitch action by rotating the pitch joint. The hip joint of the robot may be configured to rotate the mechanical leg of the robot. For example, the mechanical leg of the robot may be controlled to rotate by rotating the hip joint, and the mechanical legs of the robot can independently telescope. In an example, mechanical feet corresponding to the first mechanical leg set synchronously move, and mechanical feet corresponding to the second mechanical leg set synchronously move. For example, for any mechanical leg set, mechanical feet in the mechanical leg set synchronously rotate. Mechanical legs corresponding to the first mechanical leg set synchronously move, and mechanical legs corresponding to the second mechanical leg set synchronously move. For example, for any mechanical leg set, mechanical legs in the mechanical leg set synchronously rotate and telescope. Mechanical wheels corresponding to the first mechanical leg set synchronously move, and mechanical wheels corresponding to the second mechanical leg set synchronously move. For example, for any mechanical leg set, mechanical wheels in the mechanical leg set synchronously rotate.

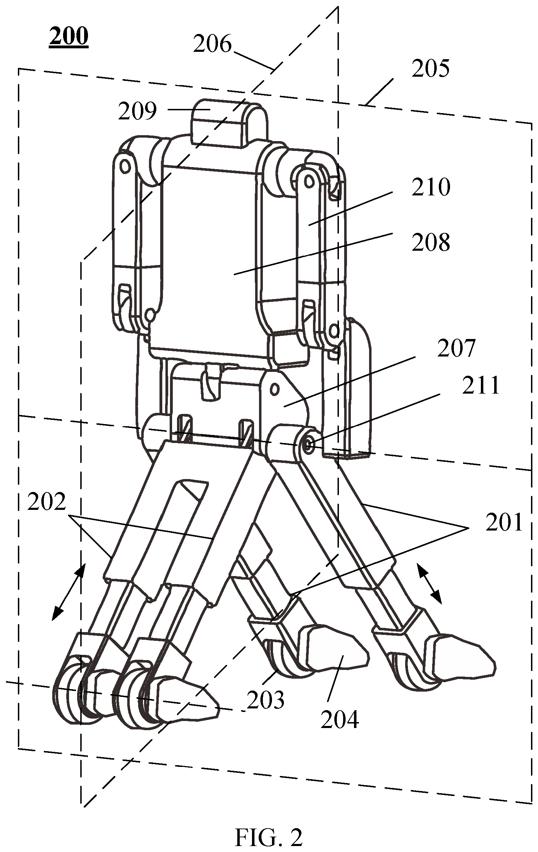

For example, FIG. 2 is a schematic structural diagram of a quadruped foot-wheel hybrid robot according to an embodiment of this application. A quadruped foot-wheel hybrid robot 200 may include: a body (including a waist 207, a torso 208, a head 209, and upper limbs 210), hip joints 211, and mechanical legs (such as an outer mechanical leg 201 and an inner mechanical leg 202).

The quadruped foot-wheel hybrid robot 200 includes four mechanical legs: two outer mechanical legs 201 and two inner mechanical legs 202. The two inner mechanical legs 202 are located between the two outer mechanical legs 201, and the four mechanical legs can independently telescope (through corresponding telescopic joints) in a direction (indicated by a bidirectional arrow) shown in FIG. 2. The four mechanical legs may be symmetrically distributed on two sides of the sagittal plane 206, and the four mechanical legs are distributed side by side. The two outer mechanical legs 201 may constitute a first mechanical leg set (which may alternatively be referred to as an outer mechanical leg set), and the two inner mechanical legs 202 may constitute a second mechanical leg set (which may alternatively be referred to as an inner mechanical leg set).

Foot parts of the four mechanical legs are each provided with a pair of a mechanical wheel 203 and a mechanical foot 204 that are coaxial. To be specific, a rotation axis corresponding to the mechanical wheel 203 and a rotation axis corresponding to the mechanical foot 204 are located on a same straight line. The mechanical foot 204 is installed on an outer side of the mechanical wheel 203. Each mechanical wheel 203 may be independently driven (which may be implemented through a corresponding wheel joint), and each mechanical foot 204 may also be independently driven (which may be implemented through a corresponding ankle joint).

The quadruped foot-wheel hybrid robot 200 may stand on the two inner mechanical legs 202 or the two outer mechanical legs 201, to be in a biped standing state. Alternatively, the quadruped foot-wheel hybrid robot 200 may stand on both the two inner mechanical legs 202 and the two outer mechanical legs 201, to be in a quadruped standing state. This is not limited in the embodiments of this application.

In a feasible example, the two inner mechanical legs 202 may be implemented as a whole, that is, the quadruped foot-wheel hybrid robot 200 may be implemented as a tripod foot-wheel robot, which has only one inner mechanical leg.

The other ends, away from the foot parts, of the four mechanical legs are respectively connected to the hip joints 211, and the mechanical legs may rotate about the respective hip joints 211 and remain linked. In the embodiments of this application, rotation axes of the hip joints 211 corresponding to the quadruped foot-wheel hybrid robot 200 are located in a same vertical plane 205, and rotation planes of the mechanical legs corresponding to the quadruped foot-wheel hybrid robot 200 are parallel. The hip joints 211 corresponding to the two inner mechanical legs 202 are located between the hip joints 211 corresponding to the two outer mechanical legs 201, and the four hip joints 211 are symmetrically distributed on two sides of the sagittal plane 206.

In an embodiment, the hip joints 211 corresponding to the quadruped foot-wheel hybrid robot 200 may be coaxial, that is, the rotation axes of the hip joints 211 are located on a same straight line. Alternatively, the hip joints 211 corresponding to the quadruped foot-wheel hybrid robot 200 may be non-coaxial. For example, the hip joints 211 corresponding to the two inner mechanical legs 202 are coaxial, the hip joints 211 corresponding to the two outer mechanical legs 201 are coaxial, and the hip joints 211 corresponding to the two inner mechanical legs 202 and the hip joints 211 corresponding to the two outer mechanical legs 201 are non-coaxial.

In an example, the hip joints 211 corresponding to the two outer mechanical legs 201 share a same drive motor, whereby the two outer mechanical legs 201 synchronously move. The hip joints 211 corresponding to the two inner mechanical legs 202 share a same drive motor, whereby the two inner mechanical legs 202 synchronously move. In a feasible example, the hip joints 211 corresponding to the quadruped foot-wheel hybrid robot 200 may be independently driven by respective drive motors. This is not limited in the embodiments of this application.

In an embodiment, the body of the quadruped foot-wheel hybrid robot 200 may include a waist 207, a torso 208, a head 209, and upper limbs 210. The hip joints 211 corresponding to the quadruped foot-wheel hybrid robot 200 are connected to a same end of the waist 207, and the other end of the waist 207 is connected to an end of the torso 208. The waist 207 has two rotation axes: a pitch rotation axis (a pitch joint may be correspondingly disposed) that can enable the torso 208 to pitch, and a side swing rotation axis (a side swing joint may be correspondingly disposed) that can enable the torso 208 to swing sideways. The side swing joint is connected to the pitch joint in series, located at an upper end of the pitch joint, and connected to the torso 208. Rotating the body in the embodiments of this application may refer to a process of rotating the pitch joint about the pitch rotation axis, to enable the torso 208 to rotate (pitch). In an embodiment, by rotating the side swing joint about the side swing rotation axis, the torso 208 may rotate, for example, rotate left and right about the side swing rotation axis, to complete side swing (yawing) of the torso 208. The side swing rotation axis may be parallel to a gravity direction, and the pitch rotation axis may be in a horizontal direction.

The other end of the torso 208 is connected to the head 209 and the upper limbs 210, and the upper limbs 210 may be multi-degree-of-freedom upper limbs. For example, the upper limbs 210 may be implemented as multi-degree-of-freedom manipulators. In an embodiment, upper parts of the upper limbs 210 are provided with end effectors such as mechanical claws or suction cups. A data acquisition device, such as an image acquisition device, a video capture device, or an inertial measurement unit (IMU), may be deployed in the head 209 to perceive a real-world environment. The IMU may be placed at a geometric center of the torso 208, a center point of the hip joint, or the like. It may be configured to measure an actual acceleration, an actual attitude angular velocity, an actual Euler angle, an actual position, an actual angle, an actual angular velocity, or the like of the torso 208.

In some feasible examples, a workstation may be further deployed in the quadruped foot-wheel hybrid robot 200. The workstation may be configured to control parts of the robot to move, for example, control drive motors of the joints to rotate, to enable the parts to move. In an embodiment, the workstation may be implemented as a Next Unit of Computing (NUC) small computer.

In an embodiment, the hip joints, ankle joints, wheel joints, telescopic joints, a pitch joint, and a side swing joint corresponding to the quadruped foot-wheel hybrid robot 200 may be independently driven by respective corresponding drive motors.

In the technical solutions provided in the embodiments of this application, the mechanical wheels, the mechanical feet, the mechanical legs, the body (including the IMU), and the joints (including four hip joints, four ankle joints, four wheel joints, four telescopic joints, one pitch joint, and one side swing joint) of the quadruped foot-wheel hybrid robot 200 are essential hardware for implementing a control algorithm, and the rest are non-essential hardware.

In some embodiments, a control method for a robot provided in the embodiments of this application may be applicable to a plurality of scenarios, such as gait walking of the robot, climbing a staircase of the robot, crossing a threshold of the robot, crossing a shoulder of the robot, crossing a pit of the robot, stepping in situ of the robot, and any scenario of crossing obstacles. This helps improve adaptability of the robot to the environment and commonality of the robot. In addition, in the embodiments of this application, the mechanical foot assists the mechanical wheel in supporting the robot to stand, which can improve movement stability of the robot.

An application scenario of the technical solutions provided in the embodiments of this application is described by using a quadruped foot-wheel hybrid robot as an example.

Compared with a quadruped wheel-legged robot, the quadruped foot-wheel hybrid robot has a more stable structure. Based on mechanical feet, the quadruped foot-wheel hybrid robot exhibits greater resistance to external impact disturbances. The quadruped foot-wheel hybrid robot can not only carry heavy loads, but also navigate confined spaces and perform tasks on objects at different heights. This endows the quadruped foot-wheel hybrid robot with strong environmental adaptability.

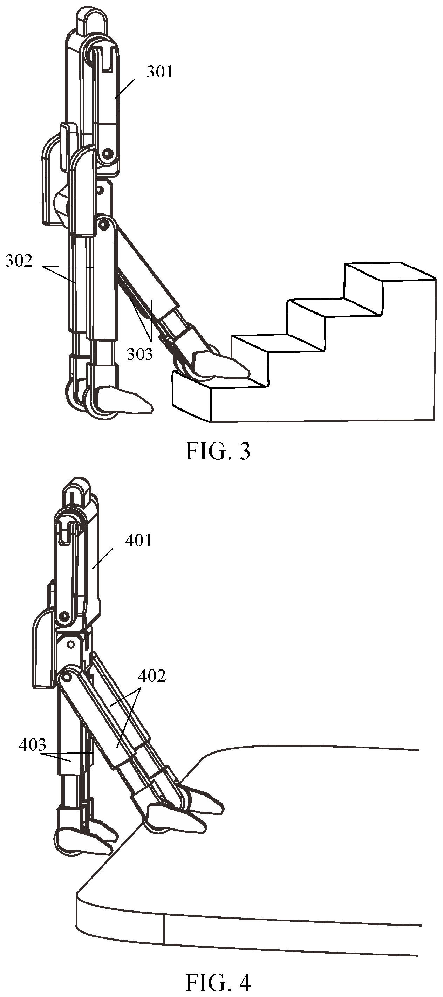

In an example, referring to FIG. 3, when a quadruped foot-wheel hybrid robot 301 performs a task of climbing a staircase, first, a first pre-defined task corresponding to the quadruped foot-wheel hybrid robot 301 may be planned based on the staircase. The first pre-defined task may guide the quadruped foot-wheel hybrid robot 301 to complete the task of climbing the staircase. Then, a target angle set corresponding to the first pre-defined task is calculated, and an outer mechanical leg set 302 (namely, a first mechanical leg set) and an inner mechanical leg set 303 (namely, a second mechanical leg set) are controlled, based on the target angle set, to swing alternately. In this way, the task of climbing the staircase is completed. For example, first, the outer mechanical leg set 302 serves as a stance mechanical leg set to provide support, and the inner mechanical leg set 303 serves as a swing mechanical leg set and swings, whereby the quadruped foot-wheel hybrid robot 301 climbs up a first step. Then, the inner mechanical leg set 303 serves as the stance mechanical leg set to provide support, and the outer mechanical leg set 302 serves as the swing mechanical leg set and swings, whereby the quadruped foot-wheel hybrid robot 301 climbs up a second step. The outer mechanical leg set 302 and the inner mechanical leg set 303 swing alternately in sequence, to complete the task of climbing the staircase. During movement of the robot, a mechanical leg set configured to swing is a swing mechanical leg set, and a mechanical leg set configured to stand is a stance mechanical leg set.

In this process, mechanical feet may further be controlled to assist mechanical wheels in supporting the quadruped foot-wheel hybrid robot 301 to stand stably. Alternatively, the robot may be controlled to rotate a body in coordination with alternate swing of the mechanical leg sets, to enable the quadruped foot-wheel hybrid robot 301 to climb the staircase in a more biomimetic manner.

In an example, referring to FIG. 4, when a quadruped foot-wheel hybrid robot 401 performs a task of crossing a shoulder, first, a first pre-defined task corresponding to the quadruped foot-wheel hybrid robot 401 may be planned based on the shoulder. The first pre-defined task may guide the quadruped foot-wheel hybrid robot 401 to complete the task of crossing the shoulder. Then, a target angle set corresponding to the first pre-defined task is calculated. Finally, an outer mechanical leg set 402 and an inner mechanical leg set 403 are controlled, based on the target angle set, to swing alternately. In this way, the task of crossing the shoulder is completed. For example, first, the inner mechanical leg set 403 serves as a stance mechanical leg set to provide support, and the outer mechanical leg set 402 serves as a swing mechanical leg set and swings, whereby the outer mechanical leg set 402 of the quadruped foot-wheel hybrid robot 401 climbs onto the shoulder. Then, the outer mechanical leg set 402 serves as the stance mechanical leg set to provide support, and the inner mechanical leg set 403 serves as the swing mechanical leg set and swings, whereby the quadruped foot-wheel hybrid robot 401 completely crosses the shoulder.

In this process, mechanical feet may further be controlled to assist mechanical wheels in supporting the quadruped foot-wheel hybrid robot 401 to stand stably. Alternatively, the robot may be controlled to rotate a body in coordination with alternate swing of the mechanical leg sets, whereby the quadruped foot-wheel hybrid robot 401 crosses the shoulder in a more biomimetic manner.

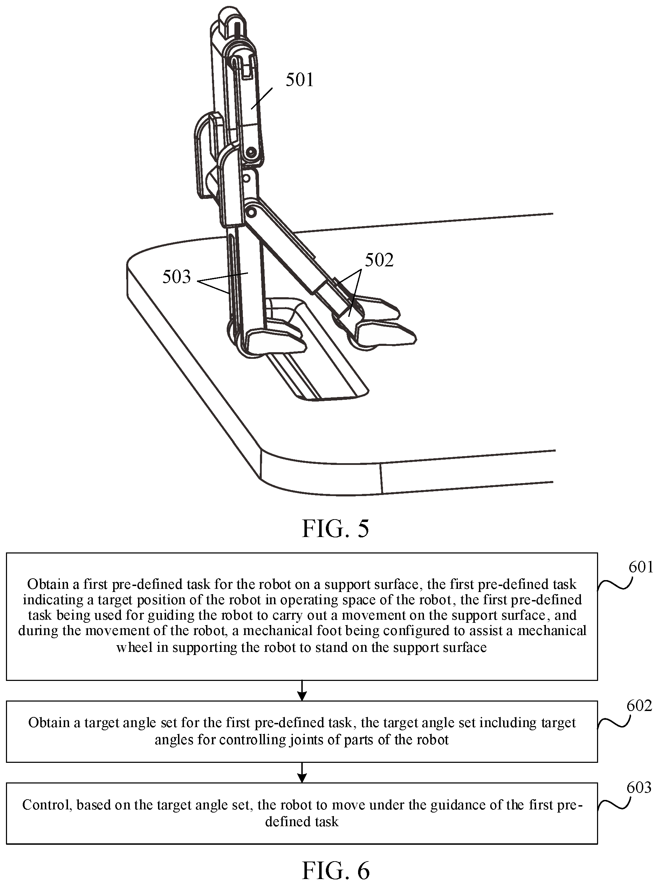

In an example, referring to FIG. 5, when a quadruped foot-wheel hybrid robot 501 performs a task of crossing a pit, first, a first pre-defined task corresponding to the quadruped foot-wheel hybrid robot 501 may be planned based on the pit. The first pre-defined task may guide the quadruped foot-wheel hybrid robot 501 to complete the task of crossing the pit. Then, a target angle set corresponding to the first pre-defined task is calculated. Finally, an outer mechanical leg set 502 and an inner mechanical leg set 503 are controlled, based on the target angle set, to swing alternately. In this way, the task of crossing the pit is completed. For example, first, the inner mechanical leg set 503 serves as a stance mechanical leg set to provide support, and the outer mechanical leg set 502 serves as a swing mechanical leg set and swings, whereby the outer mechanical leg set 502 of the quadruped foot-wheel hybrid robot 501 crosses the pit. Then, the outer mechanical leg set 502 serves as the stance mechanical leg set to provide support, and the inner mechanical leg set 503 serves as the swing mechanical leg set and swings, whereby the quadruped foot-wheel hybrid robot 501 completely crosses the pit.

In this process, mechanical feet may further be controlled to assist mechanical wheels in supporting the quadruped foot-wheel hybrid robot 501 to stand stably. Alternatively, the robot may be controlled to rotate a body in coordination with alternate swing of the mechanical leg sets, whereby the quadruped foot-wheel hybrid robot 501 crosses the shoulder in a more biomimetic manner.

The following describes the control method for a robot provided in the embodiments of this application by using method embodiments. For content that is not described in the method embodiments, refer to the foregoing embodiments. Details are not described herein again.

FIG. 6 is a flowchart of a control method for a robot according to an embodiment of this application. In the embodiments of this application, the control method for a robot is described by using an example in which operations are performed by a robot. The method may include the following operations (601 to 603). It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application.

Operation 601: Obtain a first pre-defined task for the robot on a support surface, the first pre-defined task indicating a target position of the robot in operating space of the robot, the first pre-defined task being used for guiding the robot to carry out a movement on the support surface, and during the movement of the robot, a mechanical foot being configured to assist a mechanical wheel in supporting the robot to stand on the support surface.

In the embodiments of this application, the pre-defined task refers to a task that the robot is expected to perform in the operating space. Exemplarily, the pre-defined task may be set for parts of the robot, and may include, for example, positions, velocities, and accelerations of the parts. Alternatively, the pre-defined task may be set for joints of the robot, and may include, for example, angles, angular velocities, and angular accelerations of the joints. This is not limited in the embodiments of this application. The robot is the same as the robot described in the foregoing embodiments. For content not described in the embodiments of this application, refer to the foregoing embodiments. Details are not described herein again.

In an embodiment, the first pre-defined task may refer to a task set for positions of the parts of the robot. For example, the first pre-defined task includes target positions of the parts of the robot in the operating space of the robot. The first pre-defined task may be planned based on the robot and a real-world environment in which the robot is located. For example, target positions of the parts of the robot relative to the support surface are planned based on a size of the support surface, sizes of the parts of the robot, and a structure of the robot, to obtain the first pre-defined task corresponding to the scenario. The target positions of the parts relative to the support surface are the target positions of the parts. A target position of a part may be used for indicating a position that the part is expected to reach.

In an embodiment, the first pre-defined task corresponds to a complete movement process of the robot. If the complete movement process corresponds to a plurality of control moments, the first pre-defined task may include target positions corresponding to the parts of the robot at the plurality of control moments. The control moment refers to a moment when the robot is controlled through a control signal. The control moments are arranged at specified time intervals. The specified time interval may be set and adjusted according to an actual use requirement. In this way, the first pre-defined task may be obtained through unified planning for the overall movement process of the robot.

In an example, the first pre-defined task may be used for guiding the robot to alternately swing a first mechanical leg set and a second mechanical leg set, whereby the robot moves in a first direction on the support surface. Exemplarily, corresponding first pre-defined tasks may be separately planned for scenarios such as gait walking, climbing a staircase, crossing an obstacle, and stepping in situ. For example, the first pre-defined task corresponding to gait walking may be used for guiding the robot to alternately swing the first mechanical leg set and the second mechanical leg set, to implement a task of walking in a gait. The first pre-defined task corresponding to climbing a staircase may be used for guiding the robot to alternately swing the first mechanical leg set and the second mechanical leg set, to implement a task of climbing a staircase. The first pre-defined task corresponding to crossing an obstacle may be used for guiding the robot to alternately swing the first mechanical leg set and the second mechanical leg set, to implement a task of crossing an obstacle. This is not limited in the embodiments of this application.

The robot may control, based on the target positions in the first pre-defined task, the parts of the robot to move. In this way, movement of the robot on the support surface is achieved. For example, the robot may control the parts, such as a mechanical leg, a mechanical foot, a mechanical wheel, and a body of the robot, based on the target positions in the first pre-defined task, whereby the robot alternately swings the first mechanical leg set and the second mechanical leg set to move on the support surface. In addition, the mechanical foot may be controlled to assist the mechanical wheel in supporting the robot to stand more stably on the support surface.

In an example, the first pre-defined task includes target positions of the mechanical foot, the mechanical wheel, and the body at the control moments, to enable the robot to complete the complete movement process. In an embodiment, a target position corresponding to the mechanical leg may be used for controlling the mechanical leg (including the mechanical wheel and the mechanical foot) to swing, and controlling the mechanical leg to telescope. The target position corresponding to the mechanical foot may be used for controlling the mechanical foot to rotate, and the target position corresponding to the body may be used for controlling the body to rotate (including pitching and side swinging). In a feasible example, the parts may alternatively include a mechanical leg, a mechanical foot, a mechanical wheel, and a body of the robot, and the first pre-defined task may indicate target positions of the mechanical leg, the mechanical foot, the mechanical wheel, and the body at the control moments. This is not limited in the embodiments of this application.

The operating space of the robot refers to a Cartesian space corresponding to the robot. In task-oriented whole body control of the robot, the Cartesian space corresponding to the robot may be referred to as the operating space of the robot. In the embodiments of this application, positions in the operating space of the robot may be represented based on a world coordinate system of the robot.

Exemplarily, the world coordinate system of the robot may be constructed by using a contact point between a foot part (the mechanical wheel) of the robot in an initial state and the support surface as an origin, using a horizontal direction as an x-axis direction, using a vertical direction as a z-axis direction, and using a direction perpendicular to both the horizontal direction and the vertical direction as a y-axis direction. A position of the robot in the operating space may be represented by three-dimensional coordinates of the robot in the world coordinate system. In an embodiment, calculations in the embodiments of this application are all performed based on the world coordinate system of the robot.

The first direction is not limited in the embodiments of this application, and may be used for indicating a forward direction of the robot. Exemplarily, in scenarios such as gait walking, climbing a staircase, crossing an obstacle, and stepping in situ, the first direction may refer to a horizontal direction (namely, a direction perpendicular to a gravity direction), and is used for indicating a forward direction of the robot. For example, the first direction may be a direction horizontally to the right. The support surface refers to a surface on which the robot stands. In the embodiments of this application, the support surface may include only one plane, such as a flat ground or road. Alternatively, the support surface may include a plurality of planes at different heights, such as a staircase, a road with a shoulder, and a ground with a pit. This is not limited in the embodiments of this application.

In an example, the robot stops moving after the plurality of control moments, that is, completes the first pre-defined task. During movement of the robot, a mechanical leg configured to swing is a swing mechanical leg, and a mechanical leg configured to stand is a stance mechanical leg. A mechanical foot on the swing mechanical leg is a swing mechanical foot, and a mechanical foot on the stance mechanical leg is a stance mechanical foot. A mechanical wheel on the swing mechanical leg is a swing mechanical wheel, and a mechanical wheel on the stance mechanical leg is a stance mechanical wheel. The stance mechanical foot may assist the stance mechanical wheel in supporting the robot to stand on the support surface. A mechanical leg set constituted by the swing mechanical legs is referred to as a swing mechanical leg set, and a mechanical leg set constituted by the stance mechanical legs is referred to as a stance mechanical leg set.

Exemplarily, in a case that the robot stands on the support surface through the first mechanical leg set, and controls the second mechanical leg set of the robot to swing, mechanical legs in the first mechanical leg set may be referred to as stance mechanical legs, and mechanical legs in the second mechanical leg set may be referred to as swing mechanical legs. In a case that the robot stands on the support surface through the second mechanical leg set, and controls the first mechanical leg set of the robot to swing, the mechanical legs in the second mechanical leg set may be referred to as the stance mechanical legs, and the mechanical legs in the first mechanical leg set may be referred to as the swing mechanical legs. In a case that the robot stand on the support surface through both the first mechanical leg set and the second mechanical leg set, both the mechanical legs in the first mechanical leg set and the mechanical legs in the second mechanical leg set may be referred to as the stance mechanical legs. This is not limited in the embodiments of this application.

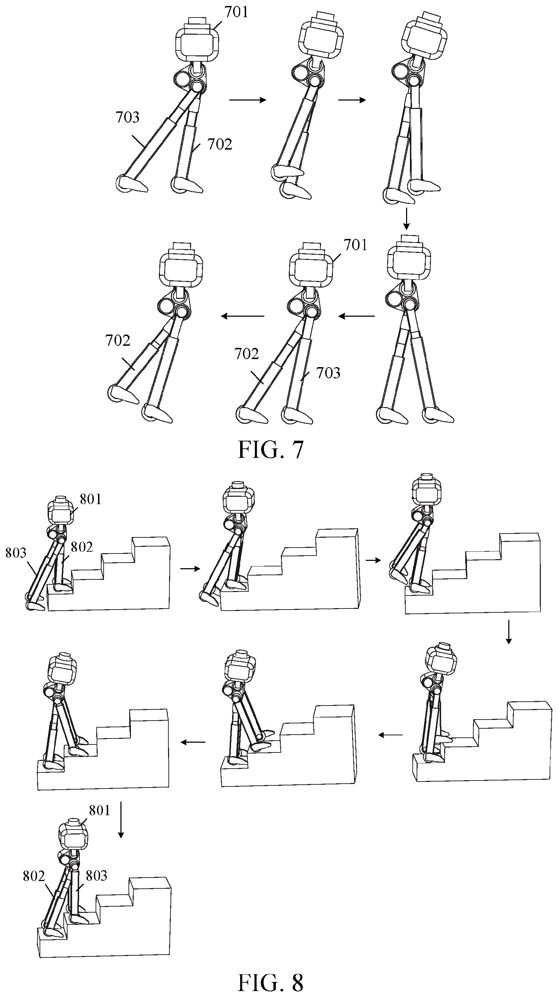

In an embodiment, in scenarios such as gait walking, climbing a staircase, crossing an obstacle, and stepping in situ of the robot, a movement process of the robot may be implemented as a process of alternatively swinging the first mechanical leg set and the second mechanical leg set. Referring to FIG. 7, gait walking is used as an example. First, a robot 701 is supported by a first mechanical leg set 702 and swings a second mechanical leg set 703, to complete a first step of movement, and then, is supported by the second mechanical leg set 703 and swings the first mechanical leg set 702, to complete a second step of movement. In this way, gait walking may be completed by alternately swinging the first mechanical leg set 702 and the second mechanical leg set 703.

Referring to FIG. 8, climbing a staircase is used as an example. First, the robot 801 is supported by a first mechanical leg set 802 and swings a second mechanical leg set 803, to climb up a first step, and then, is supported by the second mechanical leg set 803 and swings the first mechanical leg set 802, to climb up a second step. In this way, climbing the staircase may be completed by alternately swinging the first mechanical leg set 802 and the second mechanical leg set 803.

When the mechanical leg set is configured to provide support, both a mechanical foot and a mechanical wheel on the mechanical leg set are in contact with the support surface, to enable the robot to stand more stably. For example, both the mechanical foot and the mechanical wheel on the stance mechanical leg are in contact with the support surface.

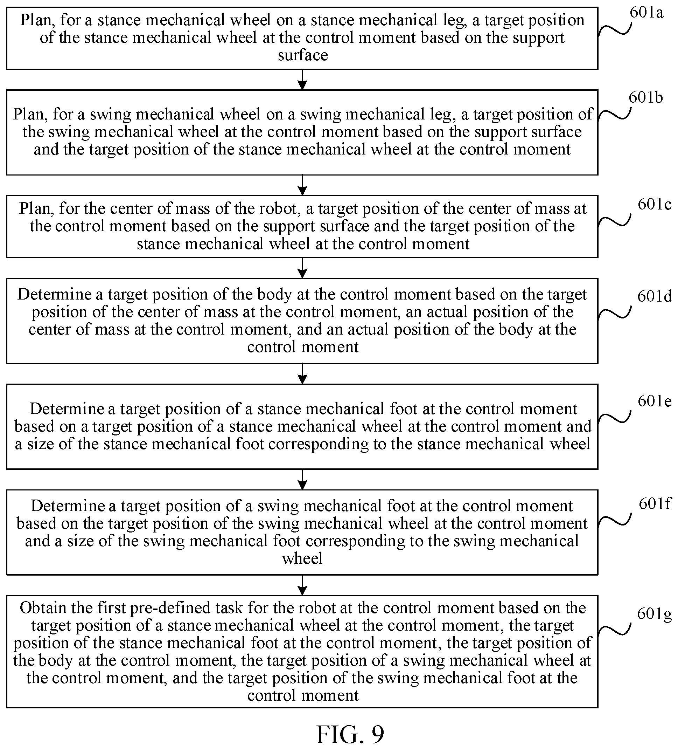

In an example, the first pre-defined task indicates a target position of the mechanical wheel, for example, includes corresponding target positions of a stance mechanical wheel and a swing mechanical wheel respectively at the control moments. As shown in FIG. 9, for any control moment corresponding to the robot, operation 601 may include the following sub-operations.

Operation 601a: Plan, for a stance mechanical wheel on a stance mechanical leg, a target position of the stance mechanical wheel at the control moment based on the support surface.

In the embodiments of this application, the robot moves on the support surface in a step taking manner (that is, alternately swinging the two mechanical leg sets). In a step taking process of the robot, no relative displacement occurs between the stance mechanical wheel and the support surface. Therefore, only a position of the stance mechanical wheel in each step taking process needs to be planned, to obtain the corresponding target positions of the stance mechanical wheel at the control moments. One step taking process may correspond to one process of swinging the mechanical leg sets by the robot.

Exemplarily, the target positions of the stance mechanical wheel at the control moments may be planned based on size information (such as a width, a height, or a length) of the support surface and a size (such as a radius or a diameter) of the stance mechanical wheel.

A quadruped foot-wheel hybrid robot climbing a staircase is used as an example. For each step corresponding to the staircase, a center position of the step may be determined as a contact point between the stance mechanical wheel and the support surface. For example, after positions of contact points in step taking processes are determined, corresponding target positions of the stance mechanical wheel at control moments may be obtained based on the positions of the contact points and a size of the stance mechanical wheel.

For example, in a case that a target position of a wheel center of the stance mechanical wheel is used as the corresponding target position of the stance mechanical wheel, for the steps, an x-coordinate and a y-coordinate of the stance mechanical wheel may be determined based on an x-coordinate and a y-coordinate of a center position (that is, the contact point) of the step, and a z-coordinate of the stance mechanical wheel may be determined based on a wheel radius of the stance mechanical wheel. In this way, target positions of the stance mechanical wheel on the steps may be obtained, and the corresponding target positions of the stance mechanical wheel at the control moments may be obtained. The x-coordinate, the y-coordinate, and the z-coordinate are represented based on a world coordinate system of the robot. The world coordinate system may use a first contact point between the robot and the support surface as an origin, the x-axis is parallel to the first direction, and the z-axis is parallel to the vertical direction. The first contact point is a contact point between the stance mechanical wheel of the robot in an initial state and the support surface.

For example, in the embodiments of this application, the corresponding target position of the stance mechanical wheel at the control moment may be denoted as ${X}_{t}^{r}$, stance wheels, where t denotes a control moment, r indicates that x is a target position, and stance wheel indicates that the position is a target position of the stance mechanical wheel.

Operation 601b: Plan, for a swing mechanical wheel on a swing mechanical leg, a target position of the swing mechanical wheel at the control moment based on the support surface and the target position of the stance mechanical wheel at the control moment.

In a step taking process of the robot, relative displacement occurs between the swing mechanical wheel and the support surface. The step taking process is essentially a process of exchanging mutual functions of the swing mechanical wheel and the stance mechanical wheel. For example, for an n^{th} step taking process, a stance mechanical wheel in an (n+1)^{th} step taking process is a swing mechanical wheel in the n^{th} step taking process, where n is a positive integer. To be specific, for the swing mechanical wheel in the n^{th} step taking process, an initial position of the swing mechanical wheel is a target position of a stance mechanical wheel in the n^{th} step taking process, and an end position of the swing mechanical wheel is a target position of the stance mechanical wheel in the (n+1)^{th} step taking process. The initial position and the end position of the swing mechanical wheel in the n^{th} step taking process are interpolated by using a spline curve interpolation method, to obtain corresponding target positions of the swing mechanical wheel at control moments in the n^{th} step taking process.

For example, in the embodiments of this application, the target position of the swing mechanical wheel at the control moment may be denoted as ${X}_{t}^{r}$, swing wheel, where t denotes a control moment, r indicates that x is a target position, and swing wheel indicates that the position is a corresponding target position of the swing mechanical wheel.

In an embodiment, in the spline curve interpolation method, a size of the support surface may be used as a constraint, to prevent the swing mechanical leg from colliding with the support surface. For example, referring to FIG. 8, for the steps, a relative distance between the swing mechanical wheel and the step may be set to be greater than a collision threshold, to prevent the swing mechanical leg from colliding with a left side face of the step. The collision threshold may be set and adjusted according to an empirical value. This is not limited in the embodiments of this application.

In an example, the first pre-defined task further indicates a target position of the body, for example, includes corresponding target positions of the body at the control moments. As shown in FIG. 9, for any control moment corresponding to the robot, operation 601 may further include the following sub-operations.

Operation 601c: Plan, for the center of mass of the robot, a target position of the center of mass at the control moment based on the support surface and the target position of the stance mechanical wheel at the control moment.

The center of gravity of the robot refers to a gravity concentration point of the robot, and the center of mass of the robot is a weighted average of positions of mass points with respect to a mass of the robot. If a gravity is uniform, the center of mass and the center of gravity may coincide. During movement of the robot, the center of mass of the robot not only needs to continuously move in the first direction (namely, the forward direction), but also needs to help the robot maintain dynamic balance. In the embodiments of this application, the target position of the center of mass in the first direction may be determined as the target position of the center of mass.

In an embodiment, the target position of the center of mass in the first direction may be planned by using a planning method, such as a heuristic method (that is, a position is provided based on experience and a real-world environment) or an inverted pendulum model (a position is planned through an inverted pendulum model) and based on the target position of the stance mechanical leg. This is not limited in the embodiments of this application.

Exemplarily, because the robot always moves in the first direction (for example, no displacement occurs in the y-axis direction of the world coordinate system), the mechanical legs in the stance mechanical leg set move synchronously, the mechanical legs in the swing mechanical leg set move synchronously, and the hip joints of the robot are coaxial, the robot may be simplified as a plane model in a sagittal plane (such as a sagittal plane in FIG. 2).

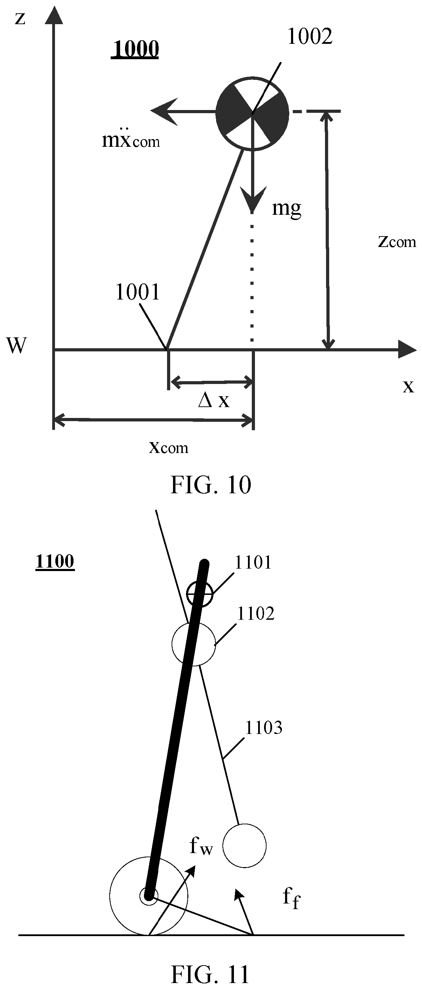

Referring to FIG. 10, in a case that a gravity field of the robot is uniform, the mass of the robot concentrates at the center of mass 1002 of the robot (that is, the center of mass and the center of gravity coincide). A center of a connection line between foot parts of two stance mechanical legs is set as a virtual support contact point 1001 between the inverted pendulum model of the robot and the support surface, and the center of mass 1002 and the virtual support contact point 1001 may be connected to convert the plane model of the robot into an inverted pendulum model 1000 of the robot.

After target positions of the two stance mechanical legs at a control moment are determined, a target position of the virtual stance contact point 1001 at the control moment may also be determined. For example, the target positions of the two stance mechanical legs at the control moment may be averaged, to obtain the target position of the virtual stance contact point 1001 at the control moment. Further, with reference to a relative distance between the center of gravity of the robot and the virtual stance contact point 1001, the target position of the center of mass 1002 at the control moment may be calculated. For example, calculation is performed based on the Pythagorean theorem, to determine the target position of the center of mass 1002 in the first direction (namely, the x-axis) at the control moment.

For example, in the embodiments of this application, the corresponding target position of the center of mass at the control moment may be denoted as ${X}_{t , com}^{r}$, where t denotes a control moment, r indicates that x is a target position, and com indicates that the position is the target position of the center of mass.

Operation 601d: Determine a target position of the body at the control moment based on the target position of the center of mass at the control moment, an actual position of the center of mass at the control moment, and an actual position of the body at the control moment.

In an actual scenario, a position deviation exists between a position of the body and a position of the center of mass. Therefore, in the embodiments of this application, the target position of the center of mass is distinguished from the target position of the body. For example, FIG. 11 is a simplified diagram of a model of a quadruped foot-wheel hybrid robot according to an embodiment of this application. A center of mass 1101 of a robot 1100 may be determined based on a body 1102 and mechanical legs 1103. A position deviation exists between the body 1102 and the center of mass 1101.

In an example, a target position of the body at a control moment may be planned based on the position deviation between the center of mass and the body and a target position of the center of mass at the control moment. In this way, an accurate target position of the body may be obtained. This helps improve accuracy of determining the target position of the body. The position deviation between the center of mass and the body may be solved based on actual angles of joints in real time, and the actual angle refers to a real angle of the joint that is measured at a current moment.

Exemplarily, the target position of the body may be calculated based on a difference between the actual position of the center of mass and the actual position of the body, as well as the target position of the center of mass. Therefore, the target position of the body at the control moment may be expressed as follows: ${X}_{t , base}^{r} = {X}_{t , com}^{r} - \left({X}_{t , com}^{a}-{X}_{t , base}^{a}\right) ,$
where ${X}_{t , base}^{r}$ denotes a target position of the body at a control moment t, ${X}_{t , com}^{r}$ denotes a target position of the center of mass at the control moment t, ${X}_{t , com}^{a}$ denotes an actual position of the center of mass at the control moment t, and ${X}_{t , base}^{a}$ denotes an actual position of the body at the control moment t.

In some feasible examples, in a case that the position deviation between the center of mass and the body is small, it may be approximately considered that a pose (a position and a posture) of the center of mass is basically the same as a pose of the body. In this way, the target position of the center of mass at the control moment may be directly determined as the target position of the body at the control moment. This can effectively reduce workload of determining the corresponding target position of the body, and further improve efficiency of determining the target position.

In an example, the first pre-defined task may further indicate a target position of a mechanical foot, for example, include target positions of a stance mechanical foot and a swing mechanical foot respectively at control moments. As shown in FIG. 9, for any control moment corresponding to the robot, operation 601 may further include the following sub-operations.

Operation 601e: Determine a target position of a stance mechanical foot at the control moment based on a target position of a stance mechanical wheel at the control moment and a size of the stance mechanical foot corresponding to the stance mechanical wheel.

The stance mechanical foot corresponding to the stance mechanical wheel may be a stance mechanical foot of a stance mechanical leg to which the stance mechanical wheel belongs, such as a stance mechanical foot coaxial with the stance mechanical wheel. In the embodiments of this application, the stance mechanical wheel on the stance mechanical leg is coaxial with the stance mechanical foot, and in a case that the stance mechanical wheel provides support, the stance mechanical foot is also in contact with the support surface, to provide support at the same time. For example, the stance mechanical foot may be in contact with the support surface through a tiptoe, or may be in contact with the support surface through an auxiliary surface. This is not limited in the embodiments of this application. The auxiliary surface of the mechanical foot may be configured to be in contact with the support surface to assist the mechanical wheel in supporting the robot to stand. The auxiliary surface may be a plane, and may be disposed at the bottom of the tiptoe, to fit with (parallel to and in contact with) the support surface when the auxiliary surface is in contact with the support surface. A size and a style of the auxiliary surface are not limited in the embodiments of this application, and may be set and adjusted according to an actual use requirement.

In a case that the tiptoe of the mechanical foot is in contact with the support surface, each foot part includes a contact point between the mechanical wheel and the support surface, as well as a contact point between the mechanical foot and the support surface. In a case that the auxiliary surface of the mechanical foot is in contact with the support surface, each foot part includes a contact point between the mechanical wheel and the support surface, as well as a plurality of contact points between the auxiliary surface and the support surface. In this way, each foot part supports the robot to stand through at least two contact points. This can enable the robot to stand more stably on the support surface, reduces the risk of falling, and further effectively improves movement stability of the robot.

In an example, a position at which the auxiliary surface of the stance mechanical foot is just in contact with and is parallel to the support surface may be determined as the target position of the stance mechanical foot, or a position of any contact point between the stance mechanical foot and the support surface may be determined as the target position of the stance mechanical foot, or a position of a contact point between the tiptoe of the stance mechanical foot and the support surface may be determined as the target position of the stance mechanical foot. This is not limited in the embodiments of this application.

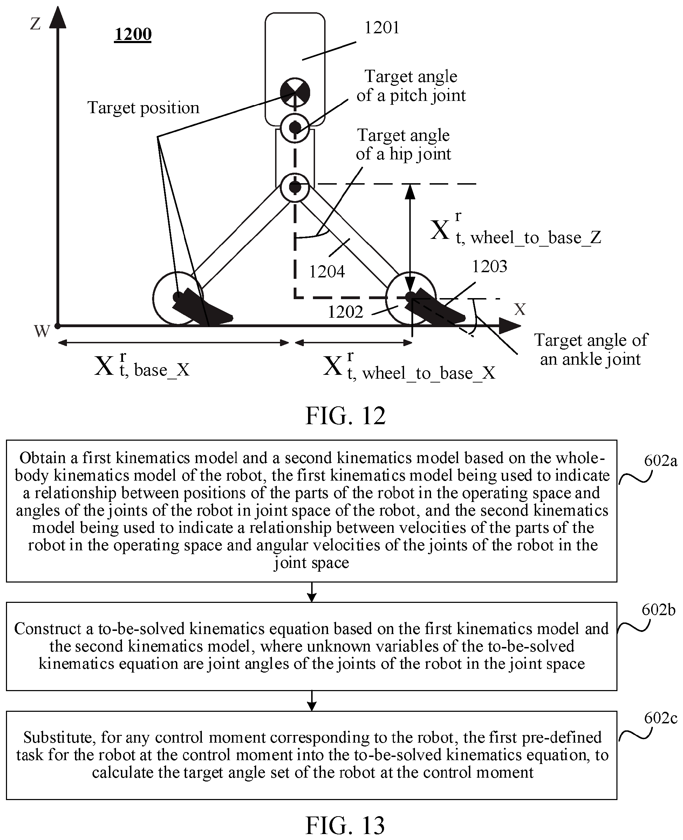

Exemplarily, FIG. 12 is a simplified diagram of a model of a quadruped foot-wheel hybrid robot according to another embodiment of this application. In a case that a target position of a stance mechanical wheel 1202 of a robot 1200 is known, and a size of a stance mechanical foot 1203 is known, a position of a contact point between the stance mechanical foot 1203 and a support surface may be calculated, and then the position of the contact point may be directly determined as a target position of the stance mechanical foot 1203.

In each step taking process, no displacement occurs between the stance mechanical foot and the support surface. After the position of the contact point between the stance mechanical foot and the support surface is determined, corresponding target positions of the stance mechanical foot at control moments in the step taking processes may be determined by using a spline curve interpolation method.

For example, in the embodiments of this application, the target position of the stance mechanical foot at the control moment may be denoted as ${X}_{t , stance foot}^{r}$, where t denotes a control moment, r indicates that x is a target position, and stance foot indicates that the position is the target position of the stance mechanical foot.

Operation 601f: Determine a target position of a swing mechanical foot at the control moment based on the target position of the swing mechanical wheel at the control moment and a size of the swing mechanical foot corresponding to the swing mechanical wheel.

The swing mechanical foot corresponding to the swing mechanical wheel may be a swing mechanical foot of a swing mechanical leg to which the swing mechanical wheel belongs, for example, a swing mechanical foot that is coaxial with the swing mechanical wheel. In an embodiment, the swing mechanical foot and the corresponding swing mechanical wheel synchronously move, and the target position of the swing mechanical foot may be restricted by the target position of the corresponding swing mechanical wheel. For example, the target position of the swing mechanical foot at the control moment may be calculated, on the premise of ensuring that the swing mechanical wheel does not collide with the support surface, based on the target position of the swing mechanical wheel at the control moment and a size of the swing mechanical foot as a parameter.

Exemplarily, the step taking process of the robot is essentially a process of exchanging mutual functions of the swing mechanical wheel and the stance mechanical wheel, and is also a process of exchanging mutual functions of the swing mechanical foot and the stance mechanical foot. For example, for an n^{th} step taking process, a stance mechanical foot in an (n+1)^{th} step taking process is a swing mechanical foot in the n^{th} step taking process. To be specific, for the swing mechanical foot in the n^{th} step taking process, an initial position of the swing mechanical foot is a target position of the stance mechanical foot in the n^{th} step taking process, and an end position of the swing mechanical foot is a target position of the stance mechanical foot in the (n+1)^{th} step taking process. The initial position and the end position of the swing mechanical foot in the n^{th} step taking process are interpolated by using a spline curve interpolation method, to obtain corresponding target positions of the swing mechanical foot at control moments in the n^{th} step taking process.

For example, in the embodiments of this application, the target position of the swing mechanical foot at the control moment may be denoted as ${X}_{t , swing foot}^{r}$, where t denotes a control moment, r indicates that x is a target position, and swing foot indicates that the position is the target position of the swing mechanical foot.

In an example, the first pre-defined task indicates target positions of a stance mechanical wheel, a stance mechanical foot, a swing mechanical wheel, a swing mechanical foot, and a body in the operating space of the robot. As shown in FIG. 9, for any control moment corresponding to the robot, operation 601 may further include the following sub-operations.

Operation 601g: Obtain the first pre-defined task for the robot at the control moment based on the target position of a stance mechanical wheel at the control moment, the target position of the stance mechanical foot at the control moment, the target position of the body at the control moment, the target position of a swing mechanical wheel at the control moment, and the target position of the swing mechanical foot at the control moment.

In an embodiment, the first pre-defined task indicates a target position of a swing mechanical wheel on the swing mechanical leg, a target position of a swing mechanical foot on the swing mechanical leg, a target position of a stance mechanical wheel on the stance mechanical leg, a target position of a stance mechanical foot on the stance mechanical leg, and a target position of the body. The first pre-defined task for the robot at the control moment may be obtained by combining the target position of the stance mechanical wheel at the control moment, the target position of the stance mechanical foot at the control moment, the target position of the body at the control moment, the target position of the swing mechanical wheel at the control moment, and the target position of the swing mechanical foot at the control moment.

In a feasible example, the first pre-defined task may indicate a target position of the swing mechanical wheel on the swing mechanical leg, a target position of the stance mechanical wheel on the stance mechanical leg, and a target position of the body. The first pre-defined task for the robot at the control moment is obtained by combining the target position of the swing mechanical wheel at the control moment, the target position of the stance mechanical wheel at the control moment, and the target position of the body at the control moment.

In an example, the body of the robot keeps vertical as much as possible during movement of the robot (which is referred to as a vertical task for short below), that is, Euler angles formed by roll, pitch, and yaw of the body are all zero, and are denoted as ${X}_{t , euler}^{r} = {0}_{3 \times 1}$. The vertical task also needs to be performed while the first pre-defined task is performed.

In an example, the body of the robot dynamically rotates during movement of the robot (which is referred to as an angular momentum task for short below). The angular momentum task may be implemented by planning an angular momentum of the center of mass, and the angular momentum task also needs to be performed while the first pre-defined task is performed.

In an example, during movement of the robot, the robot gives consideration to the vertical task and the angular momentum task for the body in a weight allocation manner. For example, in a case that a weight parameter of the vertical task is greater than a weight parameter of the angular momentum task, the robot prioritizes the vertical task, but does not give up the angular momentum task. In a case that the weight parameter of the vertical task is less than or equal to the weight parameter of the angular momentum task, the robot prioritizes the angular momentum task, but does not give up the vertical task. The weight parameter of the vertical task and the weight parameter of the angular momentum task may be dynamically set and adjusted according to an actual use requirement. This is not limited in the embodiments of this application.

Operation 602: Obtain a target angle set for the first pre-defined task, the target angle set including target angles for controlling joints of parts of the robot.

In the embodiments of this application, the target angle set for the first pre-defined task may indicate corresponding target angles of hip joints, ankle joints, wheel joints, telescopic joints, a pitch joint, and a side swing joint at control moments. The target angle refers to an angle to which the joint is target to rotate. The corresponding target angles of the hip joint, the wheel joint, and the telescopic joint are related to the target position of the mechanical wheel, the target angle of the ankle joint is related to the target position of the mechanical foot, and the corresponding target angles of the pitch joint and the side swing joint are related to the target position of the body.

In an example, the target angle set for the first pre-defined task may be calculated by using a whole-body kinematics model of the robot. Exemplarily, as shown in FIG. 13, operation 602 may include the following sub-operations.

Operation 602a: Obtain a first kinematics model and a second kinematics model based on the whole-body kinematics model of the robot, the first kinematics model being used to indicate a relationship between positions of the parts of the robot in the operating space and angles of the joints of the robot in joint space of the robot, and the second kinematics model being used to indicate a relationship between velocities of the parts of the robot in the operating space and angular velocities of the joints of the robot in the joint space.

The whole-body kinematics model of the robot refers to a mathematical expression for describing a relationship between a movement state and a position of the robot, and the movement state of the robot may be represented by an angle of a joint or a pose of an end effector. The whole-body kinematics model includes a positive kinematics model and a kinematics model. In the positive kinematics model, a position of the robot is determined based on a joint angle of the robot or a pose of the end effector. In the embodiments of this application, the first kinematics model and the second kinematics model are determined based on the positive kinematics model.

Exemplarily, the positive kinematics model may be directly determined as the first kinematics model, and is denoted as **x** = f(**q**), where **x** denotes the position of each part of the robot in the operating space, and **q** denotes the angle of each joint of the robot in the joint space of the robot.

A variant of the positive kinematics model may be determined as the second kinematics model, and is denoted as **ẋ** = f(**q̇**), where **ẋ** denotes the velocity of each part of the robot in the operating space, and **q̇** denotes the angular velocity of each joint of the robot in the joint space of the robot.

Operation 602b: Construct a to-be-solved kinematics equation based on the first kinematics model and the second kinematics model, where unknown variables of the to-be-solved kinematics equation are joint angles of the joints of the robot in the joint space.

Exemplarily, the to-be-solved kinematics equation obtained after combination and simplification of the first kinematics model and the second kinematics model may be expressed as follows: $\left[\begin{matrix}{J}_{t} & 0 \\ 0 & {J}_{t}\end{matrix}\right] \left[\begin{matrix}{q}^{cmd} \\ {\dot{q}}^{cmd}\end{matrix}\right] = \left[\begin{matrix}{x}^{des} - {x}^{act} + {J}_{t} {q}^{act} \\ {\dot{x}}^{des}\end{matrix}\right] ,$
where **q**^{cmd} denotes the target angle set corresponding to the joints, **J**ₜ denotes a Jacobian matrix corresponding to the first pre-defined task t, **q**^{act} denotes an actual angle set corresponding to the joints, and may be fed back by encoders of joint motors (also referred to as drive motors) corresponding to the joints, **x**^{des} denotes the first pre-defined task t (namely, the target positions of the parts corresponding to the joints), and **x**^{act} denotes the actual position of the part corresponding to each joint.

A mapping relationship between **ẋ**^{des} (a first-order derivative (namely, a target velocity) of the target positions of the parts corresponding to the joints with respect to control moments) and **q̇**^{cmd} (namely, a first-order derivative of the target angle set with respect to the control moments) is give in a second row of the to-be-solved kinematics equation. The positions in the embodiments of this application are represented based on a world coordinate system.

**q**^{act}, **x**^{des} , **x**^{act} , and **ẋ**^{des} are all known variables, and an unknown variable **q̇**^{cmd} can be obtained by solving the to-be-solved kinematics equation. Exemplarily, **q**^{cmd} may include the target angles of the hip joints, the ankle joints, the wheel joints, the telescopic joints, the pitch joint, and the side swing joint of the robot at the control moments.

Operation 602c: Substitute, for any control moment corresponding to the robot, the first pre-defined task for the robot at the control moment into the to-be-solved kinematics equation, to calculate the target angle set of the robot at the control moment.

In an embodiment, movement of the joint is further physically restricted by a joint motor corresponding to the joint. To improve appropriateness and accuracy of obtaining the target angle set, in the embodiments of this application, a constraint is further set in a process of calculating the target angle set. Exemplarily, a process of solving the to-be-solved kinematics equation may be as follows:
1. The positions of the parts of the robot in the operating space in the to-be-solved kinematics equation are replaced with the first pre-defined task for the robot at the control moment, to obtain an intermediate kinematics equation.
   In an embodiment, in the to-be-solved kinematics equation, **x**^{des} is replaced with **x**^{r}, to obtain the intermediate kinematics equation,
   where ${X}^{r} = \left[\begin{matrix}{X}_{t , stance wheel}^{r} \\ {X}_{t , swing wheel}^{r} \\ {X}_{t , base}^{r} \\ {X}_{t , stance foot}^{r} \\ {X}_{t , swing foot}^{r}\end{matrix}\right] .$
2. A joint physical constraint expression for the robot is constructed, and the joint physical constraint expression is configured to constrain the joints of the robot.
   In an embodiment, based on actual physical properties of the joint motors of the robot, the target angle set **q**^{cmd} in the unknown variables is constrained. That is, the joint physical constraint expression may be: **q**^{lb} ≤ **q**^{cmd} ≤ **q**^{ub} , where **q**^{lb} and **q**^{ub} respectively represent a minimum value and a maximum value of a rotation angle of the joint motor.
3. Under a constraint of the joint physical constraint expression, the target angle set of the robot at the control moment is calculated based on the intermediate kinematics equation.

In an embodiment, an objective function for the intermediate kinematics equation is constructed by using a quadratic programming method. Under the constraint of the joint physical constraint expression, with an optimization objective of minimizing the objective function, the target angle set of the robot at the control moment is calculated.

Exemplarily, the objective function for the intermediate kinematics equation is constructed through a linear quadratic regulator (LQR). Under the constraint of the joint physical constraint expression, with an optimization objective of minimizing the objective function, the target angle set of the robot at the control moment is calculated. The LQR is constructed by using the quadratic programming method, and is essentially: finding a multi-dimensional vector under a linear constraint, and minimizing (or maximizing) a quadratic objective function for the multi-dimensional vector.

For example, the intermediate kinematics equation is first rewritten as the form of **AX** = **B**,
where $A = \left[\begin{matrix}{J}_{t} & 0 \\ 0 & {J}_{t}\end{matrix}\right] , X = \left[\begin{matrix}{q}^{cmd} \\ {\dot{q}}^{cmd}\end{matrix}\right] ,$ and $B = \left[\begin{matrix}{x}^{des} - {x}^{act} + {J}_{t} {q}^{act} \\ {\dot{x}}^{des}\end{matrix}\right] .$

A process of solving **AX = B** is essentially finding a solution of a linear equation system. **A** and **B** are known variables, and **X** is an unknown variable. Therefore, the objective function for the intermediate kinematics equation may be constructed through the LQR herein.

In an embodiment, the objective function for the intermediate kinematics equation may be expressed as follows: $Z = {\left(AX-B\right)}^{T} {W}_{1} \left(AX-B\right) + {X}^{T} {W}_{2} X ,$
where **W**₁ and **W**₂ represents a weight matrix, and ()^{T} represents transposition.

Through the linear quadratic programming optimizer, with an optimization objective of minimizing the objective function under the constraint of the joint physical constraint expression for the robot, the unknown variable **X** may be obtained, and **q**^{cmd} in **X** may be directly determined as the target angle set.

The quadruped foot-wheel hybrid robot in FIG. 2 is used as an example. The target angle set may include corresponding target angles of two hip joints (each hip joint corresponds to one mechanical leg set), telescopic joints respectively corresponding to four mechanical legs, wheel joints respectively corresponding to four mechanical wheels, ankle joints respectively corresponding to four mechanical feet, one pitch joint, and one side swing joint.

In an embodiment, if a model structure of the robot is simple, the whole-body dynamics model (such as the positive kinematics model) of the robot is also simple. Therefore, the intermediate kinematics equation may be solved directly through matrix pseudoinversion, that is, **X** = **A**⁻¹**B**, to obtain the target angle set.

A first term in the objective function represents a kinematics relationship, and a second term is to make the target angle small, whereby energy is saved. The target angle is calculated through the linear quadratic programming optimizer, which can ensure that the target angle of the joint is small while movement of the robot conforms to the kinematics relationship. In this way, energy is saved.

In the embodiments of this application, the target angle set corresponding to execution of the first pre-defined task may be accurately obtained based on the first pre-defined task and through the whole-body kinematics model of the robot. Then, the first pre-defined task may be accurately implemented based on the target angle set. In this way, accuracy of robot control is enhanced.

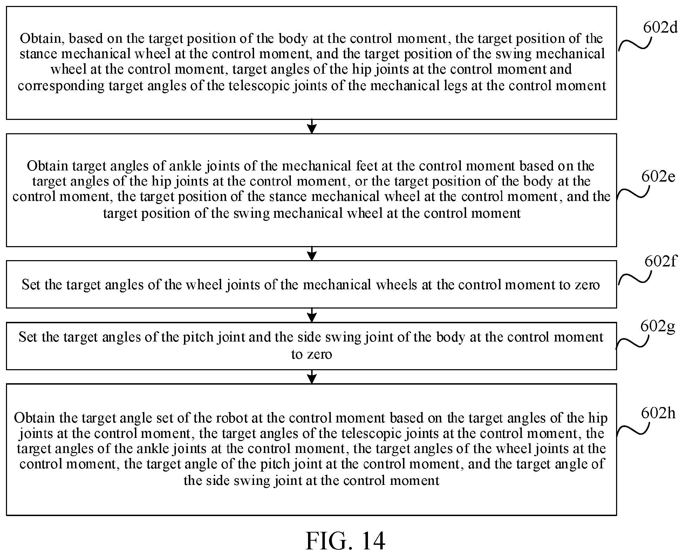

In an example, the target angle set for the first pre-defined task may alternatively be calculated based on a structure relationship of the robot without the need for the whole-body kinematics model of the robot. This helps reduce calculation complexity of the target angle set, and further helps improve efficiency of obtaining the target angle set. Exemplarily, as shown in FIG. 14, for any control moment corresponding to the robot, operation 602 may further include the following sub-operations.

Operation 602d: Obtain, based on the target position of the body at the control moment, the target position of the stance mechanical wheel at the control moment, and the target position of the swing mechanical wheel at the control moment, target angles of the hip joints at the control moment and corresponding target angles of the telescopic joints of the mechanical legs at the control moment.

Under a constrain of the model structure of the robot, the target position of the body and the target position of the mechanical wheel satisfy a geometrical relationship. Therefore, corresponding target angles of the hip joints and the telescopic joints may be determined based on the geometrical relationship. Exemplarily, the process may include the following content.
1. A first relative target position between the body and the stance mechanical wheel is determined based on the target position of the body at the control moment and the target position of the stance mechanical wheel at the control moment, and a second relative target position between the body and the swing mechanical wheel based on the target position of the body at the control moment and the target position of the swing mechanical wheel at the control moment.

In an embodiment, a difference between the target position of the body at the control moment and the target position of the stance mechanical wheel at the control moment is determined as the first relative target position between the body and the stance mechanical wheel. Therefore, the first relative target position may be expressed as: ${X}_{t , stacnc_wheel_to_base}^{r} = {X}_{t , base}^{r} - {X}_{t , stacnc wheel}^{r} .$

A difference between the target position of the body at the control moment and the target position of the swing mechanical wheel at the control moment is determined as the second relative target position between the body and the swing mechanical wheel. Therefore, the second relative target position may be expressed as: ${X}_{t , swing_wheel_to_base}^{r} = {X}_{t , base}^{r} - {X}_{t , swing wheel}^{r} .$

In the embodiments of this application, the first pre-defined task is used for guiding the robot to move in the first direction. Therefore, the first relative target position includes a relative position in the first direction and a relative position in a second direction. The second direction is perpendicular to the first direction. For example, the first direction is a horizontal direction, and the second direction is a vertical direction. Exemplarily, the first relative target position includes a relative target position between the stance mechanical wheel and the body in the first direction, and a relative target position between the stance mechanical wheel and the body in the second direction. The second relative target position includes a relative target position between the swing mechanical wheel and the body in the first direction, and a relative target position between the swing mechanical wheel and the body in the second direction.

For example, referring to FIG. 12, a corresponding relative target position between a mechanical wheel 1202 and a body 1201 may include: ${X}_{t , wheel_to_base_z}^{r}$ and ${X}_{t , wheel_to_base_x}^{r}$.

2. A target angle of a hip joint on a stance mechanical leg on which the stance mechanical wheel is located is determined based on the first relative target position, and a target angle of a hip joint on a swing mechanical leg on which the swing mechanical wheel is located is determined based on the second relative target position.

In an embodiment, an arc tangent of the relative target position between the stance mechanical wheel and the body in the first direction and the relative target position between the stance mechanical wheel and the body in the second direction is determined as the target angle of the hip joint on the stance mechanical leg.

Exemplarily, the target angle of the hip joint on the stance mechanical leg may be expressed as follows: ${q}_{t , stance hip}^{r} = atan \left({x}_{t , stance_wheel_to_base_x}^{r}, { x}_{t , stance_wheel_to_base_z}^{r}\right) .$

An arc tangent of the relative target position between the swing mechanical wheel and the body in the first direction and the relative target position between the relative target positions of the swing mechanical wheel and the body in the second direction is determined as the target angle of the hip joint on the swing mechanical leg.

Exemplarily, the target angle of the hip joint on the swing mechanical leg may be expressed as follows: ${q}_{t , swing hip}^{r} = atan \left({x}_{t , swing_wheel_to_base_x}^{r}, { x}_{t , swing_wheel_to_base_z}^{r}\right) .$

In the embodiments of this application, the target angle of the hip joint is determined based on the arc tangent, which can effectively reduce calculation amount of the target angle, and further effectively improve efficiency of determining the target angle.

3. A target length of the stance mechanical leg on which the stance mechanical wheel is located is determined based on the first relative target position, and a target length of the swing mechanical leg on which the swing mechanical wheel is located is determined based on the second relative target position.

In an embodiment, a norm of the relative target position between the stance mechanical wheel and the body in the first direction and the relative target position between the stance mechanical wheel and the body in the second direction is determined as the target length of the stance mechanical leg. For example, referring to FIG. 12, for a mechanical leg 1204, after a position of a mechanical wheel 1202 on the mechanical leg 1204 and a position of a hip joint of the mechanical wheel 1202 on the mechanical leg 1204 (namely, a position of the body 1201) are determined, a length of the mechanical leg 1204 can be determined. The essence of the calculation is calculating a distance between two points.

Exemplarily, the target length of the stance mechanical leg may be expressed as follows: ${l}_{t , stance leg}^{r} = \left|{x}_{t , stance_wheel_to_base_x}^{r}, { x}_{t , stance_wheel_to_base_z}^{r}\right| .$

In an embodiment, a norm of the relative target position between the swing mechanical wheel and the body in the first direction and the relative target position between the swing mechanical wheel and the body in the second direction is determined as the target length of the swing mechanical leg.

Exemplarily, the corresponding target length of the swing mechanical leg may be expressed as follows: ${l}_{t , swing leg}^{r} = \left|{x}_{t , swing_wheel_to_base_x}^{r}, { x}_{t , swing_wheel_to_base_z}^{r}\right| .$

In the embodiments of this application, the target length of the mechanical leg is determined based on the norm, which can effectively reduce calculation amount of the target length of the mechanical leg, and further improve efficiency of determining the target angle.

4. A target angle of the telescopic joint of the stance mechanical leg is determined based on the target length of the stance mechanical leg, and a target angle of the telescopic joint of the swing mechanical leg is determined based on the target length of the swing mechanical leg.

In an embodiment, a mapping relationship exists between the target length of the mechanical leg and the target angle of the telescopic joint. For example, the target length of the mechanical leg is linearly correlated with the target angle of the telescopic joint.

According to the mapping relationship, the target angle of the telescopic joint of the stance mechanical leg and the target angle of the telescopic joint of the swing mechanical leg may be determined, and are denoted as: ${q}_{t , stance leg}^{r}$ and ${q}_{t , swing leg}^{r}$, respectively.

In the embodiments of this application, the target angles of the hip joint and the telescopic joint can be accurately calculated based on a relative position between the parts and target lengths of the parts, which helps reduce calculation complexity of the target angles, and further helps improve efficiency of obtaining the target angle set.

Operation 602e: Obtain target angles of ankle joints of the mechanical feet at the control moment based on the target angles of the hip joints at the control moment, or the target position of the body at the control moment, the target position of the stance mechanical wheel at the control moment, and the target position of the swing mechanical wheel at the control moment.

In an example, for each hip joint, a negative of the target angle of the hip joint at the control moment may be directly determined as the target angle of the ankle joint on the mechanical leg on which the hip joint is located at the control moment.

Exemplarily, the target angle of the ankle joint at the control moment may be expressed as follows: ${q}_{t , stance foot}^{r} = - {q}_{t , stance hip}^{r} { and q}_{t , swing foot}^{r} = - {q}_{t , swing hip}^{r} .$

In an example, a process of obtaining the ankle joint may alternatively be as follows: determining a third relative target position between the stance mechanical wheel and the stance mechanical foot based on the target position of the stance mechanical wheel at the control moment and the target position of the stance mechanical foot at the control moment, and determining a fourth relative target position between the swing mechanical wheel and the swing mechanical foot based on the target position of the swing mechanical wheel at the control moment and the target position of the swing mechanical foot at the control moment; and determining the target angle of the ankle joint on the stance mechanical leg on which the stance mechanical foot is located based on the third relative target position, and determining the target angle of the ankle joint on the swing mechanical leg on which the swing mechanical foot is located based on the fourth relative target position.

In an embodiment, an arc tangent of the third relative target position may be determined as the target angle of the ankle joint corresponding to the stance mechanical foot, and an arc tangent of the fourth relative target position may be determined as the target angle of the ankle joint corresponding to the swing mechanical foot. The method is the same as the foregoing method for calculating the target angle of the hip joint, and details are not described herein again.

Exemplarily, the target angle of the ankle joint on the stance mechanical leg may be expressed as follows: ${q}_{t , stcance foot}^{r} = atan \left({x}_{t , stance_foot_to_wheel_x}^{r}, { x}_{t , stance_foot_to_wheel_z}^{r}\right) .$

The target angle of the ankle joint on the swing mechanical leg may be expressed as follows: ${q}_{t , swing foot}^{r} = atan \left({x}_{t , swing_foot_to_wheel_x}^{r}, { x}_{t , swing_foot_to_wheel_z}^{r}\right) .$

In the embodiments of this application, the target angle of the ankle joint is determined based on the arc tangent, which can effectively reduce calculation amount of the target angle, and further effectively improve efficiency of determining the target angle.

In an embodiment, in addition to the target angles of the ankle joints at the control moment, the target angles of the hip joints at the control moment, and the target angles of the telescopic joints at the control moment, the target angle set of the robot at the control moment may further include target angles of wheel joints of the mechanical wheels at the control moment and target angles of the pitch joint and the side swing joint of the body at the control moment. Exemplarily, operation 602 may further include the following sub-operations.

Operation 602f: Set the target angles of the wheel joints of the mechanical wheels at the control moment to zero.

In a step taking process of the robot, the mechanical wheels do not need to rotate. Therefore, corresponding target angles of the wheel joints at the control moments may be directly set to zero. This helps the mechanical wheels to stably support the robot.

In an embodiment, the target angle of the wheel joint at the control moment may be expressed as follows: ${q}_{t , wheel}^{r} = 0$.

Operation 602g: Set the target angles of the pitch joint and the side swing joint of the body at the control moment to zero.

In a step taking process of the robot, the body may be kept vertical as much as possible. Therefore, the corresponding target angles of the pitch joint and the side swing joint at the control moments may be directly set to zero. This helps reduce impact caused by the body on movement of the robot and reduce complexity of robot control.

In an embodiment, the corresponding target angles of the pitch joint and the side swing joint at the control moment may be expressed as follows: ${q}_{t , waist pitch}^{r} = 0$ and ${q}_{t , waist yaw}^{r} = 0$.

In an example, the target angles include corresponding target angles of the hip joints, the telescopic joints, the ankle joints, the wheel joints, the pitch joint, and the side swing joint, to implement control of all joints of the robot. Exemplarily, operation 602 may further include the following sub-operations.

Operation 602h: Obtain the target angle set of the robot at the control moment based on the target angles of the hip joints at the control moment, the target angles of the telescopic joints at the control moment, the target angles of the ankle joints at the control moment, the target angles of the wheel joints at the control moment, the target angle of the pitch joint at the control moment, and the target angle of the side swing joint at the control moment.

In an embodiment, the target angle set may be expressed as follows: ${q}_{t}^{r} = \left[\begin{matrix}{q}_{t , stance hip}^{r} \\ {q}_{t , swing hip}^{r} \\ {q}_{t , stance leg}^{r} \\ {q}_{t , swing leg}^{r} \\ {q}_{t , stance foot}^{r} \\ {q}_{t , swing foot}^{r} \\ {q}_{t , wheel}^{r} \\ {q}_{t , waist pitch}^{r} \\ {q}_{t , waist yaw}^{r}\end{matrix}\right] .$

In the embodiments of this application, the target angles of the joints are calculated based on the target positions of the parts and the model structure of the robot, which can effectively reduce calculation amount of the target angle set, and further help improve efficiency of obtaining the target angle set.

In an example, to reduce joint oscillations during following of the target angles, angular velocities of all joints are constant to zero, and are denoted as ${\dot{q}}_{t}^{r} = 0$.

Operation 603: Control, based on the target angle set, the robot to move under the guidance of the first pre-defined task.

In an embodiment, target angles in the target angle set may be separately converted into corresponding target torques, and movement of all joints is controlled based on the target torques, to enable the robot to complete the first pre-defined task.

Exemplarily, operation 603 may further include the following content:
1. A first target torque set for the target angle set is calculated through a proportional derivative (PD) feedback controller based on the target angle set, an actual angle set corresponding to the joints, and an actual angular velocity set corresponding to the joints, where the first target torque set includes first target torques for controlling the joints.

Exemplarily, the first target torque set is calculated based on a difference between the target angle set and the actual angle set, as well as a difference between a target angular velocity set ( ${\dot{q}}_{t}^{r} = 0$) and the actual angle velocity set. Therefore, the first target torque set may be expressed as follows: ${τ}_{position}^{r} = {k}_{p , q} * \left({q}_{t}^{r}-{q}_{t}^{a}\right) + {k}_{d , \dot{q}} * \left(0-{\dot{q}}_{t}^{a}\right) ,$
where ${q}_{t}^{r}$ denotes the target angle set, ${q}_{t}^{a}$ denotes the actual angle set, ${\dot{q}}_{t}^{a}$ denotes the actual angular velocity set, and **k**_{p, q} and **k**_{k, q̇} respectively denote a proportional coefficient for position feedback and a derivative coefficient for velocity feedback.

**k**_{p, q} and **k**_{p, q̇} can ensure precision of following of the target angles, to enhance movement stability and accuracy of the robot. Following the target angle can effectively avoid a problem of poor force control transparency caused by following the target acceleration. That is, for a small torque (equivalent to an effect generated by the target acceleration), the joint does not move. When the torque is greater than a value, the joint moves intensely under the drive of a large force, whereby accuracy of controlling the joint of the robot is enhanced.

2. The robot is controlled, based on the first target torque set, to move under the guidance of the first pre-defined task.

The first target torque set includes first target torques of the joints of the robot at the control moments, and the first target torque is used for controlling the joint to rotate. At any control moment, for any joint, a joint motor corresponding to the joint only needs to be driven based on the first target torque of the joint at the control moment, to implement following of the first pre-defined task. That is, the robot may move under the guidance of the first pre-defined task, to follow target positions corresponding to the first pre-defined task. In this way, robot control is achieved.

In conclusion, in the technical solutions provided in the embodiments of this application, for a robot that has a first mechanical leg set and a second mechanical leg set and that has a mechanical leg whose foot part is provided with a mechanical wheel and a mechanical foot, target angles of joints of the robot are calculated based on a target position of the robot in operating space, and then the joints are directly controlled based on the target angles, to enable the robot to move on a support surface and achieve effective following of the target angles by the joints of the robot. Compared to the related art in which the robot is indirectly controlled based on a target acceleration and suffers from poor force control transparency, that is, for a small target acceleration, the joint does not move, whereas for a large target acceleration, the joint moves violently and fails to ensure that the part corresponding to the joint can accurately move to a target position, leading to low-precision following of the target position by the robot, in the embodiments of this application, direct following of the target position by the part corresponding to the joint can be achieved through effective following of the target angle by the joint of the robot, to effectively enhance accuracy of robot control.

In addition, during movement of the robot, a mechanical foot of a foot part assists a mechanical wheel in supporting the robot to stand on the support surface. In this way, the robot keeps standing through at least two contact points (such as a contact point between the mechanical foot and the support surface and a contact point between the mechanical wheel and the support surface) on the foot part. Compared to one contact point in the related art, the embodiments of this application can enable the robot to stand on the support surface more stably and reduce the risk of falling, to effectively improve movement stability of the robot.

In addition, because rotation centers of hip joints corresponding to the robot are located in a same vertical plane, by planning a first pre-defined task, the robot can stand through one mechanical leg set, and swing the other mechanical leg set, to quickly move in a dynamic balanced state (to be specific, a center of gravity of the robot may move beyond a stance area of the robot), whereby movement efficiency of the robot is improved. The stance area of the robot refers to an area defined by contact points between foot parts on the mechanical legs of the robot and the support surface. In the related art, a projection of the center of gravity needs to be controlled to be always in the stance area, resulting in a very small center-of-mass velocity of the robot and slow movement of the entire robot. However, in the embodiments of this application, the center of gravity of the robot may move beyond the stance area of the robot, to enable quick movement, and further improve movement efficiency of the robot.

In addition, a target angle set corresponding to execution of the first pre-defined task may be accurately obtained through a whole-body kinematics model of the robot based on the first pre-defined task, and then the first pre-defined task may be accurately implemented based on the target angle set. This helps enhance accuracy of robot control.

In addition, an intermediate kinematics equation is solved under a constraints of a joint physical constraint expression of the robot, to obtain an appropriate and accurate target angle set and then further enhance accuracy of robot control.

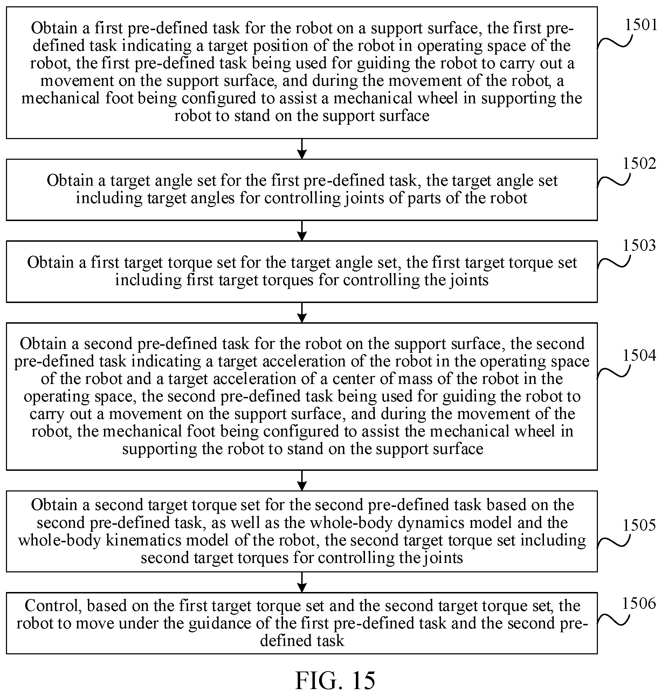

FIG. 15 is a flowchart of a control method for a robot according to another embodiment of this application. In the embodiments of this application, the control method for a robot is described by using an example in which operations are performed by a robot. The method may include the following operations (1501 to 1506).

Operation 1501: Obtain a first pre-defined task for the robot on a support surface, the first pre-defined task indicating a target position of the robot in operating space of the robot, the first pre-defined task being used for guiding the robot to carry out a movement on the support surface, and during the movement of the robot, a mechanical foot being configured to assist a mechanical wheel in supporting the robot to stand on the support surface.

Operation 1502: Obtain a target angle set for the first pre-defined task, the target angle set including target angles for controlling joints of parts of the robot.

Operation 1501 and operation 1502 are the same as operation 601 and operation 602 described in the foregoing embodiments. For content not described in the embodiments of this application, refer to the foregoing embodiments. Details are not described herein again.

Operation 1503: Obtain a first target torque set for the target angle set, the first target torque set including first target torques for controlling the joints.

A method for obtaining the first target torque set corresponding to operation 1503 is the same as the method for obtaining the first target torque set corresponding to operation 603 in the foregoing embodiments. For content not described in the embodiments of this application, refer to the foregoing embodiments. Details are not described herein again.

Operation 1504: Obtain a second pre-defined task for the robot on the support surface, the second pre-defined task indicating a target acceleration of the robot in the operating space of the robot and a target acceleration of a center of mass of the robot in the operating space, the second pre-defined task being used for guiding the robot to carry out a movement on the support surface, and during the movement of the robot, the mechanical foot being configured to assist the mechanical wheel in supporting the robot to stand on the support surface.

In the embodiments of this application, the pre-defined task refers to a task that the robot is expected to perform in the operating space. The second pre-defined task may refer to a task set for accelerations of the parts of the robot. For example, the second target task may include target accelerations of the parts of the robot in the operating space of the robot. In an embodiment, the second pre-defined task may be planned based on the robot and a real-world environment in which the robot is located. For example, a second pre-defined task corresponding to a scenario may be obtained by planning, based on a size of the support surface, sizes of the parts of the robot, and a structure of the robot, accelerations target to achieve for the parts and the center of mass of the robot. The acceleration target for each part or the center of mass refers to a target acceleration of the part or the center of mass, and the target acceleration of the part or the center of mass may be used for indicating an acceleration that the part or the center of mass is expected to achieve.

In an embodiment, the second pre-defined task corresponds to a complete movement process of the robot. If the complete movement process corresponds to a plurality of control moments, the second pre-defined task may indicate corresponding target accelerations of the parts and the center of mass of the robot at the plurality of control moments. The control moment refers to a moment when the robot is controlled through a control signal. The control moments are arranged at specified time intervals. The specified time interval may be set and adjusted according to an actual use requirement. In this way, the second pre-defined task may be obtained through unified planning for the overall movement process of the robot.

In an example, the second pre-defined task may be used for guiding the robot to alternately swing a first mechanical leg set and a second mechanical leg set, whereby robot moves in a first direction on the support surface. Exemplarily, corresponding second pre-defined tasks may be separately planned for scenarios such as gait walking, climbing a staircase, crossing an obstacle, and stepping in situ. For example, the second pre-defined task corresponding to gait walking may be used for guiding the robot to alternately swing the first mechanical leg set and the second mechanical leg set, to implement a task of walking in a gait. The second pre-defined task corresponding to climbing a staircase may be used for guiding the robot to alternately swing the first mechanical leg set and the second mechanical leg set, to implement a task of climbing a staircase. The second pre-defined task corresponding to crossing an obstacle may be used for guiding the robot to alternately swing the first mechanical leg set and the second mechanical leg set, to implement a task of crossing an obstacle.

The robot may control, based on the target accelerations in the second pre-defined task, the parts of the robot to move. In this way, movement of the robot on the support surface is achieved. For example, the robot may control a mechanical leg, a mechanical foot, a mechanical wheel, a body, and the like of the robot based on the target accelerations in the second pre-defined task. In this way, the robot alternately swings the first mechanical leg set and the second mechanical leg set to move on the support surface, and controls the mechanical foot to assist the mechanical wheel in supporting the robot to stand on the support surface.

The target acceleration refers to an acceleration that is obtained with reference to a real-world environment and that is used for actually controlling the robot. The following reference acceleration is a planned value, which is an acceleration for guiding the robot to move with a reference movement trajectory. The reference movement trajectory refers to a trajectory obtained by planning a movement trajectory of the robot, and the reference movement trajectory may include corresponding reference movement trajectories of the parts and the center of mass of the robot.

The robot may control, based on the target acceleration, the robot to move with the reference movement trajectory. Exemplarily, the second pre-defined task indicates target accelerations of mechanical legs, mechanical feet, mechanical wheels, and a body, as well as target accelerations of the center of mass of the robot at the control moments, to enable the robot to complete the complete movement process. For example, the target acceleration of the mechanical leg may be used for controlling the mechanical leg to swing and controlling the mechanical leg to telescope, the target acceleration of the mechanical foot may be used for controlling the mechanical foot to rotate, the target acceleration of the mechanical wheel may be used for controlling the mechanical wheel to rotate, and the target accelerations respectively corresponding to the body and the center of mass may be used for controlling the body to rotate (including pitching and side swinging).

The operating space of the robot refers to a Cartesian space corresponding to the robot. In task-oriented whole body control of the robot, the Cartesian space corresponding to the robot may be referred to as the operating space of the robot. In the embodiments of this application, positions in the operating space of the robot may be represented based on a world coordinate system of the robot.

Exemplarily, the world coordinate system of the robot may be constructed by using a contact point between a foot part (the mechanical wheel) of the robot in an initial state and the support surface as an origin, using a horizontal direction as an x-axis direction, using a vertical direction as a z-axis direction, and using a direction perpendicular to both the horizontal direction and the vertical direction as a y-axis direction. A position of the robot in the operating space may be represented by three-dimensional coordinates of the robot in the world coordinate system. In an embodiment, calculations in the embodiments of this application are all performed based on the world coordinate system of the robot.

The first direction is not limited in the embodiments of this application, and may be used for indicating a forward direction of the robot. Exemplarily, in scenarios such as gait walking, climbing a staircase, crossing an obstacle, and stepping in situ, the first direction may refer to a horizontal direction (namely, a direction perpendicular to a gravity direction), and is used for indicating a forward direction of the robot. The support surface refers to a surface on which the robot stands. In the embodiments of this application, the support surface may include only one plane, such as a flat ground or road. Alternatively, the support surface may include a plurality of planes at different heights, such as a staircase, a road with a shoulder, and a ground with a pit. This is not limited in the embodiments of this application.

In an example, the robot stops moving after the plurality of control moments, that is, completes the second pre-defined task. During movement of the robot, a mechanical leg configured to swing is a swing mechanical leg, and a mechanical leg configured to stand is a stance mechanical leg. A mechanical foot on the swing mechanical leg is a swing mechanical foot, and a mechanical foot on the stance mechanical leg is a stance mechanical foot. A mechanical wheel on the swing mechanical leg is a swing mechanical wheel, and a mechanical wheel on the stance mechanical leg is a stance mechanical wheel. The stance mechanical foot may assist the stance mechanical wheel in supporting the robot to stand on the support surface. For example, a second pre-defined task at a control moment includes target accelerations of the parts and the center of mass of the robot at the control moment.

Exemplarily, in a case that the robot stands on the support surface through the first mechanical leg set, and controls the second mechanical leg set of the robot to swing, mechanical legs in the first mechanical leg set may be referred to as stance mechanical legs, and mechanical legs in the second mechanical leg set may be referred to as swing mechanical legs. In a case that the robot stands on the support surface through the second mechanical leg set, and controls the first mechanical leg set of the robot to swing, the mechanical legs in the second mechanical leg set may be referred to as the stance mechanical legs, and the mechanical legs in the first mechanical leg set may be referred to as the swing mechanical legs. In a case that the robot stand on the support surface through both the first mechanical leg set and the second mechanical leg set, both the mechanical legs in the first mechanical leg set and the mechanical legs in the second mechanical leg set may be referred to as the stance mechanical legs. This is not limited in the embodiments of this application. When the mechanical leg set is configured to provide support, both the mechanical foot and the mechanical wheel on the mechanical leg set are in contact with the support surface, to enable the robot to stand stably.

In an embodiment, the target accelerations included in the second pre-defined task may be calculated through a feedback controller, such as a PD feedback controller or another feedback controller, based on the reference movement trajectories of the parts of the robot and an actual state of the robot.

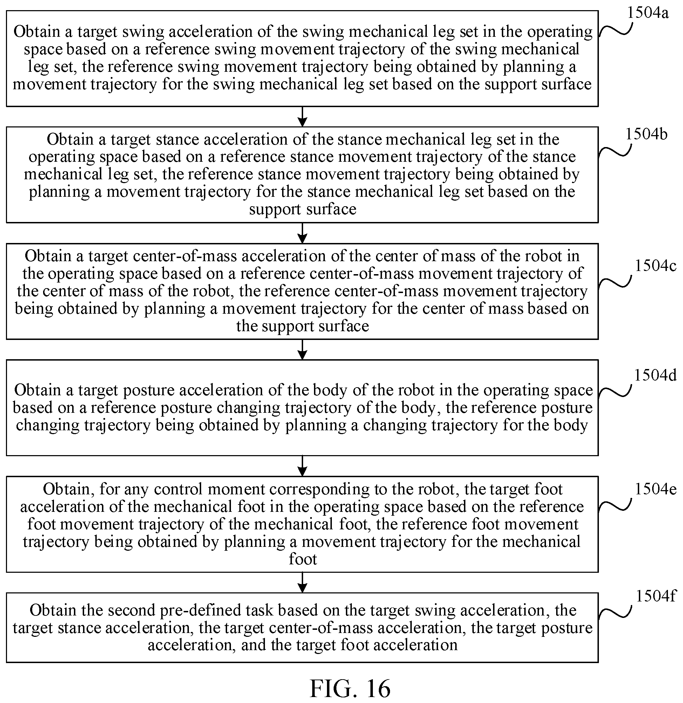

In an example, referring to FIG. 16, operation 1504 may further include at least one of the following sub-operations:

Operation 1504a: Obtain a target swing acceleration of the swing mechanical leg set in the operating space based on a reference swing movement trajectory of the swing mechanical leg set, the reference swing movement trajectory being obtained by planning a movement trajectory for the swing mechanical leg set based on the support surface.

The target swing acceleration refers to a target acceleration of the swing mechanical leg. The reference swing movement trajectory refers to a reference movement trajectory of the swing mechanical leg in the swing mechanical leg set, and may be represented by, for example, a reference movement trajectory of the swing mechanical wheel on the swing mechanical leg. The reference movement trajectory may be used for guiding movement of the robot. For example, the reference movement trajectory may include reference positions of the robot at the control moments. The reference position refers to a position where the robot is planned to reach. For example, the reference movement trajectory of the mechanical wheel includes reference positions of the mechanical wheel at the control moments, which are used for guiding the mechanical wheel to move with the reference movement trajectory of the mechanical wheel. The reference position in the embodiments of this application is the target position in the foregoing embodiments, and is a planned value.

In an embodiment, the reference movement trajectory in the embodiments of this application may be obtained by using a spline curve interpolation method. Exemplarily, an initial position and an end position of the stance mechanical leg (such as the mechanical wheel) in each step taking process may be planned based on size information of the support surface, and then the initial position and the end position are interpolated by using a spline curve interpolation method, to obtain a reference swing movement trajectory corresponding to the swing mechanical leg.

A quadruped foot-wheel hybrid robot climbing a staircase is used as an example. A reference position (namely, the target position) of a stance mechanical leg (such as a mechanical wheel) on each step of the staircase may be planned based on size information (such as a width, a height, and a length) of each step, and then interpolation may be performed between the reference positions, to obtain a reference swing movement trajectory.

The target swing acceleration may include the target accelerations of the swing mechanical leg at the control moments. For example, target accelerations of the swing mechanical wheel of the swing mechanical leg at the control moments may be determined as the target swing acceleration. The target swing acceleration may be used for controlling the swing mechanical leg (including the mechanical wheel) to move with the reference swing movement trajectory. In this way, the swing mechanical leg swings.

Exemplarily, in a case that the robot stops moving after the plurality of control moments, a process of obtaining the target swing acceleration may be as follows:
1. For each control moment corresponding to the robot, a reference position, a reference velocity, and a reference acceleration of the swing mechanical leg set at the control moment is obtained based on the reference swing movement trajectory.
   In an embodiment, a reference position of the swing mechanical leg set (such as the mechanical wheel) at a control moment may be directly determined based on the reference swing movement trajectory, and then a reference velocity and a reference acceleration of the swing mechanical leg set at the control moment may be obtained based on the reference position of the swing mechanical leg set at the control moment. For example, first-order derivation and second-order derivation are respectively performed on the reference position of the swing mechanical leg set at the control moment with respect to time, to obtain the reference velocity and the reference acceleration of the swing mechanical leg set at the control moment. The reference velocity refers to a velocity that is planned to be achieved, and the reference acceleration refers to an acceleration that is planned to be achieved; however, none of the reference velocity and the reference acceleration is directly used for controlling the robot.
   In an embodiment, because the mechanical legs in the mechanical leg set synchronously move, the reference movement trajectory of the mechanical leg set may be a movement trajectory of any mechanical leg in the mechanical leg set in the x-axis direction and the z-axis direction, and the y-axis direction may be ignored. In addition, the mechanical legs in the embodiments of this application are always vertical and cannot be bent.
2. The target swing acceleration at the control moment is calculated through a PD feedback controller based on the reference position, the reference velocity, and the reference acceleration of the swing mechanical leg set at the control moment, as well as an actual position and an actual velocity of the swing mechanical leg set at the control moment.

In an embodiment, an acceleration, an angular velocity, and a posture (namely, an actual Euler angle) of the body may be measured through the IMU on the body, and then an actual position, an actual velocity, an actual posture, and an actual angular velocity of the body in the world coordinate system may be obtained by using a state estimation algorithm with reference to actual angles and actual accelerations of all joints of the robot, as well as contact points between the robot and the support surface. If a relative position, a relative velocity, and a relative angular velocity between a hip joint center point of a hip joint and the IMU are also known, a state of the hip joint center point may be calculated based on a state of the body (namely, an actual position, an actual velocity, an actual attitude, and an actual angular velocity of the body in the world coordinate system).

In the embodiments of this application, a center point of the hip joint is a position of an origin of a floating base coordinate system of the robot. Therefore, a state of the floating base coordinate system may be obtained based on a state of the center point of the hip joint. Then, actual positions, actual velocities, actual postures, and actual angular velocities of all links corresponding to the robot in the world coordinate system may be calculated through the positive kinematics model of the whole-body model of the robot with reference to actual angles and actual angular velocities of all joints of the robot. The links include the swing mechanical legs. In this way, actual positions and actual velocities of the swing mechanical legs (such as the mechanical wheels) in the operating space can be obtained. The actual position refers to a real position of the swing mechanical leg, which is a real value. The actual velocity refers to a real velocity of the swing mechanical leg, which is a real value. A variant of the positive kinematics model may be configured to indicate a relationship between an acceleration of the robot in the operating space and a velocity and an acceleration of the robot in the joint space of the robot.

Exemplarily, the target swing acceleration may be determined through the PD feedback controller based on a difference between the actual position and the reference position of the swing mechanical leg, a difference between the actual velocity and the reference velocity of the swing mechanical leg, and a reference acceleration of the swing mechanical leg. Therefore, the target swing acceleration may be expressed as follows: $\begin{matrix}{{x}^{¨}}_{t , swing}^{d} = {{x}^{¨}}_{t , swing}^{r} + {k}_{p , swing} \left({x}_{t , swing}^{r}-{x}_{t , swing}^{a}\right) \\ + {k}_{d , swing} \left({\dot{x}}_{t , swing}^{r}-{\dot{x}}_{t , swing}^{a}\right)\end{matrix} ,$
where ${x}_{t , swing}^{r} , {\dot{x}}_{t , swing}^{r}$, and ${{x}^{¨}}_{t , swing}^{r}$ respectively denote a reference position, a reference velocity, and a reference acceleration of the swing mechanical leg (such as the mechanical wheel) in the operating space at a control moment t, ${x}_{t , swing}^{a}$ and ${\dot{x}}_{t , swing}^{a}$ respectively denote an actual position and an actual velocity of the swing mechanical leg (such as the mechanical wheel) in the operating space at the control moment t, and **k**_{p, swing} and **k**_{d, swing} respectively denote a proportional coefficient (for position feedback) and a derivative coefficient (for velocity feedback) for the swing mechanical leg.

In an example, the mechanical legs in the first mechanical leg set move synchronously, and the mechanical legs in the second mechanical leg set move synchronously. In other words, the swing mechanical legs in the swing mechanical leg set move synchronously. If the robot has no displacement in the y-axis direction, after the y-axis direction is ignored, reference swing movement trajectories of the swing mechanical legs in the swing mechanical leg set are the same. The target swing acceleration is calculated for any swing mechanical leg, to obtain the target swing acceleration of the swing mechanical leg set. This can reduce calculation amount of the target swing acceleration, and further improve efficiency of robot control.

Operation 1504b: Obtain a target stance acceleration of the stance mechanical leg set in the operating space based on a reference stance movement trajectory of the stance mechanical leg set, the reference stance movement trajectory being obtained by planning a movement trajectory for the stance mechanical leg set based on the support surface.

The target stance acceleration refers to a target acceleration of the stance mechanical leg. The reference stance movement trajectory refers to a reference movement trajectory of a stance mechanical leg in the stance mechanical leg set, and may be implemented as, for example, a reference movement trajectory of a mechanical foot on the stance mechanical leg. The target stance acceleration includes target accelerations of the stance mechanical leg at the control moments. The target stance acceleration may be used for controlling the stance mechanical leg to move with the reference stance movement trajectory, to keep the robot standing.

In the embodiments of this application, during movement of the robot, the reference position (namely, the target position) of the stance mechanical leg on the support surface is a fixed value, and during stance of the stance mechanical leg, no relative rolling occurs between the mechanical foot of the stance mechanical leg and the support surface. Therefore, a value of the target stance acceleration is constantly zero.

Exemplarily, the target stance acceleration may be expressed as follows: ${{x}^{¨}}_{t , stance}^{d} = {0}_{{N}_{c} \times 1} ,$
where N_{c} denotes a quantity of stance mechanical legs (mechanical feet of the stance mechanical legs in the stance mechanical leg set are all in contact with the support surface, and N_{c} may alternatively denote a quantity of contact points between stance mechanical legs and the support surface).

Operation 1504c: Obtain a target center-of-mass acceleration of the center of mass of the robot in the operating space based on a reference center-of-mass movement trajectory of the center of mass of the robot, the reference center-of-mass movement trajectory being obtained by planning a movement trajectory for the center of mass based on the support surface.

The target center-of-mass acceleration refers to a target acceleration of the center of mass. The reference center-of-mass movement trajectory refers to a reference movement trajectory of the center of mass of the robot. The reference center-of-mass movement trajectory includes reference positions (namely, the target positions) of the center of mass of the robot at the control moments, and may be used for guiding movement of the center of mass of the robot.

In an embodiment, during movement of the robot, not only the center of mass of the robot needs to continuously move in the first direction (namely, the forward direction), but also the robot needs to keep dynamic balance. Therefore, a balance controller needs to be constructed to calculate a target acceleration of the center of mass in the first direction.

Exemplarily, the reference center-of-mass movement trajectory may be divided into a reference movement sub-trajectory in the first direction and a reference movement sub-trajectory in the vertical direction, and then a target center-of-mass sub-acceleration in the first direction is determined based on the reference movement sub-trajectory in the first direction, and a target center-of-mass sub-acceleration in the vertical direction is determined based on the reference movement sub-trajectory in the vertical direction. The process may include the following content:
1. The target center-of-mass sub-acceleration of the center of mass in the first direction is obtained based on the reference movement sub-trajectory of the reference center-of-mass movement trajectory in the first direction.

The first direction may refer to a forward direction of the robot, such as the x-axis direction of the world coordinate system. In an embodiment, the robot may be converted into an inverted pendulum model, to construct the balance controller.

Exemplarily, because the robot always moves in the first direction (for example, no displacement occurs in the y-axis direction of the world coordinate system), the mechanical legs in the stance mechanical leg set move synchronously, the mechanical legs in the swing mechanical leg set move synchronously, and the hip joints of the robot are coaxial, the robot may be simplified as a plane model in a sagittal plane (such as the sagittal plane 206 in FIG. 2). FIG. 10 is a schematic diagram of an inverted pendulum model of a robot according to an embodiment of this application.

After the inverted pendulum model of the robot is constructed, the balance controller may be constructed based on the inverted pendulum model, and then the target center-of-mass sub-acceleration in the first direction is calculated through the balance controller. The process may be as follows:
1) An inverted pendulum dynamics equation for the robot is constructed by using a position of the center of mass, a velocity of the center of mass, a distance between the center of mass and a stance contact point in the first direction, and a derivative of the distance as state variables and using an acceleration of the center of mass relative to the stance contact point in the first direction as a control variable, where the stance contact point refers to a contact point between a corresponding foot part in the stance mechanical leg set and the support surface.

In the inverted pendulum model, the stance contact point is represented by a virtual stance contact point. Exemplarily, the inverted pendulum dynamics equation for the robot may be expressed as follows: $\frac{d}{dt} \left[\begin{matrix}Δx \\ Δ \dot{x} \\ {x}_{com} \\ {\dot{x}}_{com}\end{matrix}\right] = \left[\begin{matrix}0 & 1 & 0 & 0 \\ 0 & 0 & 0 & 0 \\ 0 & 0 & 0 & 1 \\ g / {z}_{com} & 0 & 0 & 0\end{matrix}\right] \left[\begin{matrix}Δx \\ Δ \dot{x} \\ {x}_{com} \\ {\dot{x}}_{com}\end{matrix}\right] + \left[\begin{matrix}0 \\ 1 \\ 0 \\ 0\end{matrix}\right] Δ {x}^{¨} ,$
where Δx and Δ_{Ẋ} respectively denotes the distance between the center of mass and the stance contact point (namely, the virtual stance contact point) in the first direction and the derivative of the distance, x_{com} and ẋ_{com} respectively denote the position and the velocity of the center of mass in the first direction, Δ_{Ẍ} denotes the acceleration of the center of mass relative to the virtual stance contact point in the first direction, z_{com} denotes a position of the center of mass in the vertical direction, and g denotes a gravitational acceleration.

2) A feedback gain matrix of the inverted pendulum dynamics equation is calculated through an LQR.

The LQR is constructed by using a quadratic programming method, and is essentially: finding a multi-dimensional vector under a linear constraint, and minimizing (or maximizing) a quadratic objective function for the multi-dimensional vector.

Exemplarily, an objective function for the inverted pendulum dynamics equation is constructed through the LQR, and then with an objective of minimizing the objective function, the feedback gain matrix of the inverted pendulum dynamics equation is obtained through iteration.

3) For any control moment in the control moments, a reference position and a reference velocity of the center of mass in the first direction at the control moment, and a reference distance and a reference velocity between the center of mass and the stance contact point are obtained based on the reference movement sub-trajectory in the first direction.

In an embodiment, the reference movement sub-trajectory of the center of mass in the first direction may be obtained based on the reference position of the stance mechanical leg by using a planning method such as a heuristic method (that is, a trajectory is provided based on experience and a real-world environment) or an inverted pendulum model (a trajectory is planned through the inverted pendulum model). This is not limited in the embodiments of this application.

Exemplarily, the reference position of the center of mass in the first direction at the control moment may be directly obtained based on the reference movement sub-trajectory in the first direction, and then first-order derivation is performed on the reference position of the center of mass in the first direction at the control moment to obtain the reference velocity of the center of mass in the first direction at the control moment.

A reference position and a reference velocity of the stance contact point in the first direction at the control moment may be obtained based on the reference stance movement trajectory, then geometric average is performed on the reference position of the stance contact point in the first direction at the control moment, to obtain a reference position of the virtual stance contact point, and geometric average is performed on the reference velocity of the stance contact point in the first direction at the control moment, to obtain a reference velocity of the virtual stance contact point. Then, a reference distance between the center of mass and the virtual stance contact point is obtained by subtracting the reference position of the virtual stance contact point in the first direction at the control moment from the reference position of the center of mass in the first direction at the control moment, and a reference velocity between the center of mass and the virtual stance contact point is obtained by subtracting the reference velocity of the virtual stance contact point in the first direction at the control moment from the reference velocity of the center of mass in the first direction at the control moment.

4) A third target sub-acceleration in the first direction at the control moment is obtained based on the feedback gain matrix, the reference position and the reference velocity of the center of mass in the first direction at the control moment, and the reference distance and the reference velocity between the center of mass and the stance contact point.

In an embodiment, the reference position and the reference velocity of the center of mass in the first direction at the control moment, and the reference distance and the reference velocity between the center of mass and the stance contact point are used as reference values of control variables, and then control variables of the inverted pendulum dynamics equation are obtained through the LQR based on the reference values of the control variables. The process may be expressed as follows:
$Δ {x}^{¨} = K \left(\left[\begin{matrix}{Δx}^{r} \\ Δ {\dot{x}}^{r} \\ {x}_{com}^{r} \\ {\dot{x}}_{com}^{r}\end{matrix}\right]-\left[\begin{matrix}{Δx}^{a} \\ Δ {\dot{x}}^{a} \\ {x}_{com}^{a} \\ {\dot{x}}_{com}^{a}\end{matrix}\right]\right) ,$ where $\left[\begin{matrix}{Δx}^{a} \\ Δ {\dot{x}}^{a} \\ {x}_{com}^{a} \\ {\dot{x}}_{com}^{a}\end{matrix}\right]$ denotes an actual value of a state variable.

The control variable Δẍ of the inverted pendulum dynamics equation is the target center-of-mass sub-acceleration in the first direction, which is denoted as ${{x}^{¨}}_{t , com}^{d}$. The target center-of-mass sub-acceleration in the first direction obtained in this way can not only ensure following of the reference center-of-mass movement trajectory in the first direction, but also keep dynamic balance of the robot during movement. In this way, movement stability of the robot is improved.

In an embodiment, the target center-of-mass sub-acceleration in the first direction may alternatively be calculated through the PD feedback controller based on the reference position, the reference velocity, and the reference acceleration of the center of mass in the first direction at the control moment, as well as the actual position and the actual velocity of the center of mass in the first direction at the control moment. This is not limited in the embodiments of this application.

2. A target center-of-mass sub-acceleration of the mass in the vertical direction is obtained based on the reference movement sub-trajectory of the reference center-of-mass movement trajectory in the vertical direction.

In an embodiment, the vertical direction may refer to the z-axis direction of the world coordinate system.

In the embodiments of this application, a height between the center of mass of the robot and a foot part of the stance mechanical leg of the robot is set to a constant value. The constant value may refer to a distance between the center of mass of the robot and a foot center (such as a wheel center) corresponding to the stance mechanical leg in the z-axis direction. Therefore, the reference movement sub-trajectory of the center of mass in the vertical direction may be planned based on the reference stance movement trajectory and the constant value. For example, the reference movement sub-trajectory of the center of mass in the vertical direction is obtained through interpolation by using a spline interpolation method based on a sum of a reference position in the reference stance movement trajectory and the constant value.

In an embodiment, the reference movement sub-trajectory in the vertical direction may be equivalent to a reference movement trajectory of the body of the robot in the vertical direction. By following the reference movement sub-trajectory in the vertical direction, the body can move in the vertical direction, to adjust the position of the center of mass. Particularly, in a staircase climbing scenario, by following the reference movement sub-trajectory in the vertical direction, the robot can climb up a staircase in the vertical direction.

Exemplarily, in a case that the robot stops moving after the plurality of control moments, a process of obtaining a target center-of-mass sub-acceleration in the vertical direction may be as follows:
1) For each control moment corresponding to the robot, a reference position, a reference velocity, and a reference acceleration of the center of mass in the vertical direction at the control moment are obtained based on the reference movement sub-trajectory in the vertical direction.
   In an embodiment, a reference position of the center of mass in the vertical direction at a control moment may be directly determined based on the reference movement sub-trajectory in the vertical direction, and then first-order derivation and second-order derivation are respectively performed on the reference position of the center of mass in the vertical direction at the control moment with respect to time, to obtain a reference velocity and a reference acceleration of the center of mass in the vertical direction at the control moment.
2) The target center-of-mass sub-acceleration in the vertical direction at the control moment is calculated through the PD feedback controller based on the reference position, the reference velocity, and the reference acceleration of the center of mass in the vertical direction at the control moment, as well as an actual position and an actual velocity of the center of mass in the vertical direction at the control moment.

In an embodiment, an acceleration, an angular velocity, and a posture (namely, an actual Euler angle) of the body may be measured through the IMU on the body. Then an actual position, an actual velocity, an actual posture, and an actual angular velocity of the body in the world coordinate system may be obtained by using a state estimation algorithm with reference to actual angles and actual accelerations of all joints of the robot, as well as contact points between the robot and the support surface. Finally, an actual position and an actual velocity of the center of mass in the world coordinate system are determined based on the actual positions and the actual velocities of the body and the mechanical leg in the world coordinate system, to obtain the actual position and the actual velocity of the center of mass in the vertical direction.

Exemplarily, the target center-of-mass sub-acceleration in the vertical direction may be expressed as follows: $\begin{matrix}{{x}^{¨}}_{t , base}^{d} = {{x}^{¨}}_{t , base}^{r} + {k}_{p , base} \left({x}_{t , base}^{r}-{x}_{t , base}^{a}\right) \\ + {k}_{d , base} \left({\dot{x}}_{t , base}^{r}-{\dot{x}}_{t , base}^{a}\right) ,\end{matrix}$
where ${x}_{t , base}^{r} , {\dot{x}}_{t , base}^{r} , {{x}^{¨}}_{t , base}^{r}$ respectively denote a reference position, a reference velocity, and a reference acceleration of the center of mass in the vertical direction at a control moment t, ${x}_{t , base}^{a}$ and ${\dot{x}}_{t , base}^{a}$ respectively denote an actual position and an actual velocity of the center of mass in the vertical direction at the control moment t, and **k**_{p, base} and **k**_{d, base} respectively denote a proportional coefficient and a derivative coefficient for the center of mass.

3. The target center-of-mass acceleration is obtained based on the target center-of-mass sub-acceleration of the center of mass in the first direction and the target center-of-mass sub-acceleration of the center of mass in the vertical direction.

For any control moment in the control moments, the target center-of-mass acceleration may be obtained by combining the target center-of-mass sub-acceleration of the center of mass in the first direction and the target center-of-mass sub-acceleration of the center of mass in the vertical direction. The target center-of-mass acceleration may be used for controlling the center of mass of the robot to follow the reference center-of-mass movement trajectory, to enable the robot to entirely move in the first direction.

Operation 1504d: Obtain a target posture acceleration of the body of the robot in the operating space based on a reference posture changing trajectory of the body, the reference posture changing trajectory being obtained by planning a changing trajectory for the body.

The target posture acceleration refers to a target acceleration of the body. The reference posture changing trajectory refers to a reference changing trajectory of a posture of the body of the robot, may be used for describing a posture change of the body of the robot, and may include, for example, reference postures of the body of the robot at the control moments. The reference posture refers to a posture that is planned to be achieved. In an embodiment, the posture of the body may be represented by a Euler angle, such as a Euler angle formed by a roll, a pitch, and a yaw of the body. Therefore, the reference posture changing trajectory may be a reference Euler angle movement trajectory corresponding to the body of the robot. The reference Euler angle movement trajectory includes reference posture angles (namely, reference Euler angles) at the control moments. The reference posture angle refers to a posture angle that is planned be achieved.

The target posture acceleration includes target accelerations of the body of the robot at the control moments. In a case that the posture of the body is represented by a Euler angle, the target acceleration may refer to a target posture angular acceleration (namely, a target Euler angular acceleration).

In an example, the body of the robot keeps vertical during movement of the robot (which is referred to as a vertical task for short below). In an example, the body of the robot dynamically rotates during movement of the robot (which is referred to as an angular momentum task for short below). In an example, during movement of the robot, the robot gives consideration to the vertical task and the angular momentum task for the body in a weight allocation manner. For example, in a case that a weight parameter of the vertical task is greater than a weight parameter of the angular momentum task, the robot prioritizes the vertical task, but does not give up the angular momentum task. In a case that the weight parameter of the vertical task is less than or equal to the weight parameter of the angular momentum task, the robot prioritizes the angular momentum task, but does not give up the vertical task. The weight parameter of the vertical task and the weight parameter of the angular momentum task may be dynamically set and adjusted according to an actual use requirement. This is not limited in the embodiments of this application.

The following separately describes a target posture acceleration corresponding to the vertical task and a target angular momentum acceleration (also belonging to the target posture acceleration) corresponding to the angular momentum task. The target posture acceleration is used for guiding the body to keep vertical, and the target angular momentum acceleration is used for guiding the body to rotate.

In an example, in a case that the robot stops moving after the plurality of control moments, a process of obtaining the target posture acceleration may be as follows:
1. For any control moment corresponding to the robot, a reference posture angle, a reference posture angular velocity, and a reference posture angular acceleration of the body at the control moment are obtained based on the reference posture changing trajectory.
   In a case that the body of the robot keeps vertical during movement of the robot, a value of the reference posture angle, a value of the reference posture angular velocity, and a value of the reference posture angular acceleration that correspond to the body are all zero. Exemplarily, the value of the reference posture angle, the value of the reference posture angular velocity, and the value of the reference posture angular acceleration may be respectively expressed as: ${x}_{t , euler}^{r} = {0}_{3 \times 1} , {\dot{x}}_{t , euler}^{r} = {0}_{3 \times 1} , and {{x}^{¨}}_{t , euler}^{r} = {0}_{3 \times 1} .$
2. The target posture acceleration at the control moment is calculated through the PD feedback controller based on the reference posture angle, the reference posture angular velocity, and the reference posture angular acceleration of the body at the control moment, as well as an actual posture angle and an actual posture angular velocity of the body at the control moment

In an embodiment, an acceleration, an angular velocity, and a posture (namely, an actual Euler angle) of the body may be measured through the IMU on the body. Then, an actual position, an actual velocity, an actual posture, and an actual angular velocity (namely, an actual state) of the body in the world coordinate system may be obtained by using a state estimation algorithm with reference to actual angles and actual accelerations of all joints of the robot, as well as contact information between the robot and the support surface. Finally, the actual posture angle (namely, an actual Euler angle) and the actual posture angular velocity (namely, an actual Euler angular velocity) of the body may be obtained based on the actual state of the body in the world coordinate system.

Exemplarily, the target posture acceleration is determined through the PD feedback controller based on a difference between the actual posture angle and the reference posture angle of the body, a difference between the actual posture angular velocity and the reference posture angular velocity of the body, and the reference posture angular acceleration of the body. Therefore, the target posture acceleration may be expressed as follows: $\begin{matrix}{{x}^{¨}}_{t , euler}^{d} = {{x}^{¨}}_{t , euler}^{r} + {k}_{p , euler} \left({x}_{t , euler}^{r}-{x}_{t , euler}^{a}\right) \\ + {k}_{d , euler} \left({\dot{x}}_{t , euler}^{r}-{\dot{x}}_{t , euler}^{a}\right)\end{matrix} ,$
where ${x}_{t , euler}^{a}$ and ${\dot{x}}_{t , euler}^{a}$ respectively denote an actual posture angle and an actual posture angular velocity of the body in the operating space at a control moment t, and **k**_{p, euler} and **k**_{d,euler} respectively denote a proportional coefficient and a derivative coefficient for the posture of the body. The target posture acceleration is used for controlling the body of the robot to move with the reference posture changing trajectory, to keep the body vertical.

In an example, in a case that the second pre-defined task further indicates a target angular momentum acceleration of the center of mass of the robot in the operating space, a process of obtaining the target angular momentum acceleration may be as follows:
1. For any control moment corresponding to the robot, a reference angular momentum, a reference angular momentum velocity, and a reference angular momentum acceleration of the center of mass at the control moment are obtained based on a reference angular momentum changing trajectory of the center of mass, where the reference angular momentum changing trajectory is obtained by planning an angular momentum for the center of mass based on the support surface.

The reference angular momentum changing trajectory may include a reference angular momentum of the center of mass of the robot at the control moments. A reference angular momentum of the center of mass at a control moment may be directly determined based on the reference angular momentum changing trajectory, and then first-order derivation and second-order derivation (namely, a first-order derivative of the reference angular momentum with respect to time and a second-order derivative of the reference angular momentum with respect to time) are respectively performed on the reference angular momentum of the center of mass at the control moment with respect to time, to obtain a reference angular momentum velocity and a reference angular momentum acceleration of the center of mass at the control moment. In an embodiment, the reference angular momentum, the reference angular momentum velocity, and the reference angular momentum acceleration may be all set to zero, to simplify calculation, or only the reference angular momentum velocity may be set to zero. This is not limited in the embodiments of this application.

In the embodiments of this application, the angular momentum refers to a product of a moment of inertia and an angular acceleration. The angular momentum of the center of mass may be determined based on a moment of inertia and an angular acceleration of a connection line between the center of mass and a rotation center of a mechanical wheel on the stance mechanical leg. If an initial angular momentum of the center of mass is zero, the included angle may be directly determined as the angular momentum of the center of mass. The center of mass of the robot is used for representing a mass center of the robot, which may be calculated based on centers of mass of the parts of the robot at a current moment and joint angles, and is denoted as CoM. In an embodiment, a position of the center of mass of the robot may be obtained based on positions of the centers of mass of the parts of the robot. For example, the position of the center of mass of the robot may be obtained by averaging the positions of the centers of mass of the parts of the robot.

After the reference center-of-mass movement trajectory and the reference stance movement trajectory are determined, the moments of inertia and the angular accelerations of the connection line between the center of mass and the rotation center of the mechanical wheel on the stance mechanical leg at the control moments may be determined. Then, the angular momentum of the center of mass may be obtained, and further the reference angular momentum changing trajectory is obtained.

For example, FIG. 11 is a simplified diagram of a model of a quadruped foot-wheel hybrid robot according to an embodiment of this application. A center of mass 1101 of a robot 1100 may be calculated based on a body 1102 and mechanical legs 1103. A connection line between the center of mass 1101 and a rotation center of a mechanical wheel on the stance mechanical leg is first obtained, and a product of a moment of inertia and an angular acceleration of the connection line is determined as an angular momentum of the center of mass. With rotation of joints (namely, movement of parts) of the robot 1100, joint angles are different, a position of the center of mass 1101 changes continuously, and the angular momentum of the center of mass 1101 also changes continuously.

2. A target angular momentum acceleration at the control moment is calculated through the PD feedback controller based on the reference angular momentum, the reference angular momentum velocity, and the reference angular momentum acceleration of the center of mass at the control moment, as well as an actual angular momentum and an actual angular momentum velocity of the center of mass at the control moment.

In an embodiment, an acceleration, an angular velocity, and a posture (namely, an actual Euler angle) of the body may be measured through the IMU on the body. Then, actual positions and actual postures of the body and the mechanical leg in the world coordinate system may be obtained by using a state estimation algorithm with reference to actual angles and actual accelerations of all joints of the robot, as well as contact points between the robot and the support surface. Finally, the position of the center of mass is determined based on the actual positions and the actual postures of the body and the mechanical leg in the world coordinate system, to obtain the actual angular momentum and the actual angular momentum velocity of the center of mass.

Exemplarily, the target angular momentum acceleration is determined through the PD feedback controller based on a difference between the actual angular momentum and the reference angular momentum of the center of mass, a difference between the actual angular momentum velocity and the reference angular momentum velocity of the center of mass, and the reference angular momentum acceleration of the center of mass. Therefore, the target angular momentum acceleration may be expressed as follows: $\begin{matrix}{{x}^{¨}}_{t , momentum}^{d} = {{x}^{¨}}_{t , momentum}^{r} + {k}_{p , momentum} \left({x}_{t , momentum}^{r}-{x}_{t , momentum}^{a}\right) \\ + {k}_{d , momentum} \left({\dot{x}}_{t , momentum}^{r}-{\dot{x}}_{t , momentum}^{a}\right)\end{matrix} ,$
where ${x}_{t , momentum}^{r} , {\dot{x}}_{t , momentum}^{r}$, and ${{x}^{¨}}_{t , momentum}^{r}$ respectively denote reference angular momentum, a reference angular momentum velocity, and a reference angular momentum acceleration of the center of mass in the operating space at a control moment t, ${x}_{t . momentum}^{a}$ and ${\dot{x}}_{t , momentum}^{a}$ respectively denote an actual angular momentum and an actual angular momentum velocity (namely, a first-order derivative of the actual angular momentum) of the center of mass in the operating space at the control moment t, and **k**_{p, momentum} and **k**_{d, momentum} respectively denote a proportional coefficient and a derivative coefficient for the angular momentum of the center of mass.

The target angular momentum acceleration is used for controlling the body of the robot to move with the reference angular momentum changing trajectory, to implement the angular momentum task for the body. In this way, by adding the angular momentum task, during movement (such as gait walking and climbing a staircase) of the robot, the body may be not locked at a fixed angle, but move based on a principle that angular momenta of different joints and links cancel each other out. The reference movement trajectory better conforms to a dynamics relationship of the robot system, to further improve a bionic degree of a gait of the robot.

In an example, the second pre-defined task further indicates target foot acceleration of the mechanical feet in the operating space. The target foot acceleration is used for controlling the mechanical foot to move with a reference foot movement trajectory, to assist the mechanical wheel in supporting the robot to stand more stably, which improves movement stability of the robot. The target foot acceleration refers to a target acceleration of the mechanical foot.

Exemplarily, the robot stops moving after the plurality of control moments. The embodiments of this application may further include the following operations:
Operation 1504e: Obtain, for any control moment corresponding to the robot, the target foot acceleration of the mechanical foot in the operating space based on the reference foot movement trajectory of the mechanical foot, the reference foot movement trajectory being obtained by planning a movement trajectory for the mechanical foot.

The reference foot movement trajectory is obtained by planning a movement trajectory for the mechanical foot based on the support surface. The reference foot movement trajectory refers to a reference movement trajectory of the mechanical foot, such as a reference movement trajectory of the mechanical foot on the stance mechanical leg or the swing mechanical leg. The target foot acceleration includes target accelerations of the mechanical feet at the control moments.

The reference foot movement trajectory may include target positions (namely, reference positions) of the mechanical foot (such as the stance mechanical foot or the swing mechanical foot) at the control moments. A method for obtaining the target position is the same as the obtaining method in the foregoing embodiments, and details are not described herein again.

Exemplarily, for any control moment corresponding to the robot, a process of obtaining the target foot acceleration may be as follows:
1. A reference position, a reference velocity, and a reference acceleration of the mechanical foot at the control moment based on the reference foot movement trajectory of the mechanical foot.

The reference foot movement trajectory may include the reference positions (namely, the target positions) of the mechanical foot of the robot at the control moments. A reference position of the mechanical foot at a control moment may be directly determined based on the reference foot movement trajectory, and then first-order derivation and second-order derivation are respectively performed on the reference position of the mechanical foot at the control moment with respect to time, to obtain a reference velocity and a reference acceleration of the mechanical foot at the control moment.

In an embodiment, the reference velocities of the mechanical foot at the control moments may be set to zero, to simplify calculation. This is not limited in the embodiments of this application.

2. The target foot acceleration at the control moment is calculated through the PD feedback controller based on a reference position, a reference velocity, and a reference acceleration of the mechanical foot at the control moment, as well as an actual position and an actual velocity of the mechanical foot at the control moment.

In an embodiment, an acceleration, an angular velocity, and a posture (namely, an actual Euler angle) of the body may be measured through the IMU on the body. Then, actual positions and actual postures of the body and the mechanical leg in the world coordinate system may be obtained by using a state estimation algorithm with reference to actual angles and actual accelerations of all joints of the robot, as well as contact points between the robot and the support surface. Finally, an actual position and an actual velocity of the mechanical foot at the control moment may be determined based on information such as a rotation angle of a foot joint and a joint angular velocity. An actual position and an actual velocity of a tiptoe of the mechanical foot at the control moment may be determined as the actual position and the actual velocity of the mechanical foot at the control moment.

Exemplarily, the target foot acceleration is determined through the PD feedback controller based on a difference between the actual position and the reference position of the mechanical foot, a difference between the actual velocity and the reference velocity of the mechanical foot, and the reference acceleration of the mechanical foot. Therefore, the target foot acceleration may be expressed as follows: $\begin{matrix}{{x}^{¨}}_{t , foot}^{d} = {{x}^{¨}}_{t , foot}^{r} + {k}_{p , foot} \left({x}_{t , foot}^{r}-{x}_{t , foot}^{a}\right) \\ + {k}_{d , foot} \left({\dot{x}}_{t , foot}^{r}-{\dot{x}}_{t , foot}^{a}\right)\end{matrix} ,$
where ${x}_{t , foot}^{r} , {\dot{x}}_{t , foot}^{r}$, and ${{x}^{¨}}_{t , foot}^{r}$ respectively denote a reference position, a reference velocity, and a reference acceleration of the mechanical foot in the operating space at a control moment t, ${x}_{t , foot}^{a}$ and ${\dot{x}}_{t , foot}^{a}$ respectively denote an actual position and an actual velocity of the mechanical foot in the operating space at the control moment t, and **k**_{p,foot} and **k**_{d,foot} respectively denote a proportional coefficient and a derivative coefficient for the mechanical foot.

In an example, the second pre-defined task indicates corresponding target accelerations of the swing mechanical legs, the stance mechanical legs, the center of mass, the body, and the mechanical feet. Therefore, operation 1504 may further include the following sub-operations.

Operation 1504f: Obtain the second pre-defined task based on the target swing acceleration, the target stance acceleration, the target center-of-mass acceleration, the target posture acceleration, and the target foot acceleration.

The second pre-defined task may be obtained by combining the target swing acceleration, the target stance acceleration, the target center-of-mass acceleration, the target posture acceleration, and the target foot acceleration.

In an embodiment, in a case that the angular momentum task for the body is not included, the second pre-defined task may be expressed as follows: ${{x}^{¨}}_{t}^{d} = \left[\begin{matrix}{{x}^{¨}}_{t . stance}^{d} \\ {{x}^{¨}}_{t . base}^{d} \\ {{x}^{¨}}_{t . euler}^{d} \\ {{x}^{¨}}_{t . swing}^{d} \\ {{x}^{¨}}_{t . com}^{d} \\ {{x}^{¨}}_{t . foot}^{d}\end{matrix}\right] .$

In an embodiment, in a case that the angular momentum task for the body is included, the second pre-defined task may be expressed as follows: ${{x}^{¨}}_{t}^{d} = \left[\begin{matrix}{{x}^{¨}}_{t , stance}^{d} \\ {{x}^{¨}}_{t , base}^{d} \\ {{x}^{¨}}_{t , euler}^{d} \\ {{x}^{¨}}_{t , swing}^{d} \\ {{x}^{¨}}_{t , com}^{d} \\ {{x}^{¨}}_{t , foot}^{d} \\ {{x}^{¨}}_{t , momentum}^{d}\end{matrix}\right] .$

Operation 1505: Obtain a second target torque set for the second pre-defined task based on the second pre-defined task, as well as the whole-body dynamics model and the whole-body kinematics model of the robot, the second target torque set including second target torques for controlling the joints.

In an embodiment, the target accelerations in the second pre-defined task may be separately converted into corresponding target torques, and the joints are controlled, based on the target torques, to move, to enable the robot to implement the second pre-defined task. For example, the second target torque set includes corresponding second target torques of the hip joints, the ankle joints, the wheel joints, the telescopic joints, the pitch joint, and the side swing joint of the robot at the control moments, and the second target torque may be used for controlling the joint to rotate.

In an example, the second pre-defined task may be used for task-oriented whole body control of the robot. To be specific, by considering dynamics information such as masses and inertias of all links of the robot, all degrees of freedom of the robot are mobilized to control the robot to complete one or more set tasks.

Exemplarily, based on rigid body dynamics of the robot, the whole-body dynamics model of the robot in a joint space system may be expressed as follows: $H {q}^{¨} + C = {S}^{T} τ + {J}_{c}^{T} f ,$
where $H ∈ {ℝ}^{{N}_{G} \times {N}_{G}}$ represents a joint space inertial matrix of the robot, $C ∈ {ℝ}^{{N}_{G}}$ represents a joint space offset force vector of the robot, namely, a sum of a Coriolis force, a centrifugal force, and a gravity that correspond to the robot, $S ∈ {ℝ}^{{N}_{J} \times {N}_{G}}$ represents a selection matrix of the robot, ${J}_{c} ∈ {ℝ}^{{N}_{c} \times {N}_{G}}$ represents a Jacobian matrix of the contact point between the robot and the support surface, $τ ∈ {ℝ}^{{N}_{J}}$ represents a torque vector of the joint of the robot, $f ∈ {ℝ}^{{N}_{C}}$ represents a contact force vector of the robot, $q , \dot{q} , {q}^{¨} ∈ {ℝ}^{{N}_{G}}$ represent a generalized position vector, a generalized velocity vector, and a generalized acceleration vector at each degree of freedom of the robot, N_{G} represents a total degree of freedom of the robot, namely, a sum of a floating base degree of freedom N_{F} and a joint degree of freedom N_{J}, and N_{C} represents a quantity of contact forces corresponding to the robot, namely, a product of a quantity of contact points n_{C} and a dimension of a single contact force N_{D} ∈ {0, 1, 2, 3}.

The quadruped foot-wheel hybrid robot in FIG. 2 is used as an example. Links of the quadruped foot-wheel hybrid robot may include four mechanical legs, four mechanical wheels, four mechanical feet, a waist (used as a separate link) of a body, as well as a torso, upper limbs, and a head (the three parts are used as a whole) of the body. Joints of the quadruped foot-wheel hybrid robot may include two hip joints, telescopic joints respectively corresponding to the four mechanical legs, wheel joints of the four mechanical wheels, ankle joints of the four mechanical feet, one pitch joint, and one side swing joint. In an embodiment, degrees of freedom of the joints of the robot refer to degrees of freedom respectively corresponding to the 16 joints.

The floating base degree of freedom refers to six degrees of freedom, namely, positions px-py-pz and postures yaw-roll-pitch of a floating base coordinate system of the robot in the world coordinate system. The floating base coordinate system is constructed by using a rotation center of the hip joint as an origin, and coordinate axis directions of the floating base coordinate system in an initial state are the same as those of the world coordinate system. The quantity of contact points may refer to a quantity of contact points between the stance mechanical legs and the support surface. For example, during swing of the swing mechanical leg set, the quantity of contact points is at least 4 (each stance mechanical leg corresponds to at least two contact points).

The whole-body kinematics model may refer to a variant of a positive kinematics model of the robot. The variant of the positive kinematics model is configured to indicate a relationship between an acceleration of the robot in the operating space and a velocity and an acceleration of the robot in the joint space of the robot.

In an embodiment, based on rigid body dynamics, the variant of the positive kinematics model may be expressed as follows: ${{x}^{¨}}_{t} = {\dot{J}}_{t} \dot{q} + {J}_{t} {q}^{¨} ,$
where ẍₜ represents an acceleration of the robot in the operating space at a control moment t, **q̇** and **q̈** respectively represent a velocity and an acceleration of the robot in the joint space, namely, generalized position vectors and generalized velocity vectors at the degrees of freedom of the robot, and **J**ₜ and **J̇**ₜ respectively represent a Jacobian matrix corresponding to a pre-defined task t (namely, task space) and a first-order derivative of the Jacobian matrix.

Exemplarily, the process of obtaining the second target torque set may include the following content:
1. A to-be-solved dynamics equation is constructed based on the whole-body dynamics equation and the whole-body kinematics model, and an acceleration of the robot in the joint space is used as an unknown variable of the to-be-solved dynamics equation.
   Exemplarily, the whole-body dynamics model and the whole-body kinematics model are combined and simplified into the to-be-solved dynamics equation, which may be expressed as follows:
   $\left[\begin{matrix}H & - {S}^{T} & - {J}_{c}^{T} \\ {J}_{t} & {0}_{{N}_{τ} \times {N}_{J}} & {0}_{{N}_{τ} \times {N}_{c}}\end{matrix}\right] \left[\begin{matrix}{q}^{¨} \\ τ \\ f\end{matrix}\right] = \left[\begin{matrix}- C \\ {{x}^{¨}}_{t} - {\dot{J}}_{t} \dot{q}\end{matrix}\right] ,$ where $\left[\begin{matrix}{q}^{¨} \\ τ \\ f\end{matrix}\right]$ denotes an unknown variable, and the rest are known variables.
   The foregoing describes the process of constructing the to-be-solved dynamics equation, which is a preset operation, and the to-be-solved dynamics equation only needs to be constructed once before the process of calculating the second target torque set. Subsequently, second target torque sets at the control moments may be obtained by using the to-be-solved dynamics equation.
2. The second pre-defined task is substituted into the to-be-solved dynamics equation, to calculate the second target torque set.

In an embodiment, during movement, the robot is further physically restricted by a body structure of the robot and a drive motor. To improve appropriateness and accuracy of the second target torque set, in this application, a constraint is further set in the process of obtaining the second target torque set. Exemplarily, the process of solving the to-be-solved dynamics equation may be as follows:
1) An acceleration of the robot in the operating space in the to-be-solved dynamics equation is replaced with the second pre-defined task, to obtain an intermediate dynamics equation.
   In an embodiment, the intermediate dynamics equation may be obtained by replacing the acceleration **ẍ**ₜ of the robot in the operating space in the to-be-solved dynamics equation is replaced with ${{x}^{¨}}_{t}^{d}$.
2) A joint physical constraint expression and a friction constraint expression for the robot are constructed, where the joint physical constraint expression is used for constraining the joints of the robot, and under a constraint of the friction constraint expression, a contact force between the robot and the support surface satisfying a friction cone constraint.

In an embodiment, based on actual physical properties of the drive motor of the robot, a joint torque **τ** in the unknown variables is constrained. That is, the joint physical constraint expression may be: **τ**_{lb} ≤ **τ** ≤ **τ**_{ub}, where **τ**_{lb} and **τ**_{ub} respectively represent a minimum value and a maximum value of a joint motor torque (such as torques of all drive motors of the robot).

In an embodiment, the contact force corresponding to the foot part of the mechanical leg of the robot needs to satisfy the friction cone constraint. To reduce nonlinearity, a friction cone may be approximated as a friction pyramid. Therefore, the friction constraint expression may be: $\left[\begin{matrix}- {μ}_{i} {n}_{z}^{T} \pm {n}_{x}^{T} \\ - {μ}_{i} {n}_{z}^{T} \pm {n}_{y}^{T} \\ - {n}_{z}^{T} \\ {n}_{z}^{T}\end{matrix}\right] {f}_{i} ⩽ \left[\begin{matrix}0 \\ 0 \\ - {f}_{z . lb} \\ {f}_{z . ub}\end{matrix}\right] ,$
where **n**ₓ, **n**_{y}, and **n**_{z} respectively represent unit orthogonal bases along a contact surface in the world coordinate system, µᵢ represents a friction coefficient corresponding to an i^{th} contact force, **f**ᵢ represents the i^{th} contact force, and **f**_{z,lb} and **f**_{z,ub} respectively represent a minimum value and a maximum value of a non-negative positive pressure perpendicular to the contact surface. Each foot part corresponds to one contact force, and the contact force may refer to a superposition force of a mechanical wheel and a mechanical foot. Alternatively, each foot part may correspond to two contact forces, one contact force corresponds to the mechanical wheel, and the other contact force corresponds to the mechanical foot. This is not limited in the embodiments of this application.

For example, referring to FIG. 11, for the stance mechanical leg, the support surface applies a counterforce **f**_{w} (namely, the contact force) to the mechanical wheel, and the friction cone constraint is satisfied on the mechanical wheel, whereby the wheel does not slip and remains in contact with ground. The support surface also applies a counterforce **f**_{f} to the mechanical foot, and the friction cone constraint is satisfied on the mechanical foot, whereby the mechanical foot does not slip and remains in contact with the ground. A combination of the two is equivalent to superposing the torque of the mechanical wheel and the torque of the mechanical foot together to keep the balance of the body. In this way, the robot can stand more stably.

3) For any control moment corresponding to the robot, the second target torque set is calculated by using the intermediate dynamics equation under the constraints of the joint physical constraint expression and the friction constraint expression for the robot.

In an embodiment, the intermediate dynamics equation may be rewritten into the form of **AX = B,**
where $A = \left[\begin{matrix}H & - {S}^{T} & - {J}_{c}^{T} \\ {J}_{t} & {0}_{{N}_{τ} \times {N}_{J}} & {0}_{{N}_{τ} \times {N}_{c}}\end{matrix}\right] , X = \left[\begin{matrix}{q}^{¨} \\ τ \\ f\end{matrix}\right] ,$ and $B = \left[\begin{matrix}- C \\ {{x}^{¨}}_{t}^{d} - {\dot{J}}_{t} \dot{q}\end{matrix}\right] .$

The process of solving **AX = B** is essentially finding a solution of a linear equation system. Therefore, the objective function for the intermediate dynamics equation may be constructed by using a quadratic programming method herein.

In an embodiment, the objective function for the intermediate dynamics equation may be expressed as follows: $J = min {\left(AX-B\right)}^{T} Q \left(AX-B\right) + {X}^{T} RX ,$
where Q and R represent a weight matrix, and ()^{T} represents transposition.

With an optimization objective of minimizing the objective function under the constraints of the joint physical constraint expression and the friction constraint expression for the robot, the second target torque set is obtained through iteration. For example, through a quadratic programming optimizer, with an optimization objective of minimizing the objective function under the constraints of the joint physical constraint expression and the friction constraint expression for the robot, the unknown variable X may be obtained through iteration, and a joint torque **τ** in the unknown variable X may be directly determined as the second target torque set, which is denoted as ${τ}_{wbc}^{r}$.

The quadruped foot-wheel hybrid robot in FIG. 2 is used as an example. The second target torque set may include corresponding second target torques of two hip joints (each hip joint corresponds to one mechanical leg set), telescopic joints respectively corresponding to four mechanical legs, wheel joints of four mechanical wheels, ankle joints of four mechanical feet, one pitch joint, and one side swing joint. The target torque is a joint torque that is expected to be achieved, and may be used for directly controlling a drive motor. The drive motor is configured to drive the joint, for example, control the joint to rotate.

In an embodiment, if a model structure of the robot is simple, the whole-body dynamics model and the whole-body kinematics model of the robot are also simple. Therefore, the intermediate dynamics equation may be directly solved through matrix pseudoinverse, that is, **X** = **A**⁻¹**B**, to obtain the second target torque set. This is not limited in the embodiments of this application.

Operation 1506: Control, based on the first target torque set and the second target torque set, the robot to move under the guidance of the first pre-defined task and the second pre-defined task.

In an embodiment, in the embodiments of this application, the first target torque set and the second target torque set are jointly applied to the robot, to control movement of the robot. For example, a mixed target torque set used for finally controlling the robot is determined in a complementary manner.

Exemplarily, operation 1506 may further include the following content:
1. Weighted summation is performed on the first target torque set and the second target torque set, to obtain a mixed target torque set.

In an embodiment, the mixed target torque set may be expressed as follows: ${τ}_{hybrid}^{r} = α ∗ {τ}_{wbc}^{r} + \left(1-α\right) ∗ {τ}_{position}^{r} ,$
where *α* denotes a weight coefficient of the second target torque set ${τ}_{wbc}^{r}$, and (1 - *α*) denotes a weight coefficient of the first target torque set ${τ}_{position}^{r}$. For example, *α* may be set to 80%, that is, the weight coefficient of ${τ}_{wbc}^{r}$ is 80%, and the weight coefficient of ${τ}_{position}^{r}$ is 20%.

2. The robot is controlled, based on the mixed target torque set, to move under the guidance of the first pre-defined task and the second pre-defined task.

The mixed target torque set includes mixed target torques of the joints of the robot at the control moments, and the mixed target torque is used for controlling the joint to rotate. At any control moment, for any joint, a joint motor corresponding to the joint needs to be driven only based on a mixed target torque of the joint at the control moment, to implement joint following of the first pre-defined task and the second pre-defined task. That is, the robot may move under the guidance of the first pre-defined task and the second pre-defined task, to follow the target positions corresponding to the first pre-defined task, and follow the target accelerations corresponding to the second pre-defined task. In this way, robot control is achieved.

In some embodiments, the robot may alternatively be controlled, based on the second target torque set alone, to move under the guidance of the second pre-defined task. This is not limited in the embodiments of this application.

In conclusion, in the technical solutions provided in the embodiments of this application, the second target torque set corresponding to the second pre-defined task may be accurately obtained based on the second pre-defined task by using the whole-body dynamics model and the whole-body kinematics model of the robot, and then the second pre-defined task may be accurately implemented based on the second target torque set. In this way, accuracy of robot control is enhanced.

In addition, the first pre-defined task (that is, the target positions) and the second pre-defined task (that is, the target accelerations) are jointly applied to the robot. Under the joint action of the target accelerations and the target positions, not only the joint of the robot is endowed with good dynamic performance, but also precision of following of the angle by the joint is considered. In this way, stability and accuracy of robot control are effectively enhanced.

In addition, the intermediate dynamics equation is solved under the constraints of the joint physical constraint expression and the friction constraint expression of the robot, to obtain an appropriate and accurate second pre-defined task. In this way, accuracy of robot control can be further enhanced.

In addition, the target center-of-mass sub-acceleration of the center of mass in the first direction (namely, the forward direction) is calculated through the inverted pendulum model, whereby not only the center of mass of the robot can continuously move in the first direction, but also the robot can keep dynamic balance, to enable the robot to move stably and rapidly. In this way, control stability and movement efficiency of the robot are further improved.

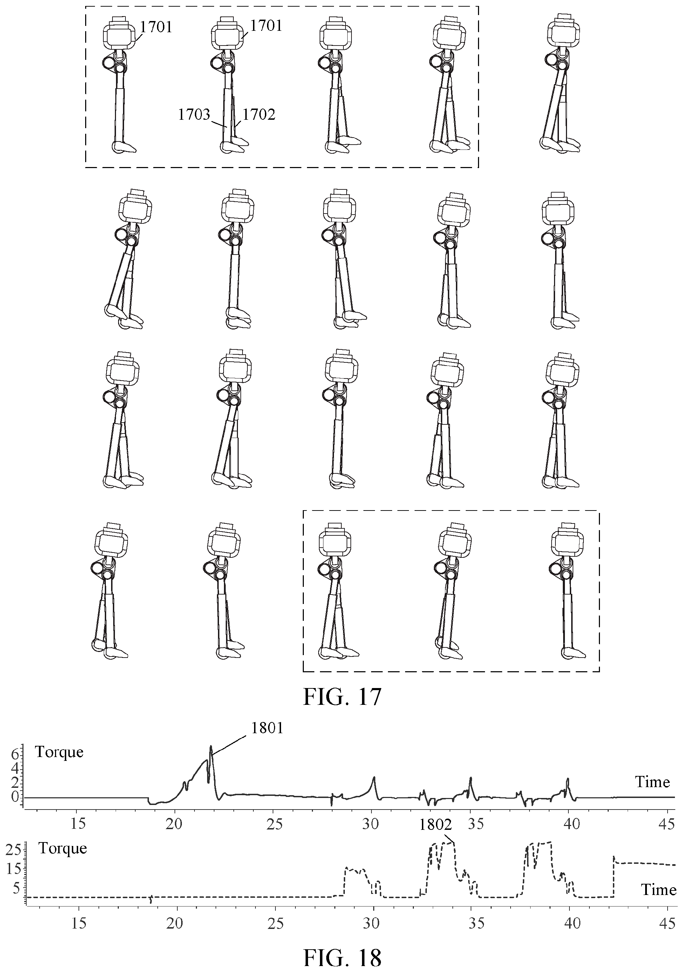

In some embodiments, referring to FIG. 17, the technical solutions provided in the embodiments of this application are described by using a movement process of a quadruped foot-wheel hybrid robot as an example. The movement process may include a pre-movement cycle, a plurality of swing cycles, and a final movement cycle. The pre-movement cycle, the swing cycles, and the final movement cycle may all be separately implemented as a step taking process.

In the embodiments of this application, the first target torque set, the second target torque set, or the mixed target torque set may be used for controlling the robot to separately move in the pre-movement cycle, the swing cycles, and the final movement cycle, to implement tasks such as gait walking, climbing a staircase, crossing an obstacle, and stepping in situ.

At any control moment, the movement process of the robot may include the following content:
Within the pre-movement cycle: A robot 1701 in an initial state stands through a second mechanical leg set 1703 and swings a first mechanical leg set 1702, to enter a first state.

For two swing mechanical legs in the first mechanical leg set 1702, hip joints are controlled, based on target torques (such as a first target torque, a second target torque, or the mixed target torque) of the hip joints corresponding to the two swing mechanical legs, to rotate, whereby the two swing mechanical legs synchronously swing in a forward direction. Meanwhile, telescopic joints are controlled, based on target torques of the telescopic joints corresponding to the two swing mechanical legs, to retract. The two swing mechanical legs are first synchronously shortened, to avoid collision between the swing mechanical legs and the ground. Then, the telescopic joints are controlled, based on target torques of the telescopic joints corresponding to the two swing mechanical legs, to extend. The two swing mechanical legs are synchronously lengthened, whereby the first mechanical leg set 1702 comes into contact with the ground. In this way, the robot takes the first step.

In this process, for two stance mechanical legs in the second mechanical leg set 1703, the two stance mechanical legs in the second mechanical leg set 1703 are controlled, based on target torques of hip joints corresponding to the second mechanical leg set 1703, to keep standing.

For a body, a pitch joint is controlled, based on a target torque corresponding to the body, to rotate. The body first rotates clockwise (that is, leans forward) and then rotate anticlockwise (that is, restores to be vertical) in coordination with swing of the first mechanical leg set 1702. Meanwhile, a side swing joint is controlled, based on the target torque corresponding to the body, not to rotate.

For mechanical feet, auxiliary surfaces of the mechanical feet in the first mechanical leg set 1702 are controlled, based on target torques of ankle joints corresponding to the first mechanical leg set 1702, to be always parallel to the support surface. Auxiliary surfaces of the mechanical feet in the second mechanical leg set 1703 are controlled, based on target torques of ankle joints corresponding to the second mechanical leg set 1703, to be parallel to and in contact with the support surface, whereby the robot 1701 can stand stably in the movement process.

1^{st} swing cycle: The robot 1701 in the first state stands through the first mechanical leg set 1702 and swings the second mechanical leg set 1703, to enter a second state. The robot 1701 in the second state controls the mechanical legs in the first mechanical leg set 1702 to be shortened, and controls the mechanical legs in the second mechanical leg set 1703 to be lengthened, to enter a third state, and performs function exchange on the first mechanical leg set 1702 and the second mechanical leg set 1703, to enter the first state.

For two swing mechanical legs in the second mechanical leg set 1703, hip joints are controlled, based on target torques of the hip joints corresponding to the two swing mechanical legs, to rotate, whereby the two swing mechanical legs synchronously swing in the forward direction. Meanwhile, telescopic joints are controlled, based on target torques of the telescopic joints corresponding to the two swing mechanical legs, to retract. The two swing mechanical legs are first synchronously shortened, to avoid collision with the ground. Then, the telescopic joints are controlled, based on the target torques of the telescopic joints corresponding to the two swing mechanical legs, to extend. The two swing mechanical legs are synchronously lengthened, whereby the second mechanical leg set 1703 comes into contact with the ground. In this way, the robot takes the second step.

In a process of entering the second state from the first state, for the two stance mechanical legs in the first mechanical leg set 1702, the two stance mechanical legs in the first mechanical leg set 1702 are controlled, based on target torques of the hip joints corresponding to the first mechanical leg set 1702, to keep standing.

For the body, the pitch joint is controlled, based on the target torque corresponding to the body, to rotate. The body first rotates clockwise and then rotates anticlockwise in coordination with swing of the second mechanical leg set 1703. Meanwhile, a side swing joint is controlled, based on the target torque corresponding to the body, not to rotate.

For the mechanical feet, the auxiliary surfaces of the mechanical feet in the second mechanical leg set 1703 are controlled, based on target torques of the ankle joints corresponding to the second mechanical leg set 1703, to be always parallel to the support surface. The auxiliary surfaces of the mechanical feet in the first mechanical leg set 1702 are controlled, based on target torques of the ankle joints corresponding to the first mechanical leg set 1702, to be parallel to and in contact with the support surface, whereby the robot 1701 can stand stably in the movement process.

In a process of entering the third state from the second state, the two stance mechanical legs in the first mechanical leg set 1702 are controlled, based on target torques of the telescopic joints corresponding to the first mechanical leg set 1702, to be shortened. The mechanical legs in the second mechanical leg set 1703 are controlled, based on target torques of the telescopic joints corresponding to the second mechanical leg set 1703, to be shortened, whereby the body is located right above the first mechanical leg set 1702. The other joints remain stationary.

For the 2^{nd} swing cycle and the 3^{rd} swing cycle, a method for controlling the robot is the same as that for the 1^{st} swing cycle, and details are not described herein again.

Final movement cycle: The robot 1701 in the first state stands through the second mechanical leg set 1703 and swings the first mechanical leg set 1702 to coincide with the second mechanical leg set 1703, to enter the initial state. In this process, the body of the robot 1701 keeps vertical.

For the two swing mechanical legs in the first mechanical leg set 1702, the hip joints are controlled, based on target torques of the hip joints corresponding to the two swing mechanical legs, to rotate, whereby the two swing mechanical legs synchronously swing in the forward direction. Meanwhile, the telescopic joints are controlled, based on target torques of the telescopic joints corresponding to the two swing mechanical legs, to retract. The two swing mechanical legs are first synchronously shortened, to avoid collision with the ground. Then, the telescopic joints are controlled, based on target torques of the telescopic joints corresponding to the two swing mechanical legs, to extend. The two swing mechanical legs are synchronously lengthened, whereby the first mechanical leg set 1702 swings to coincide with the second mechanical leg set 1703.

In this process, for two stance mechanical legs in the second mechanical leg set 1703, the two stance mechanical legs in the second mechanical leg set 1703 are controlled, based on target torques of hip joints corresponding to the second mechanical leg set 1703, to keep standing.

For the body, the pitch joint is controlled, based on a target torque corresponding to the body, not to rotate, whereby the body keeps vertical. Meanwhile, the side swing joint is controlled, based on a target torque corresponding to the body, not to rotate.

For the mechanical feet, the auxiliary surfaces of the mechanical feet in the first mechanical leg set 1702 are controlled, based on target torques of the ankle joints corresponding to the first mechanical leg set 1702, to be always parallel to the support surface until the auxiliary surfaces of the mechanical feet in the first mechanical leg set 1702 are parallel to and in contact with the support surface (that is, in a four-leg standing state). The auxiliary surfaces of the mechanical feet in the second mechanical leg set 1703 are controlled, based on target torques of the ankle joints corresponding to the second mechanical leg set 1703, to be parallel to and in contact with the support surface, whereby the robot 1701 can stand stably in the movement process.

In the movement process, wheel joints corresponding to mechanical wheels are controlled, based on target torques corresponding to the mechanical wheels, not to rotate, whereby the mechanical wheels do not rotate.

In some embodiments, FIG. 18 is a schematic diagram of simulated leveled step taking action data of a quadruped foot-wheel hybrid robot according to an embodiment of this application. A curve 1801 indicates a second target torque instruction (namely, a second target torque) of a wheel joint of a mechanical wheel over time, and a curve 1802 indicates a second target torque instruction of an ankle joint of a mechanical foot over time. In addition to a peak of the first target torque instruction, which is originated from a preparatory action for taking a step (namely, a pre-movement cycle), the quadruped foot-wheel hybrid robot takes a total of three steps forward (that is, three swing cycles) in this process. The situation for each step is similar, with roughly the following magnitudes: the wheel joint of the mechanical wheel can provide a torque of approximately 2.5 Nm, and the ankle joint can provide a torque of approximately 15-30 Nm. In view of this, a contribution of the mechanical wheel is small because a radius of the mechanical wheel is small. In addition, because a constraint that the mechanical wheel and the ground do not slide relative to each other needs to be satisfied, from a physical limit perspective, the contribution of the mechanical wheel is inherently limited. However, the experimental data proves that a wheel-legged hybrid structure has a torque superposition effect, which enables the robot to stand more stably.

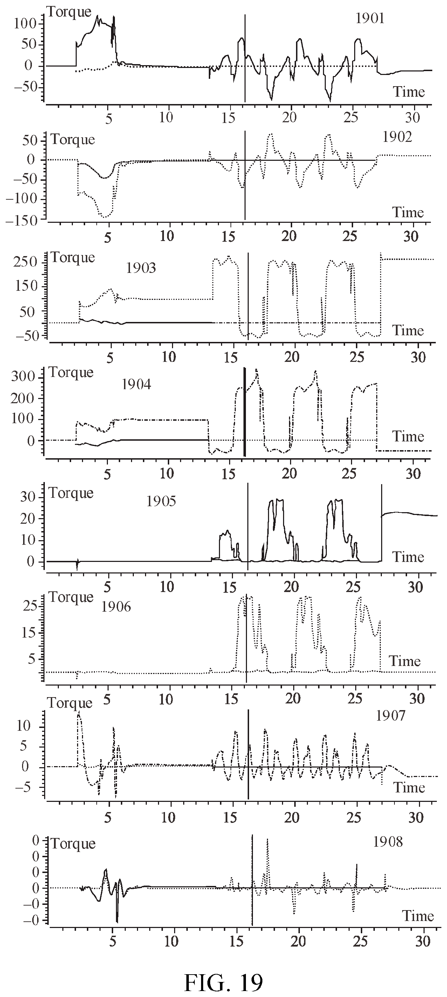

In some embodiments, FIG. 19 is a schematic diagram of simulated leveled step taking action data of a quadruped foot-wheel hybrid robot according to another embodiment of this application. A line chart 1901 indicates data of a mixed target torque instruction (namely, a mixed target torque) corresponding to a hip joint on a stance mechanical leg over time; a line chart 1902 indicates data of a mixed target torque instruction corresponding to a hip joint on a swing mechanical leg over time; a line chart 1903 indicates data of a mixed target torque instruction corresponding to a telescopic joint on the stance mechanical leg over time; a line chart 1904 indicates data of a mixed target torque instruction corresponding to a telescopic joint on the swing mechanical leg over time; a line chart 1905 indicates data of a mixed target torque instruction corresponding to an ankle joint on the stance mechanical leg over time; a line chart 1906 indicates data of a mixed target torque instruction corresponding to an ankle joint on the swing mechanical leg over time; a line chart 1907 indicates data of a mixed target torque instruction corresponding to a pitch joint over time, and a line chart 1908 indicates data of a mixed target torque instruction corresponding to a side swing joint over time. Because a mixed target torque instruction of a wheel joint of the mechanical wheel is small, data of a mixed target torque of the wheel joint over time is not shown in FIG. 19.

For the line charts, two curves in the line chart respectively represent a first target torque (corresponding to a target position) and a second target torque (corresponding to a target acceleration). At around 5 s, the robot is in a preparatory action phase (namely, a pre-movement cycle) of taking a step. In this case, the second target torque accounts for approximately 80% of the mixed target torque corresponding to the joint, and the first target torque accounts for approximately 20% of the mixed target torque corresponding to the joint. The experimental data proves that the mixed target torque has a torque complementation effect, which not only endows the joint of the robot with good dynamic performance, but also ensures accuracy of robot control.

In conclusion, in the technical solutions provided in the embodiments of this application, the first pre-defined task (that is, the target positions) and the second pre-defined task (that is, the target accelerations) are jointly applied to the robot. Under the joint action of the target acceleration and the target position, not only the joint of the robot is endowed with good dynamic performance, but also precision of following of the angle by the joint can be taken into consideration, to effectively enhance stability and accuracy of robot control.

The following describes apparatus embodiments of this application, which may be configured to implement the method embodiments of this application. For details not disclosed in the apparatus embodiments of this application, refer to the method embodiments of this application.

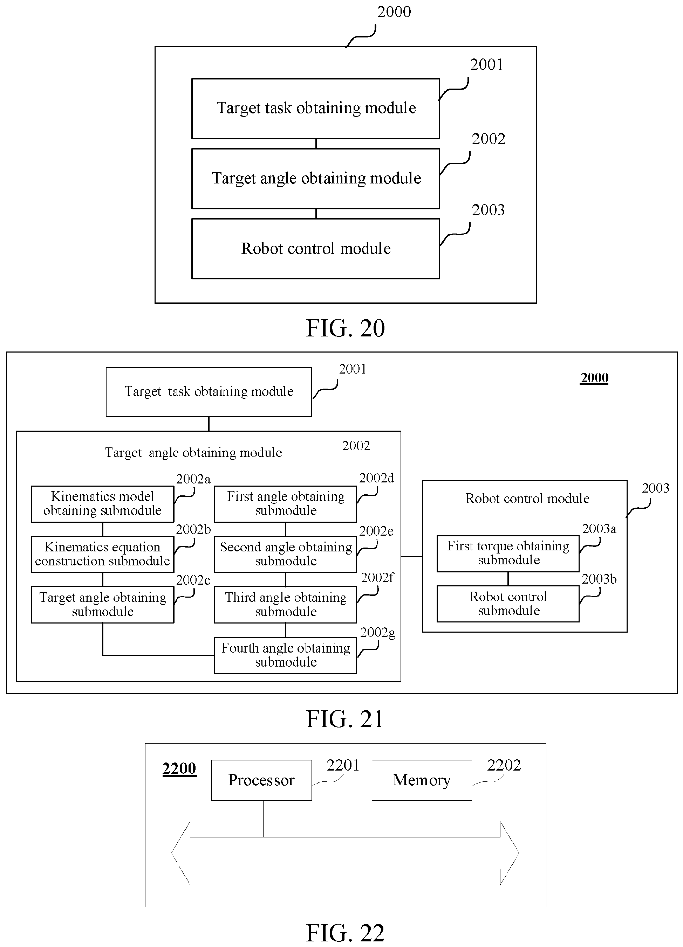

FIG. 20 is a block diagram of a control apparatus for a robot according to an embodiment of this application. The apparatus has a function of implementing the control method for a robot. The function may be implemented by hardware, or may be implemented by hardware executing corresponding software. The apparatus may be the computer device described above (such as the foot-wheel hybrid robot), or may be disposed in the computer device. As shown in FIG. 20, an apparatus 2000 includes: a pre-defined task obtaining module 2001, a target angle obtaining module 2002, and a robot control module 2003.

The pre-defined task obtaining module 2001 is configured to obtain a first pre-defined task for a robot on a support surface, the first pre-defined task indicating a target position of the robot in operating space of the robot, the first pre-defined task being used for guiding the robot to carry out a movement on the support surface, and during the movement of the robot, the mechanical foot being configured to assist the mechanical wheel in supporting the robot to stand on the support surface.

The target angle obtaining module 2002 is configured to obtain a target angle set for the first pre-defined task, the target angle set including target angles for controlling joints corresponding to parts of the robot.

The robot control module 2003 is configured to control, based on the target angle set, the robot to move under the guidance of the first pre-defined task.

In some embodiments, as shown in FIG. 21, the target angle obtaining module 2002 includes a kinematics model obtaining submodule 2002a, a kinematics equation construction submodule 2002b, and a target angle obtaining submodule 2002c.

The kinematics model obtaining submodule 2002a is configured to obtain a first kinematics model and a second kinematics model based on a whole-body kinematics model of the robot, the first kinematics model being configured to indicate a relationship between positions of the parts of the robot in the operating space and angles of the joints of the robot in joint space of the robot, and the second kinematics model being configured to indicate a relationship between velocities of the parts of the robot in the operating space and angular velocities of the joints of the robot in the joint space.

The kinematics equation construction submodule 2002b is configured to construct a to-be-solved kinematics equation based on the first kinematics model and the second kinematics model, where unknown variables of the to-be-solved kinematics equation are joint angles of the joints of the robot in the joint space.

The target angle obtaining submodule 2002c is configured to substitute, for any control moment corresponding to the robot, the first pre-defined task for the robot at the control moment into the to-be-solved kinematics equation, to calculate the target angle set of the robot at the control moment.

In some embodiments, the target angle obtaining submodule 2002c is configured to:
replace the positions of the parts of the robot in the operating space in the to-be-solved kinematics equation with the first pre-defined task for the robot at the control moment, to obtain an intermediate kinematics equation;
construct a joint physical constraint expression for the robot, the joint physical constraint expression being used for constraining the joints of the robot; and
calculate the target angle set of the robot at the control moment based on the intermediate kinematics equation under a constraint of the joint physical constraint expression.

In some embodiments, the target angle obtaining submodule 2002c is further configured to:
construct an objective function for the intermediate dynamics equation by using a quadratic programming method; and
calculate, under the constraint of the joint physical constraint expression with an optimization objective of minimizing the objective function, the target angle set of the robot at the control moment.

In some embodiments, during movement of the robot, a mechanical leg configured to swing is a swing mechanical leg, and a mechanical leg configured to stand is a stance mechanical leg. The first pre-defined task indicates a target position of a swing mechanical wheel on the swing mechanical leg, a target position of a stance mechanical wheel on the stance mechanical leg, and a target position of the body.

As shown in FIG. 21, the target angle obtaining module 2002 further includes: a first angle obtaining submodule 2002d and a second angle obtaining submodule 2002e.

The first angle obtaining submodule 2002d is configured to obtain, for any control moment corresponding to the robot, target angles of the hip joints at the control moment and target angles of telescopic joints of the mechanical legs at the control moment based on the target position of the body at the control moment, the target position of the stance mechanical wheel at the control moment, and the target position of the swing mechanical wheel at the control moment.

The second angle obtaining submodule 2002e is configured to obtain target angles of ankle joints of the mechanical feet at the control moment based on the target angle of the hip joints at the control moment, or the target position of the body at the control moment, the target position of the stance mechanical wheel at the control moment, and the target position of the swing mechanical wheel at the control moment, where the target angle set of the robot at the control moment includes the target angles of the ankle joints at the control moment, the target angles of the hip joints at the control moment, and the target angles of the telescopic joints at the control moment.

In some embodiments, the target angle set of the robot at the control moment further includes target angles of wheel joints of the mechanical wheels at the control moment and target angles of a pitch joint and a side swing joint of the body at the control moment. The target angle obtaining module 2002 further includes: a third angle obtaining submodule 2002f and a fourth angle obtaining submodule 2002g.

The third angle obtaining submodule 2002f is configured to set the target angles of the wheel joints of the mechanical wheels at the control moment to zero.

The fourth angle obtaining submodule 2002g is configured to set the target angles of the pitch joint and the side swing joint of the body at the control moment to zero.

In some embodiments, the first angle obtaining submodule 2002d is configured to:
determine a first relative target position between the body and the stance mechanical wheel based on the target position of the body at the control moment and the target position of the stance mechanical wheel at the control moment, and determine a second relative target position between the body and the swing mechanical wheel based on the target position of the body at the control moment and the target position of the swing mechanical wheel at the control moment; and
determine, based on the first relative target position, the target angle of the hip joint on the stance mechanical leg on which the stance mechanical wheel is located, and determine, based on the second relative target position, the target angle of the hip joint on the swing mechanical leg on which the swing mechanical wheel is located;
determine, based on the first relative target position, a target length of the stance mechanical leg on which the stance mechanical wheel is located, and determine, based on the second relative target position, a target length of the swing mechanical leg on which the swing mechanical wheel is located; and
determine the target angle of the telescopic joint of the stance mechanical leg based on the target length of the stance mechanical leg, and determine the target angle of the telescopic joint of the swing mechanical leg based on the target length of the swing mechanical leg.

In some embodiments, the first pre-defined task is used for guiding the robot to move in a first direction. The first relative target position includes a relative target position between the stance mechanical wheel and the body in the first direction, and a relative target position between the stance mechanical wheel and the body in a second direction. The second direction is perpendicular to the first direction. The second relative target position includes a relative target position between the swing mechanical wheel and the body in the first direction, and a relative target position between the swing mechanical wheel and the body in the second direction. The first angle obtaining submodule 2002d is further configured to:
determine an arc tangent of the relative target position between the stance mechanical wheel and the body in the first direction and the relative target position between the stance mechanical wheel and the body in the second direction as the target angle of the hip joint on the stance mechanical leg; and
determine an arc tangent of the relative target position between the swing mechanical wheel and the body in the first direction and the relative target position between the swing mechanical wheel and the body in the second direction as the target angle of the hip joint on the swing mechanical leg.

In some embodiments, the first angle obtaining submodule 2002d is further configured to:
determine a norm of the relative target position between the stance mechanical wheel and the body in the first direction and the relative target position between the stance mechanical wheel and the body in the second direction as the target length of the stance mechanical leg; and
determine a norm of the relative target position between the swing mechanical wheel and the body in the first direction and the relative target position between the swing mechanical wheel and the body in the second direction as the target length of the swing mechanical leg.

In some embodiments, the first pre-defined task further indicates a target position of a swing mechanical foot on the swing mechanical leg and a target position of a stance mechanical foot on the stance mechanical leg. The second angle obtaining submodule 2002e is further configured to:
determine, for each hip joint, a negative of the target angle of the hip joint at the control moment as the target angle of the ankle joint on the mechanical leg on which the hip joint is located at the control moment; or
determine a third relative target position between the stance mechanical wheel and the stance mechanical foot based on the target position of the stance mechanical wheel at the control moment and the target position of the stance mechanical foot at the control moment, and determine a fourth relative target position between the swing mechanical wheel and the swing mechanical foot based on the target position of the swing mechanical wheel at the control moment and the target position of the swing mechanical foot at the control moment; and determine, based on the third relative target position, the target angle of the ankle joint on the stance mechanical leg on which the stance mechanical foot is located, and determine, based on the fourth relative target position, the target angle of the ankle joint on the swing mechanical leg on which the swing mechanical foot is located.

In some embodiments, during movement of the robot, a mechanical leg configured to swing is a swing mechanical leg, and a mechanical leg configured to stand is a stance mechanical leg. The pre-defined task obtaining module 2001 is further configured to implement at least one of the following:
plan, for the stance mechanical wheel on the stance mechanical leg at any control moment corresponding to the robot, the target position of the stance mechanical wheel at the control moment based on the support surface;
plan, for the swing mechanical wheel on the swing mechanical leg, the target position of the swing mechanical wheel at the control moment based on the support surface and the target position of the stance mechanical wheel at the control moment;
plan, for a center of mass of the robot, a target position of the center of mass at the control moment based on the support surface and the target position of the stance mechanical wheel at the control moment;
determine the target position of the body at the control moment based on the target position of the center of mass at the control moment, an actual position of the center of mass at the control moment, and an actual position of the body at the control moment;
determine the target position of the stance mechanical foot at the control moment based on the target position of the stance mechanical wheel at the control moment and a size of the stance mechanical foot corresponding to the stance mechanical wheel; and
determine the target position of the swing mechanical foot at the control moment based on the target position of the swing mechanical wheel at the control moment and a size of the swing mechanical foot corresponding to the swing mechanical wheel.

In some embodiments, as shown in FIG. 21, the robot control module 2003 further includes: a first torque obtaining submodule 2003a and a robot control submodule 2003b.

The first torque obtaining submodule 2003a is configured to calculate a first target torque set for the target angle set through a PD feedback controller based on the target angle set, an actual angle set corresponding to the joints, and an actual angular velocity set corresponding to the joints, the first target torque set including first target torques for controlling the joints.

The robot control submodule 2003b is configured to control, based on the first target torque set, the robot to move under the guidance of the first pre-defined task.

In some embodiments, the robot control submodule 2003b is further configured to:
obtain a second pre-defined task for the robot on the support surface, the second pre-defined task indicating a target acceleration of the robot in the operating space of the robot and a target acceleration of the center of mass of the robot in the operating space, the second pre-defined task being used for guiding the robot to carry out a movement on the support surface, and during the movement of the robot, the mechanical foot being configured to assist the mechanical wheel in supporting the robot to stand on the support surface;
obtain a second target torque set for the second pre-defined task based on the second pre-defined task, as well as a whole-body dynamics model and the whole-body kinematics model of the robot, the second target torque set including second target torques for controlling the joints; and
control, based on the first target torque set and the second target torque set, the robot to move under the guidance of the first pre-defined task and the second pre-defined task.

In some embodiments, the robot control submodule 2003b is further configured to:
perform weighted summation on the first target torque set and the second target torque set to obtain a mixed target torque set; and
control, based on the mixed target torque set, the robot to move under the guidance of the first pre-defined task and the second pre-defined task.

In some embodiments, the second pre-defined task indicates target foot accelerations of the mechanical feet in the operating space. The robot control submodule 2003b is further configured to:
obtain, for any control moment corresponding to the robot, a reference position, a reference velocity, and a reference acceleration of the mechanical foot at the control moment based on a reference foot movement trajectory of the mechanical foot, the reference foot movement trajectory being obtained by planning a movement trajectory for the mechanical foot based on the support surface; and
calculate the target foot acceleration at the control moment through the PD feedback controller based on the reference position, the reference velocity, and the reference acceleration of the mechanical foot at the control moment, as well as an actual position and an actual velocity of the mechanical foot at the control moment.

In some embodiments, the second pre-defined task further indicates a target angular momentum acceleration of the center of mass of the robot in the operating space, and the target angular momentum acceleration is used for guiding the body to rotate. The robot control submodule 2003b is further configured to:
obtain, for any control moment corresponding to the robot, a reference angular momentum, a reference angular momentum velocity, and a reference angular momentum acceleration of the center of mass at the control moment based on a reference angular momentum changing trajectory of the center of mass, the reference angular momentum changing trajectory being obtained by planning an angular momentum for the center of mass based on the support surface; and
calculate the target angular momentum acceleration at the control moment through the PD feedback controller based on the reference angular momentum, the reference angular momentum velocity, and the reference angular momentum acceleration of the center of mass at the control moment, as well as an actual angular momentum and an actual angular momentum velocity of the center of mass at the control moment.

In some embodiments, the mechanical legs corresponding to the first mechanical leg set synchronously move, and the mechanical legs corresponding to the second mechanical leg set synchronously move. The mechanical feet corresponding to the first mechanical leg set synchronously move, and the mechanical feet corresponding to the second mechanical leg set synchronously move.

In conclusion, in the technical solutions provided in the embodiments of this application, for a robot that has a first mechanical leg set and a second mechanical leg set and that has a mechanical leg whose foot part is provided with a mechanical wheel and a mechanical foot, target angles of joints of the robot are calculated based on a target position of the robot in operating space, and then the joints are directly controlled based on the target angles, to enable the robot to move on a support surface and achieve effective following of the target angles by the joints of the robot. Compared to the related art in which the robot is indirectly controlled based on a target acceleration and suffers from poor force control transparency, that is, for a small target acceleration, the joint does not move, whereas for a large target acceleration, the joint moves violently and fails to ensure that the part corresponding to the joint can accurately move to a target position, leading to low-precision following of the target position by the robot, in the embodiments of this application, direct following of the target position by the part corresponding to the joint can be achieved through effective following of the target angle by the joint of the robot, to effectively enhance accuracy of robot control.

In addition, during movement of the robot, a mechanical foot of a foot part assists a mechanical wheel in supporting the robot to stand on the support surface. In this way, the robot keeps standing through at least two contact points (such as a contact point between the mechanical foot and the support surface and a contact point between the mechanical wheel and the support surface) on the foot part. Compared to one contact point in the related art, the embodiments of this application can enable the robot to stand on the support surface more stably and reduce the risk of falling, to effectively improve movement stability of the robot.

When the apparatus provided in the foregoing embodiments implements functions of the apparatus, the division of the foregoing functional modules is merely an example for description. In practical application, the functions may be assigned to and completed by different functional modules according to requirements, that is, an internal structure of a device is divided into different functional modules, to implement all or some of the functions described above. In addition, the apparatus provided in the foregoing embodiments and the method embodiments belong to the same concept. For the specific implementation process, refer to the method embodiments. Details are not described herein again.

FIG. 22 is a block diagram of a simplified structure of a computer device 2200 according to an embodiment of this application. The computer device 2200 may be any electronic device having data computing, processing, and storage functions. The computer device 2200 may be configured to implement the control method for a robot provided in the foregoing embodiments.

Generally, the computer device 2200 includes: a processor 2201 and a memory 2202.

The processor 2201 may include one or more processing cores, such as a 4-core processor or an 8-core processor. The processor 2201 may be implemented in at least one hardware form of a digital signal processor (DSP), a field-programmable gate array (FPGA), and a programmable logic array (PLA). Alternatively, the processor 2201 may include a main processor and a co-processor. The main processor is configured to process data in an awake state and is also referred to as a central processing unit (CPU). The co-processor is a low-power processor configured to process data in a standby state. In some embodiments, the processor 2201 may be integrated with a graphics processing unit (GPU). The GPU is configured to render and draw content that needs to be displayed on a display screen. In some embodiments, the processor 2201 may further include an AI processor. The AI processor is configured to process a computing operation related to machine learning.

The memory 2202 may include one or more computer-readable storage media. The computer-readable storage medium may be non-transitory. The memory 2202 may further include a high-speed random-access memory (RAM), as well as a non-volatile memory, such as one or more disk storage devices and flash storage devices. In some embodiments, the non-transitory computer-readable storage medium in the memory 2202 is configured to store a computer program. The computer program is configured to be executed by one or more processors to implement the control method for a robot.

A person skilled in the art may understand that the structure shown in FIG. 22 constitutes no limitation on the computer device 2200, and the computer device may include more or fewer components than those shown in the figure, or some components may be combined, or a different component deployment may be used.

In some embodiments, a chip is further provided. The chip has a computer program stored therein, and the computer program is loaded and executed by a processor to implement the control method for a robot.

In some embodiments, a computer-readable storage medium is further provided. The storage medium has a computer program stored therein, and the computer program is executed by a processor of a computer device to implement the control method for a robot.

In an embodiment, the computer-readable storage medium may include: a read-only memory (ROM), an RAM, a solid state drive (SSD), an optical disc, or the like. The RAM may include a resistive RAM (ReRAM) and a dynamic RAM (DRAM).

In some embodiments, a computer program product is further provided. The computer program product includes a computer program, and the computer program is stored in a computer-readable storage medium. A processor of a computer device reads the computer program from the computer-readable storage medium, and executes the computer program, to cause the computer device to perform the control method for a robot.

In the embodiments of this application, before collection of relevant data of users and during collection of the relevant data of the users, a prompt interface or a pop-up window may be displayed, or audio prompt information may be outputted. The prompt interface, the pop-up window, or the audio prompt information is used for prompting the user that the relevant data of the user is currently collected. In this way, in this application, only after a confirmation operation transmitted by the user for the prompt interface or the pop-up window is obtained, a relevant operation of obtaining the relevant data of the user is started to be performed. Otherwise (in other words, the confirmation operation transmitted by the user for the prompt interface or the pop-up window is not obtained), the relevant operation of obtaining the relevant data of the user is ended, that is, the relevant data of the user is not obtained. In other words, all user data collected in this application is strictly processed according to the requirements of relevant national laws and regulations. The informed consent or independent consent of a subject of personal information is obtained with consent and authorization of the user within the scope of authorization of the laws and regulations and the subject of the personal information. Subsequent data use and processing, and collection, use, and processing of the relevant user data are required to comply with relevant laws, regulations, and standards of relevant countries and regions. For example, the actual positions, the real-world environment, the robot, and the like involved in this application are obtained with full authorization.

"Plurality of" mentioned herein means two or more. "And/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In addition, the step numbers described herein merely exemplarily show a possible execution sequence of the steps. In some other embodiments, the steps may not be performed according to the number sequence. For example, two steps with different numbers may be performed simultaneously, or two steps with different numbers may be performed according to a sequence contrary to the sequence shown in the figure. This is not limited in the embodiments of this application.

The foregoing descriptions are merely exemplary embodiments of this application, but are not intended to limit this application. Any modification, equivalent replacement, or improvement made within the spirit and principle of this application falls within the scope of protection of this application.

## Claims

1. A control method for a robot, the method being executable by a computer device, the robot comprising a body, and a first mechanical leg set and a second mechanical leg set that are connected to the body through hip joints, at least one of the first mechanical leg set and the second mechanical leg set comprising at least two mechanical legs, a foot part, away from the hip joint, of at least one of the mechanical legs being provided with a mechanical wheel and a mechanical foot, a rotation axis of the hip joint corresponding to the first mechanical leg set and a rotation axis of the hip joint corresponding to the second mechanical leg set being located in a same vertical plane, and the method comprising:
obtaining a first pre-defined task for the robot on a support surface, the first pre-defined task indicating a target position of the robot in operating space of the robot, the first pre-defined task being used for guiding the robot to carry out a movement on the support surface, and during the movement of the robot, the mechanical foot being configured to assist the mechanical wheel in supporting the robot to stand on the support surface;
obtaining a target angle set for the first pre-defined task, the target angle set comprising target angles for controlling joints of parts of the robot; and
controlling, based on the target angle set, the robot to move under the guidance of the first pre-defined task.

2. The method according to claim 1, wherein before the obtaining a target angle set for the first pre-defined task, the method further comprises:
obtaining a first kinematics model and a second kinematics model based on a whole-body kinematics model of the robot, the first kinematics model indicating a relationship between positions of the parts of the robot in the operating space and angles of the joints of the robot in joint space of the robot, and the second kinematics model indicating a relationship between velocities of the parts of the robot in the operating space and angular velocities of the joints of the robot in the joint space; and
constructing a to-be-solved kinematics equation based on the first kinematics model and the second kinematics model, wherein unknown variables of the to-be-solved kinematics equation are joint angles of the joints of the robot in the joint space; and
the obtaining a target angle set for the first pre-defined task comprises:
substituting, for any control moment corresponding to the robot, the first pre-defined task for the robot at the control moment into the to-be-solved kinematics equation, to calculate the target angle set of the robot at the control moment.

3. The method according to claim 2, wherein the substituting the first pre-defined task for the robot at the control moment into the to-be-solved kinematics equation, to calculate the target angle set of the robot at the control moment comprises:
replacing the positions of the parts of the robot in the operating space in the to-be-solved kinematics equation with the first pre-defined task for the robot at the control moment, to obtain an intermediate kinematics equation;
constructing a joint physical constraint expression for the robot, the joint physical constraint expression being used for constraining the joints of the robot; and
calculating the target angle set of the robot at the control moment based on the intermediate kinematics equation under a constraint of the joint physical constraint expression.

4. The method according to claim 3, wherein the calculating the target angle set of the robot at the control moment based on the intermediate kinematics equation under a constraint of the joint physical constraint expression comprises:
constructing an objective function for the intermediate dynamics equation by using a quadratic programming method; and
calculating, under the constraint of the joint physical constraint expression, the target angle set of the robot at the control moment with an optimization objective of minimizing the objective function.

5. The method according to claim 1, wherein during the movement of the robot, a mechanical leg configured to swing is a swing mechanical leg, a mechanical leg configured to stand is a stance mechanical leg, and the first pre-defined task indicates a target position of a swing mechanical wheel on the swing mechanical leg, a target position of a stance mechanical wheel on the stance mechanical leg, and a target position of the body; and
the obtaining a target angle set for the first pre-defined task comprises:
obtaining, for any control moment corresponding to the robot, target angles of the hip joints at the control moment and target angles of telescopic joints of the mechanical legs at the control moment, based on the target position of the body at the control moment, the target position of the stance mechanical wheel at the control moment, and the target position of the swing mechanical wheel at the control moment; and
obtaining target angles of ankle joints of the mechanical feet at the control moment, based on the target angles of the hip joints at the control moment, or the target position of the body at the control moment, the target position of the stance mechanical wheel at the control moment, and the target position of the swing mechanical wheel at the control moment,
the target angle set of the robot at the control moment comprising the target angles of the ankle joints at the control moment, the target angles of the hip joints at the control moment, and the target angles of the telescopic joints at the control moment.

6. The method according to claim 5, wherein the target angle set of the robot at the control moment further comprises target angles of wheel joints of the mechanical wheels at the control moment and target angles of a pitch joint and a side swing joint of the body at the control moment; and the method further comprises:
setting the target angles of the wheel joints of the mechanical wheels at the control moment to zero; and
setting the target angles of the pitch joint and the side swing joint of the body at the control moment to zero.

7. The method according to claim 5 or 6, wherein the obtaining target angles of the hip joints at the control moment and target angles of telescopic joints of the mechanical legs at the control moment based on the target position of the body at the control moment, the target position of the stance mechanical wheel at the control moment, and the target position of the swing mechanical wheel at the control moment comprises:
determining a first relative target position between the body and the stance mechanical wheel based on the target position of the body at the control moment and the target position of the stance mechanical wheel at the control moment, and determining a second relative target position between the body and the swing mechanical wheel based on the target position of the body at the control moment and the target position of the swing mechanical wheel at the control moment; and
determining, based on the first relative target position, the target angle of the hip joint on the stance mechanical leg on which the stance mechanical wheel is located, and determining, based on the second relative target position, the target angle of the hip joint on the swing mechanical leg on which the swing mechanical wheel is located;
determining, based on the first relative target position, a target length of the stance mechanical leg on which the stance mechanical wheel is located, and determining, based on the second relative target position, a target length of the swing mechanical leg on which the swing mechanical wheel is located; and
determining the target angle of the telescopic joint of the stance mechanical leg based on the target length of the stance mechanical leg, and determining the target angle of the telescopic joint of the swing mechanical leg based on the target length of the swing mechanical leg.

8. The method according to claim 7, wherein the first pre-defined task is used for guiding the robot to move in a first direction, the first relative target position comprises a relative target position between the stance mechanical wheel and the body in the first direction, and a relative target position between the stance mechanical wheel and the body in a second direction, the second direction is perpendicular to the first direction, and the second relative target position comprises a relative target position between the swing mechanical wheel and the body in the first direction, and a relative target position between the swing mechanical wheel and the body in the second direction; and
the determining, based on the first relative target position, the target angle of the hip joint on the stance mechanical leg on which the stance mechanical wheel is located, and determining, based on the second relative target position, the target angle of the hip joint on the swing mechanical leg on which the swing mechanical wheel is located comprises:
determining an arc tangent of the relative target position between the stance mechanical wheel and the body in the first direction and the relative target position between the stance mechanical wheel and the body in the second direction as the target angle of the hip joint on the stance mechanical leg; and
determining an arc tangent of the relative target position between the swing mechanical wheel and the body in the first direction and the relative target position between the swing mechanical wheel and the body in the second direction as the target angle of the hip joint on the swing mechanical leg.

9. The method according to claim 8, wherein the determining, based on the first relative target position, a target length of the stance mechanical leg on which the stance mechanical wheel is located, and determining, based on the second relative target position, a target length of the swing mechanical leg on which the swing mechanical wheel is located comprises:
determining a norm of the relative target position between the stance mechanical wheel and the body in the first direction and the relative target positions between the stance mechanical wheel and the body in the second direction as the target length of the stance mechanical leg; and
determining a norm of the relative target position between the swing mechanical wheel and the body in the first direction and the relative target position between the swing mechanical wheel and the body in the second direction as the target length of the swing mechanical leg.

10. The method according to any one of claims 5 to 9, wherein the first pre-defined task further indicates a target position of a swing mechanical foot on the swing mechanical leg and a target position of a stance mechanical foot on the stance mechanical leg; and
the obtaining target angles of ankle joints of the mechanical feet at the control moment based on the target angles of the hip joints at the control moment, or the target position of the body at the control moment, the target position of the stance mechanical wheel at the control moment, and the target position of the swing mechanical wheel at the control moment comprises:
determining, for each hip joint, a negative of the target angle of the hip joint at the control moment as the target angle of the ankle joint on the mechanical leg on which the hip joint is located at the control moment;
or
determining a third relative target position between the stance mechanical wheel and the stance mechanical foot based on the target position of the stance mechanical wheel at the control moment and the target position of the stance mechanical foot at the control moment, and determining a fourth relative target position between the swing mechanical wheel and the swing mechanical foot based on the target position of the swing mechanical wheel at the control moment and the target position of the swing mechanical foot at the control moment; and determining, based on the third relative target position, the target angle of the ankle joint on the stance mechanical leg on which the stance mechanical foot is located, and determining, based on the fourth relative target position, the target angle of the ankle joint on the swing mechanical leg on which the swing mechanical foot is located.

11. The method according to any one of claims 1 to 10, wherein during the movement of the robot, the mechanical leg configured to swing is a swing mechanical leg, and the mechanical leg configured to stand is a stance mechanical leg; and
the obtaining a first pre-defined task for the robot on a support surface comprises at least one of the following:
planning, for a stance mechanical wheel on the stance mechanical leg at any control moment corresponding to the robot, a target position of the stance mechanical wheel at the control moment based on the support surface;
planning, for a swing mechanical wheel on the swing mechanical leg, a target position of the swing mechanical wheel at the control moment based on the support surface and the target position of the stance mechanical wheel at the control moment;
planning, for a center of mass of the robot, a target position of the center of mass at the control moment based on the support surface and the target position of the stance mechanical wheel at the control moment;
determining a target position of the body at the control moment based on the target position of the center of mass at the control moment, an actual position of the center of mass at the control moment, and an actual position of the body at the control moment;
determining a target position of a stance mechanical foot at the control moment based on the target position of the stance mechanical wheel at the control moment and a size of the stance mechanical foot corresponding to the stance mechanical wheel; and
determining a target position of a swing mechanical foot at the control moment based on the target position of the swing mechanical wheel at the control moment and a size of the swing mechanical foot corresponding to the swing mechanical wheel.

12. The method according to any one of claims 1 to 11, wherein the controlling, based on the target angle set, the robot to move under the guidance of the first pre-defined task comprises:
calculating a first target torque set for the target angle set through a proportional derivative (PD) feedback controller based on the target angle set, an actual angle set corresponding to the joints, and an actual angular velocity set corresponding to the joints, the first target torque set comprising first target torques for controlling the joints; and
controlling, based on the first target torque set, the robot to move under the guidance of the first pre-defined task.

13. The method according to claim 12, wherein the controlling, based on the first target torque set, the robot to move under the guidance of the first pre-defined task comprises:
obtaining a second pre-defined task for the robot on the support surface, the second pre-defined task indicating a target acceleration of the robot in the operating space of the robot and a target acceleration of a center of mass of the robot in the operating space, the second pre-defined task being used for guiding the robot to carry out a movement on the support surface, and during the movement of the robot, the mechanical foot being configured to assist the mechanical wheel in supporting the robot to stand on the support surface;
obtaining a second target torque set for the second pre-defined task, based on the second pre-defined task, a whole-body dynamics model and the whole-body kinematics model of the robot, the second target torque set comprising second target torques for controlling the joints; and
controlling, based on the first target torque set and the second target torque set, the robot to move under the guidance of the first pre-defined task and the second pre-defined task.

14. The method according to claim 13, wherein the controlling, based on the first target torque set and the second target torque set, the robot to move under the guidance of the first pre-defined task and the second pre-defined task comprises:
performing weighted summation on the first target torque set and the second target torque set to obtain a mixed target torque set; and
controlling, based on the mixed target torque set, the robot to move under the guidance of the first pre-defined task and the second pre-defined task.

15. The method according to claim 13 or 14, wherein the second pre-defined task indicates target foot accelerations of the mechanical feet in the operating space; and the method further comprises:
obtaining, for any control moment corresponding to the robot, a reference position, a reference velocity, and a reference acceleration of the mechanical foot at the control moment based on a reference foot movement trajectory of the mechanical foot, the reference foot movement trajectory being obtained by planning a movement trajectory for the mechanical foot based on the support surface; and
calculating the target foot acceleration at the control moment through the PD feedback controller, based on the reference position, the reference velocity, the reference acceleration of the mechanical foot at the control moment, and an actual position and an actual velocity of the mechanical foot at the control moment.

16. The method according to any one of claims 13 to 15, wherein the second pre-defined task further indicates a target angular momentum acceleration of the center of mass of the robot in the operating space, and the target angular momentum acceleration is used for guiding the body to rotate; and the method further comprises:
obtaining, for any control moment corresponding to the robot, a reference angular momentum, a reference angular momentum velocity, and a reference angular momentum acceleration of the center of mass at the control moment based on a reference angular momentum changing trajectory of the center of mass, the reference angular momentum changing trajectory being obtained by planning an angular momentum for the center of mass based on the support surface; and
calculating the target angular momentum acceleration at the control moment through the PD feedback controller based on the reference angular momentum, the reference angular momentum velocity, and the reference angular momentum acceleration of the center of mass at the control moment, and an actual angular momentum and an actual angular momentum velocity of the center of mass at the control moment.

17. The method according to any one of claims 1 to 16, wherein mechanical legs corresponding to the first mechanical leg set synchronously move, mechanical legs corresponding to the second mechanical leg set synchronously move, mechanical feet corresponding to the first mechanical leg set synchronously move, and mechanical feet corresponding to the second mechanical leg set synchronously move.

18. A control apparatus for a robot, the robot comprising a body, and a first mechanical leg set and a second mechanical leg set that are connected to the body through hip joints, at least one of the first mechanical leg set and the second mechanical leg set comprising at least two mechanical legs, a foot part, away from the hip joint, of at least one of the mechanical legs being provided with a mechanical wheel and a mechanical foot, and a rotation axis of the hip joint corresponding to the first mechanical leg set and a rotation axis of the hip joint corresponding to the second mechanical leg set being located in a same vertical plane; and the apparatus comprising:
a pre-defined task obtaining module, configured to obtain a first pre-defined task for the robot on a support surface, the first pre-defined task indicating a target position of the robot in operating space of the robot, the first pre-defined task being used for guiding the robot to carry out a movement on the support surface, and during the movement of the robot, the mechanical foot being configured to assist the mechanical wheel in supporting the robot to stand on the support surface;
a target angle obtaining module, configured to obtain a target angle set for the first pre-defined task, the target angle set comprising target angles configured for controlling joints of parts of the robot; and
a robot control module, configured to control, based on the target angle set, the robot to move under the guidance of the first pre-defined task.

19. A computer device, comprising a processor and a memory, the memory having a computer program stored therein, and the computer program being loaded and executed by the processor to implement the control method for a robot according to any one of claims 1 to 17.

20. A computer-readable storage medium, having a computer program stored therein, the computer program being loaded and executed by a processor to implement the control method for a robot according to any one of claims 1 to 17.

21. A computer program product, comprising a computer program, the computer program being stored in a computer-readable storage medium, and a processor reading the computer program from the computer-readable storage medium and executing the computer program to implement the control method for a robot according to any one of claims 1 to 17.
